(19) Europäisches Patentamt
European Patent Office
Office européen des brevets

(11) **EP 4 549 524 A1**

(12) **EUROPEAN PATENT APPLICATION**
published in accordance with Art. 153(4) EPC

(43) Date of publication:
07.05.2025 Bulletin 2025/19

(21) Application number: 23831339.9

(22) Date of filing: 26.06.2023

(51) International Patent Classification (IPC):
*C09D 11/30* (2014.01)  *B41J 2/01* (2006.01)
*B41M 5/00* (2006.01)  *C09D 11/40* (2014.01)

(52) Cooperative Patent Classification (CPC):
**B41J 2/01; B41M 5/00; C09D 11/30; C09D 11/38; C09D 11/40**

(86) International application number:
**PCT/JP2023/023460**

(87) International publication number:
**WO 2024/004897 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.06.2022 JP 2022106731

(71) Applicant: DNP Fine Chemicals Co., Ltd.
Yokohama-shi, Kanagawa 226-0022 (JP)

(72) Inventors:
• **MIYAZAWA Nami**
Yokohama-shi, Kanagawa 226-0022 (JP)
• **MAKIMOTO Yuji**
Yokohama-shi, Kanagawa 226-0022 (JP)
• **TAMURA Mitsuyoshi**
Yokohama-shi, Kanagawa 226-0022 (JP)

(74) Representative: **Hasegawa, Kan**
**Patentanwaltskanzlei Hasegawa**
**Untere Hauptstraße 56**
**85354 Freising (DE)**

(54) **AQUEOUS INK COMPOSITION, RECORDING METHOD, METHOD FOR PRODUCING RECORDED MATTER, RECORDED MATTER, AND INKJET RECORDING DEVICE**

(57)    The present invention provides an aqueous ink composition for inkjet ejection, the aqueous ink composition having excellent adhesion to various substrates (recording media).

The present invention provides an aqueous ink composition for inkjet ejection, the aqueous ink composition containing water and a resin, wherein the resin contains a polymer that contains a monomer A described below as a constituent unit.

Monomer A: a monomer which has a ring structure and an ethylenically unsaturated bond

EP 4 549 524 A1

**Description**

TECHNICAL FIELD

The present invention relates to an aqueous ink composition, a recording method, a method for producing recorded matter, recorded matter, and an inkjet recording device.

BACKGROUND ART

As an ink composition, an aqueous ink composition for inkjet ejection, in which various coloring materials or cationic compounds are dissolved in water or a mixture solution of water and a water-soluble organic solvent, are widely used. Such aqueous ink compositions including water as a main component have little influence on the environment, do not catch fire, and therefore are highly safe for workers.

Conventionally, binder resin has been used for such an aqueous ink composition for inkjet ejection including water as a main component. When the binder resin is contained, the abrasion resistance and the like of the obtained recorded matter can be made preferable.

Furthermore, a wide variety of base materials (recording media) are used in such aqueous ink compositions for inkjet ejection, and the aqueous ink composition needs to have excellent adhesion to the base material (recording media).

For example, Patent Document 1 describes a technology related to a block copolymer (copolymer) having a predetermined molecular chain and an aqueous inkjet ink (aqueous ink composition) including the block copolymer. Patent Document 1 mentions that this aqueous ink composition has excellent suitability for inkjet printing such as high-speed printability, re-solubility, and ejection stability, and also has good adhesion to base materials to be printed such as polyolefin plastic films, and excellent durability such as abrasion resistance.

Citation List

Patent Document

Patent Document 1: Japanese Patent No. 6886062

DISCLOSURE OF THE INVENTION

Problems to be Solved by the Invention

The present invention has an object to provide an aqueous ink composition for inkjet ejection being excellent in adhesion to various base materials (recording media).

Means for Solving the Problems

The present inventors have extensively studied in order to solve the above-mentioned problems. As a result, the present inventors have found that the above problems can be solved by an aqueous ink composition containing a resin containing a polymer including a certain monomer as a constituent unit, and have completed the present invention. Specifically, the present invention provides the followings.

(1) An aqueous ink composition for inkjet ejection, the aqueous ink composition including water and a resin, the resin containing a polymer including the following monomer A as a constituent unit:
monomer A: having a ring structure and having an ethylenically unsaturated bond.
(2) The aqueous ink composition described in (1), in which the resin contains an acrylic resin.
(3) The aqueous ink composition described in (1) or (2), in which the monomer A includes an alicyclic structure and/or a heterocyclic structure as a ring structure.
(4) The aqueous ink composition described in any one of (1) to (3), in which the resin contains a copolymer of monomers including the monomer A and the following monomer B, a monomer B: including an acidic group, and/or an amino group, and including an ethylenically unsaturated bond.
(5) The aqueous ink composition described in (4), in which the monomer B includes an amino group.
(6) The aqueous ink composition described in any one of (1) to (5), in which at least a part of the resin is contained as a polymer fine particle dispersion.
(7) The aqueous ink composition described in any one of (1) to (6), in which the polymer of monomers including the monomer A is an emulsion polymer.

(8) The aqueous ink composition described in any one of (1) to (7), in which a side chain moiety SP value, which is a SP value calculated for a chemical structure moiety defined by $R_2$ in the following formula (1) of the monomer A, is 13.0 or less:

$$CH_2 = CR_1 - R_2 \qquad Formula \ (1)$$

($R_1$ is hydrogen or a methyl group).

(9) The aqueous ink composition described in any one of (1) to (8), in which the monomer A is contained in a proportion of 50% or more with respect to a total amount of the polymer of monomers.

(10) An ink set including the aqueous ink composition described in any one of (1) to (9).

(10) A recording method of inkjet ejecting the aqueous ink composition described in any one of (1) to (9).

(11) A method for producing a recorded matter, the method including inkjet ejecting the aqueous ink composition described in any one of (1) to (9) to obtain the recorded matter.

(12) A recorded matter including the aqueous ink composition described in any one of (1) to (9), the aqueous ink composition being applied on a surface of the base material.

(13) An inkjet recording device provided with an ink ejecting mechanism including the aqueous ink composition described in any one of (1) to (7).

Effects of the Invention

The aqueous ink composition of the present invention is excellent in adhesion to various base materials (recording media) .

PREFERRED MODE FOR CARRYING OUT THE INVENTION

Hereinafter, specific embodiments of the present invention will be described in detail. However, the present invention is not limited to the following embodiments, and can be implemented with appropriate modifications within the scope of the purpose of the present invention.

<<1. Aqueous ink composition>>

The aqueous ink composition according to this embodiment contains water and a resin. This resin contains a polymer including the following monomer A as a constituent unit.

Monomer A: having a ring structure and an ethylenically unsaturated bond

Conventionally, it has not necessarily been easy to form a coating film with high adhesion on olefin resins such as a propylene resin. In general, for example, a surface treatment such as corona treatment, flame treatment, plasma treatment, blaze treatment, ultraviolet irradiation treatment, and chromic acid treatment and the like is performed on the surface of the olefin resin, and then an ink composition is inkjet ejected onto the surface of the surface-treated olefin resin to form a coating film. However, highly adhesive coating film cannot be formed easily even with olefin resins that have undergone such surface treatment, and it has been necessary to use a further method in combination so as to further improve adhesion in addition to surface treatment, such as using a two-component curing-type primer in advance. In particular, a coating film with sufficiently high adhesion was not able to be obtained with conventional ink compositions and primers for inkjet ejection.

However, surprisingly, the study of the present inventors has revealed that with an aqueous ink composition according to this embodiment containing a polymer including the monomer A having a ring structure as a constituent unit, a coating film having high adhesion can be formed on a base material (recording medium) such as an olefin resin not subjected to surface treatment, for which it has been difficult to form a coating film having high adhesion.

The ink composition containing the resin according to this embodiment can form a coating film having high adhesion on the olefin resin that has not been surface-treated, and, in particular, has high adhesion to the surface of olefin resin that has undergone surface treatment such as surface treatment by corona treatment, flame treatment, plasma treatment, blaze treatment, ultraviolet irradiation treatment, chromic acid treatment, and silane coupling treatment. The olefin resin may be unstretched or may be stretched, such as uniaxially stretched, biaxially stretched, or the like.

Note here that the aqueous ink composition according to this embodiment may be a coloring ink containing a coloring material. In this description, the term "coloring material" includes dyes and pigments, and is used as a concept that includes dyes or pigments included in coloring inks that form images of yellow, magenta, cyan, black, and intermediate or light colors thereof, white dyes or white pigments included in white ink, and bright pigments included in metallic ink.

This coloring ink may be a coloring ink that forms an image in yellow, magenta, cyan, black, or an intermediate color or light color thereof. Further, the coloring ink may be a white ink including a white coloring material, a metallic ink containing a bright pigment, or the like.

Furthermore, the aqueous ink composition according to this embodiment may be a receiving liquid that is applied to the base material prior to applying the coloring ink to the base material. In addition, it may be a clear ink that does not contain a coloring material, a primer agent for forming a primer layer on the surface of a base material, and the like, or an overcoat ink for forming an overcoat layer on the surface of recorded matter, or something called a paint or a coating agent.

Hereinafter, each component included in the ink composition according to this embodiment will be described.

[Resin]

The aqueous ink composition according to this embodiment contains a resin. This resin contains a polymer including the following monomer A as a constituent unit. Note here that in this description, the "polymer" is used as a concept that includes both a monopolymer composed of one type of monomer and a copolymer composed of two or more types of monomers.

Monomer A: having a ring structure and has an ethylenically unsaturated bond

When a polymer contains such a monomer as a constituent unit, the aqueous ink composition for inkjet ejection has excellent adhesion to various base materials (recording media).

Furthermore, a polymer including monomer A as a constituent unit is preferably a copolymer further including the following monomer B as a constituent unit.

Monomer B: having an acidic group and/or an amino group and having an ethylenically unsaturated bond

Thus, by including monomer B, which has an acidic group and/or an amino group and an ethylenically unsaturated bond in addition to monomer A, as a constituent unit, the aqueous ink composition has high storage stability.

In this description, for convenience, the constituent monomer is a monomer that constitutes a polymer before reaction, and is described as meaning a polymerizable compound having a reactive group such as an ethylenically unsaturated multiple bond, but actually, when a monomer is included as a constituent unit, it is included not in a state of the monomer before reaction, but in a state of the monomer forming a copolymer after polymerization in which one of the multiple bonds is lost by polymerization.

Furthermore, the monomer may be any monomeric polymerizable compound having a reactive group such as an ethylenically unsaturated multiple bond, and even a monomer with a large molecular weight such as an oligomer is referred to as a monomer in this description.

Hereinafter, the monomer A, the monomer B, and other monomers that may constitute this copolymer will be described.

(Monomer A)

The monomer A is a monomer having a ring structure and having an ethylenically unsaturated bond.

When the side chain moiety of the monomer includes at least one or more ring structures, adhesion is improved with respect to various base materials (recording media) including olefin base material on which a coating film having high adhesion has been difficult to be formed.

Examples of the ring structure includes an alicyclic structure, a heterocyclic structure, and an aromatic ring structure, and the like.

Alicyclic structures include cycloalkanes as monocyclic compounds including three or more carbon-carbon single bonds (for example, cyclopropane, cyclobutane, cyclopentane, cyclohexane, cycloheptane, cyclooctane, cyclononane, cyclodecane), cycloalkanes as polycyclic compounds (dicyclopentane, norbornane, adamantane), and the like.

A heterocyclic structure is a cyclic compound including carbon and one or more other elements (for example, at least one or more element selected from the group consisting of oxygen, nitrogen, sulfur, phosphorus, boron, and silicon) in the ring.

The aromatic ring structure is a cyclic hydrocarbon exhibiting aromatic properties, for example, a benzene ring or a naphthalene ring.

Among these monomers A, monomers having an alicyclic structure and/or a heterocyclic structure as the ring structure are preferable. This makes it possible to more effectively improve adhesion to various base materials (recording media).

Furthermore, among these monomers A, the side chain moiety SP value, which is the SP value calculated for the chemical structure moiety defined by $R_2$ in the following formula (1), is preferably 13.0 or less.
$$CH_2 = C(R_1) - R_2 \quad Formula\ (1)$$

($R_1$ is hydrogen or a methyl group).

Herein, the side chain moiety SP value means a SP (solubility parameter) value of the "-$R_2$" moiety in the formula (1), and similar to the SP value, means the $\sqrt{(A/B)}$ value when the functional group constituting "-$R_2$" is decomposed, the total value of $\Delta Eoh$ (cal/mol) is defined as A and the total value of $\Delta V$ (cm$^3$/mol) is defined as B. Note here that $\Delta Eoh$ and $\Delta V$ are numerical values specific to each substituent, and the Fedors numerical values were used as reference. For example, in the case of butyl (meth) acrylate, "-$R_2$" becomes "-COO-$(CH_2)_3$-$CH_3$", so when calculation is carried out using $\Delta Eoh$ and $\Delta V$ in Table 1 below, the side chain moiety SP value = $\sqrt{((1125+1180\times3+4300)/(33.5+16.1\times3+18.0))}$ = 9.48 is obtained.

[Table 1]

| Type of functional group | Number of functional groups | $\Delta Eoh$ (cal/mol) | $\Delta V$ (cm$^3$/mol) |
|---|---|---|---|
| -COO- | 1 | 4300 | 18.0 |
| -CH$_2$- | 3 | 1180 | 16.1 |
| -CH$_3$ | 1 | 1125 | 33.5 |

By setting the SP value of the side chain moiety of the monomer A within a predetermined range, it becomes possible to form a coating film with even higher adhesion to various base materials (recording media).

The research by the present inventors has revealed that the physical properties of coating films containing high molecules are often greatly influenced by the side chain moieties of the high molecules rather than by the main chains of the polymers contained in the coating films. It is considered that including a monomer having a SP value, which is the SP value of the "-$R_2$" moiety of the formula (1), controlled within a predetermined range as a constituent unit, can influence the physical properties of the coating film, and that a coating film that can exhibit an effect of the present invention can be formed.

In general, the SP value is a value that relatively indicates the affinity of substances, and when the SP value is closer, the affinity is improved. By using the monomer A having a side chain SP value within a predetermined range, it is possible to form a coating film having improved affinity to the base material and having high adhesion.

Note here that the SP value of the side chain moiety is preferably 8.0 or more, more preferably 8.5 or more, and further more preferably 9.5 or more. The side chain moiety SP value is preferably 11.0 or less, more preferably 10.5 or less, and further more preferably 10.0 or less. The side chain moiety SP value is preferably 8.0 or more and 11.0 or less, more preferably 8.5 or more and 10.5 or less, and further more preferably 9.5 or more and 10.0 or less.

Furthermore, also in these monomers A, when the molar volume of the "-$R_2$" moiety of the structural part of the formula (1) is defined as the molar volume of the side chain moiety, the molar volume of the side chain moiety is not particularly limited, but is preferably 170 or less. Herein, the molar volume of the side chain moiety means the molar volume of the "-$R_2$" moiety of the formula (1), and means a value obtained by decomposing the constituent functional groups and calculating the total value of $\Delta V$ (cm$^3$/mol) thereof with reference to the numerical value of Fedors as in the calculation of the side chain SP value. Since the molar volume of the side chain moiety is 170 or less, the "-$R_2$" moiety of the monomer A does not become too bulky, making it possible to form a coating film with even higher adhesion to various base materials (recording media).

Furthermore, it is preferable that a water/1-octanol distribution coefficient (Log P) of the monomer A is 1.0 or more. The "water/1-octanol distribution coefficient (Log P)" is an index of hydrophobic property. When the monomer having a predetermined value or more of "water/1-octanol distribution coefficient (Log P)" (that is, a monomer with relatively high hydrophobicity) is included as a constituent unit, a copolymer becomes difficult to swell in solvents such as ethanol. Therefore, a copolymer including the monomer A as a constituent unit can improve solvent resistance of the obtained recorded matter.

Note here that the water/1-octanol distribution coefficient (Log P) of the monomer A is preferably 1.2 or more, more preferably 1.7 or more, and further more preferably 1.9 or more. The water/1-octanol distribution coefficient (Log P) of the monomer A is preferably 5.0 or less, more preferably 4.8 or less, and further more preferably 4.6 or less. The water/1-octanol distribution coefficient (Log P) of the monomer A is preferably 1.2 or more and 5.0 or less, more preferably 1.7 or more and 4.8 or less, and further more preferably 1.9 or more and 4.6 or less.

In this monomer A, Tg of the homopolymer is preferably 0°C or more, more preferably 10°C or more, and further more preferably 15°C or more. In this monomer A, when Tg of the homopolymer is 0°C or more, the abrasion resistance of the resulting recorded matter can be improved. In this monomer A, Tg of the homopolymer is preferably 120°C or less, more preferably 115°C or less. Thereby, even when drying at a low temperature, a film can be sufficiently formed, and the solvent resistance of the resulting recorded matter can be further improved. In this monomer A, Tg of the homopolymer is preferably 0°C or more and 120°C or less, more preferably 10°C or more and 115°C or less, and further more preferably 15°C or more and 115°C or less.

Examples of the monomer A having such a ring structure include cyclohexyl acrylate (side chain moiety SP value: 9.96, Log P: 2.760 ± 0.226, Tg: 19°C, molar volume: 113.5 cm$^3$/mol), cyclohexyl methacrylate (side chain moiety SP value: 9.96, Log P: 3.179 ± 0.252, Tg: 83°C, molar volume: 113.5 cm$^3$/mol), phenyl acrylate (side chain moiety SP value: 10.75, Log P: 1.940 ± 0.404, Tg: 57°C, molar volume: 105.4 cm$^3$/mol), phenyl methacrylate (side chain moiety SP value: 10.75, Log P: 2.359 ± 0.429, Tg: 110°C, molar volume: 105.4 cm$^3$/mol), benzyl acrylate (side chain moiety SP value: 10.49, Log P: 2.109 ± 0.230, Tg: 6 °C, molar volume: 121.5 cm$^3$/mol), benzyl methacrylate (side chain moiety SP value: 10.49, Log P: 2.527 ± 0.255, Tg: 54°C, molar volume: 121.5 cm$^3$/mol), isobornyl acrylate (side chain moiety SP Value: 9.42, Log P: 4.029 ± 0.273, Tg: 97°C, molar volume: 158.4 cm$^3$/mol), isobornyl methacrylate (side chain moiety SP value: 9.42, Log P: 4.447 ± 0.301, Tg: 180°C, molar volume: 158.4 cm$^3$/mol), phenoxyethyl acrylate (side chain moiety SP value: 10.42, Log P: 2.371 ± 0.246, Tg: -22°C, molar volume: 141.4 cm$^3$/mol), phenoxyethyl methacrylate (side chain moiety SP value: 10.42, Log P: 2.790 ± 0.268, Tg: -3°C, molar volume: 141.4 cm$^3$/mol), dicyclopentanyl acrylate (side chain moiety SP value: 10.31, Log P: 3.957 ± 0.244, Tg: 120°C, molar volume: 141.5 cm$^3$ /mol), dicyclopenta Nil methacrylate (side chain moiety SP value: 10.31, Log P: 4.375 ± 0.266, Tg: 175°C, molar volume: 141.5 cm$^3$/mol), styrene (side chain moiety SP value: 9.50, Log P: 2.821 ± 0.191, Tg: 100°C, molar volume: 87.4 cm$^3$/mol), vinylcyclohexane (side chain moiety SP value: 8.54, Log P: 3. 799 ± 0.193, Tg: 134°C, molar volume: 95.5 cm$^3$/mol), 4-tert-butylcyclohexyl acrylate (side chain moiety SP value: 9.08, Log P: 4.570 ± 0.243, Tg: 81°C, molar volume: 177.7 cm$^3$/mol), 3,3,5-trimethylcyclohexyl acrylate (side chain moiety SP value: 9.12, Log P: 4.212 ± 0.254, Tg: 52°C , molar volume: 161.6 cm$^3$/mol), tetrahydrofurfuryl methacrylate (side chain moiety SP value: 10.37, Log P: 1.399 ± 0.340, Tg: 60°C, molar volume: 101.2 cm$^3$/mol), 4-acryloylmorpholine (side chain moiety SP value: 12.95, Log P: -0.689 ± 0.441, Tg: 145°C, molar volume: 76.5 cm$^3$/mol), hydroxycyclohexyl methacrylate (side chain moiety SP value: 13.02, Log P: 1.230 ± 0.281, Tg: 93°C, molar volume: 106.4 cm$^3$/mol), cyclooctyl methacrylate (side chain moiety SP value: 9.67, Log P: 4.233 ± 0.253, molar volume: 145.7 cm$^3$/mol), cycloheptyl methacrylate (side chain moiety SP value: 9.80, Log P: 3.706 ± 0.252, molar volume: 129.6 cm$^3$/mol), naphthalenyl methacrylate (side chain moiety SP value: 9.86, Log P: 4.831 ± 0.260, Tg: 143°C, molar volume: 159.7 cm$^3$/mol), cyclic trimethylolpropane formal acrylate (side chain moiety SP value: 9.96, Log P: 1.032 ± 0.361, Tg: 27°C, molar volume: 136.4 cm$^3$/mol), cyclopentyl methacrylate (side chain moiety SP value: 10.18, Log P: 2.652 ± 0.252, molar volume: 97.4 cm$^3$/mol), cyclobutyl methacrylate (side chain moiety SP value: 10.63, Log P: 2.125 ± 0.252, molar volume: 83.3 cm$^3$/mol), cyclopropyl methacrylate (side chain moiety SP value: 11.07, Log P: 1.598 ± 0.252, molar volume: 67.2 cm$^3$/mol), tert-butylcyclohexyl methacrylate (side chain moiety SP value: 9.08, Log P: 4.570 ± 0.243, Tg: 81°C) and the like. Among these, an acrylate monomer or a methacrylate monomer is preferable. These monomers A may be used alone, or a plurality of monomers A may be used in combination. The "side chain moiety SP value" in parentheses means the SP value calculated for the chemical structure moiety defined by $R_2$ in the formula (1), and "Log P" in parentheses means a water/1-octanol distribution coefficient (Log P), and "Tg" in parentheses means the Tg of the homopolymer of that monomer, and "molar volume" in parentheses means a molar volume calculated for chemical structure moiety defined by $R_2$ in the formula (1).

Note here that the monomer A may include a monomer having two or more ethylenically unsaturated bonds, but the monomer A preferably includes only a monomer having one ethylenically unsaturated bond. This improves the flexibility of the coating film to be formed, enabling the formation of, for example, a coating film with high adhesion while following a highly flexible base material, such as a resin base material.

The content of monomer A as a constituent monomer is not particularly limited, but the lower limit of the content of the monomer A is preferably 50% by mass or more, more preferably 70% by mass or more, and further more preferably 90% by mass or more with respect to the total amount of the polymer. Thus, the content of the monomer A having a ring structure increases, thus improving adhesion to various base materials (recording media) more effectively.

(Monomer B)

A monomer B is a monomer having an acidic group and/or an amino group and having an ethylenically unsaturated bond. By including an acrylic monomer having an acidic group and/or an amino group in the polymer included in the aqueous ink composition according to this embodiment, the storage stability of the aqueous ink composition can be improved. In particular, when at least a part of the resin is contained in the aqueous ink composition as a dispersing resin, it imparts electrostatic repulsion to the polymeric fine particle dispersion, improving the dispersion stability of the polymeric fine particle dispersion. Therefore, the storage stability of the aqueous ink composition can be improved more effectively.

The monomer B may be any monomer having an acidic group and/or an amino group, but is preferably a monomer having an amino group. When the monomer B is a monomer having an amino group, it not only improves the storage stability of the aqueous ink composition but also forms a coating film with higher adhesion to various base materials (recording media).

The acidic group included in the monomer B is preferably a carboxyl group, a sulfone group, a phosphoric acidic group, and the like. Among these, a carboxyl group is preferable.

Examples of the amino group included in the monomer B include amino groups represented by $-NH_2$, -NHR, and -NRR'), and the like. Among these, a tertiary amino group (-NRR') is preferable.

Specific examples of the monomer B include acrylic acid, methacrylic acid, 2-acryloyloxyethylsuccinic acid, mono-2-(methacryloyloxy)ethyl phthalate, monohydroxyethyl acrylate phthalate, $\omega$-carboxy-polycaprolactone (n$\approx$2) monoacrylate, 4-carboxystyrene, 6-acrylamidohexanoic acid, 2-(dimethylamino)ethyl methacrylate, 2-(dimethylamino) ethyl acrylate, dimethylaminopropylacrylamide, 2-aminoethyl methacrylate, 2-aminoethylmethacrylamide, N-(3-aminopropyl)methacrylamide, 2-(diisopropylamino)ethyl methacrylate, N-(2-dimethylaminoethyl)methacrylamide, and the like. These monomers B may be used alone, or a plurality of monomers B may be used in combination. Note here that these monomers B may be used as they are or in the form of a neutralized salt.

The content of the monomer B as a constituent monomer is not particularly limited, but the lower limit of the content of the monomer B is preferably 0.1% by mass or more, more preferably 0.5% by mass or more, further more preferably 1.0% by mass or more, and still more preferably 5.0 % by mass or more with respect to the total amount of the polymer. Thus, the storage stability of aqueous ink composition can be improved more efficiently. The upper limit of the content of the monomer B is preferably 20.0% by mass or less, more preferably 15.0% by mass or less, and further more preferably 10.0% by mass or less based on the total amount of the polymer. This makes it possible to relatively increase the content of the monomer A in the polymer, and as a result, adhesion to various base materials (recording media) can be improved. The range of the content of the monomer B is 0.1% by mass or more and 20.0% by mass or less, more preferably 0.5% by mass or more and 15.0% by mass or less, further more preferably 1.0% by mass or more and 10.0% by mass or less, still more preferably 5.0% by mass or more 10.0% by mass or less.

(Other monomers)

The polymer included in the aqueous ink composition according to this embodiment may or may not contain other monomers different from the monomer A and the monomer B as constituent units. Examples of the other monomers include methyl (meth)acrylate, butyl (meth)acrylate, 2-ethylhexyl (meth)acrylate, ethyl (meth)acrylate, isobutyl (meth) acrylate, tert-butyl (meth)acrylate, isodecyl (meth)acrylate, trifluoroethyl (meth)acrylate), dimethylacrylamide, diethylacrylamide, hydroxyethylacrylamide, isopropylacrylamide, and the like. These other monomers may be used alone, or a plurality of monomers may be used in combination.

For example, by adding a compound having a functional group that can react with the carbonyl group as a crosslinking agent to a resin dispersion including a carbonyl group in a resin structure, a crosslinked structure can be introduced into the resin including the polymer. Therefore, by using a resin composition containing a polymer including such a monomer including a carbonyl group as a constitutional unit, the abrasion resistance of the resulting coating film can be improved.

Examples of the carbonyl group-containing monofunctional ethylenically unsaturated monomers include, for example, 2-(acryloylamino)-2-methyl-4-pentanone (side chain moiety SP value: 12.04, Log P: 0.037 $\pm$ 0.287), acrylal-dehyde (side chain moiety SP value: 15.47, Log P: 0.263 $\pm$ 0.283), N-ethenylformamide (side chain moiety SP value: 19.72, Log P: 0.525 $\pm$ 0.215), methyl ethenyl ketone (side chain moiety SP value: 10.91, Log P: 0.142 $\pm$ 0.249), ethyl ethenyl ketone (side chain moiety SP Value: 10.34, Log P: 0.652 $\pm$ 0.249), 2-(acetoacetyloxy)ethyl acrylate (side chain moiety SP value: 11.73, Log P: 0.331 $\pm$ 0.356), 2-(acetoacetyloxy)ethyl methacrylate (side chain moiety SP value: 11.73, Log P: 0.750 $\pm$ 0.385), 2-(acetoacetyloxy)propyl acrylate (side chain moiety SP value: 11.43, Log P: 0.635 $\pm$ 0.350), 2-(acetoacetyloxy)propyl acrylate (side chain moiety SP value: 11.43, Log P: 1.054 $\pm$ 0.378), and the like. However, these monomers have a "water/1-octanol distribution coefficient (Log P)" of 0 to 1.1 and are relatively highly hydrophilic monomers. In this way, when the resin composition contains a polymer including a monomer including a carbonyl group as a constituent unit, the solvent resistance of the resulting coating film tends to be relatively reduced. Therefore, the resin according to this embodiment may contain a polymer including a monomer including a carbonyl group as a constituent unit, but a polymer including a monomer including a carbonyl group as a constituent unit is not preferably contained unless, in particular, a crosslinking agent is added so as to introduce a crosslinking structure into a resin including the polymer.

Note here that the other monomers may include monomers having two or more ethylenically unsaturated bonds, but it is preferable that the other monomers consist of only monomers having one ethylenically unsaturated bond. This improves the flexibility of the coating film to be formed, enabling the formation of, for example, a coating film with high adhesion while following a highly flexible base material, such as a resin base material.

The content of other monomers is not particularly limited, but the upper limit of the content of other monomers is preferably 45% by mass or less, more preferably 35% by mass or less, and further more preferably 20% by mass or less with respect to the total amount of the polymer.

[Polymer]

The aqueous ink composition according to this embodiment contains a polymer including monomer A as a constituent unit. Thereby aqueous ink composition for inkjet ejection having excellent adhesion to various base materials (recording media) can be obtained.

This polymer may be dissolved in an aqueous ink composition, but it is preferable that at least a part thereof is contained as a high molecular fine particle dispersion. The high molecular fine particle dispersion is a resin having dispersibility, the examples thereof include a resin emulsion in which the resin is dispersed as fine resin particles in an ink composition by electrostatic repulsion or a colloidal dispersion containing a partially dissolved resin. When a polymer fine particle dispersion is contained as a binder resin, preferable dispersion stability, ejection stability, and the like, can be obtained.

This polymer can be obtained by using conventionally known radical polymerization methods such as an emulsion polymerization method and a suspension polymerization method using monomers. Among these, this polymer is preferably an emulsion polymer.

When a polymer is obtained by polymerizing monomers by an emulsion polymerization method, other components such as an emulsifier, a polymerization initiator, a polymerization modifier, a crosslinking agent, a neutralizing agent, and a film forming aid may be appropriately used.

When a polymer is obtained by polymerizing a monomer by an emulsion polymerization method, for example, there are methods such as a method of mixing each component and raising the temperature, or a method of mixing a part of each component, raising the temperature, polymerizing, and then adding the remaining monomer components and polymerizing thereof, and a method of mixing and heating components other than monomers, then adding monomer components thereto, and polymerizing thereof.

Examples of the emulsifiers include anionic, cationic, and nonionic surfactants. Among these, it is preferable to use a non-reactive emulsifier that does not have multiple bonds in its structure (that is, the resin contained as high molecular fine particle dispersion includes a non-reactive emulsifier). By dispersing the polymer obtained using a non-reactive emulsifier into an aqueous ink composition as a high molecular fine particle dispersion, the dispersion stability of the polymer can be improved, and as a result, storage stability can be further improved.

Examples of non-reactive emulsifiers include sodium alkyl sulfates such as sodium dodecylbenzenesulfonate, sodium lauryl sulfate, and sodium tetradecyl sulfate, ammonium lauryl sulfate, sodium diphenyl ether sulfonate, polyoxyethylene alkyl ether, and polyoxyethylene fatty acid ester, and the like. Specific examples include commercially available products such as "Adeka Pluronic L-31", "Adeka Pluronic P-85", "Adeka Pluronic F-108", "Adekatol LB-83", "Adekatol SO-145", "Adeka Hope YES-25", "Adekamin 4MAC-30", "Adekamin 4MT-50", "Adekacol TS-230E", "Adekacol PS-810E" [all of the above are manufactured by ADEKA CORPORATION], "Emulgen 120", "Emulgen 147", "Emulgen 109P", "Emulgen 210P", "Emulgen 306P", "Emulgen 409PV", "Emulgen 420", "Emulgen 709", "Emulgen 1108", "Emulgen 1118S-70", "Emulgen 1150S-60", "Emulgen 1135S-70", "Emulgen 4085", "Emulgen 2020G-HA", "Emulgen A-60", "Emulgen A-90", "Emulgen A-500", "Emulgen LS-110", "Emulgen G2E-4", "Emar 2FG", "Emar 20CM", "Emar 270J", "Latemul AD-25", "Latemul E-1000A", "Acetamine 24", "Cortamine 60W", "Sanisol C", "Emanon 1112" [all of the above are manufactured by Kao Corporation], and the like. These may be used alone or in combination of two or more.

Specific examples of the reactive emulsifier include "ADEKA REASOAP SE-20N", "ADEKA REASOAP SE-10N", "ADEKA REASOAP PP-70", "ADEKA REASOAP PP-710", "ADEKA REASOAP SR-10" and "ADEKA REASOAP SR-20" [all of the above are manufactured by ADEKA CORPORATION], "ELEMINOL JS-2" and "ELEMINOL RS-30" [manufactured by Sanyo Chemical Industries Ltd.], "Latemul S-180A", "Latemul S-180", and "Latemul PD-104" [manufactured by Kao Corporation], "AQUARON BC-05", "AQUARON BC-10", "AQUARON BC-20", "AQUARON HS-05", "AQUARON HS-10", "AQUARON HS-20", "NEW FRONTIER S-510", "AQUARON KH-05", and "AQUARON KH-10" [all of the above are manufactured by Dai-Ichi Kogyo Seiyaku Co., Ltd.], "PHOSPHINOL TX" [manufactured by Toho Chemical Industry Co., Ltd.], "ADEKA REASOAP NE-10", "ADEKA REASOAP NE-20", "ADEKA REASOAP NE-30", "ADEKA REASOAP NE-40", "ADEKA REASOAP ER-10", "ADEKA REASOAP ER-20", "ADEKA REASOAP ER-30", "ADEKA REASOAP ER-40" [manufactured by ADEKA CORPORATION), "AQUARON RN-10", "AQUARON RN-20", "AQUARON RN-30", and "AQUARON RN-50" [all of the above are manufactured by Dai-Ichi Kogyo Seiyaku Co., Ltd.], and the like.

The amount of the emulsifier to be used may be adjusted appropriately, but it is preferably 0.1 parts by mass or more, more preferably 0.5 parts by mass or more, and further more preferably 1 part by mass or more, in terms of solid content with respect to 100 parts by mass of the monomer. The amount of emulsifier to be used is preferably 20 parts by mass or less, more preferably 15 parts by mass or less, and further more preferably 10 parts by mass or less, in terms of solid content with respect to 100 parts by mass of the monomer. The amount of the emulsifier to be used is preferably 0.1 parts by mass or more and 20 parts by mass or less, more preferably 0.5 parts by mass or more and 15 parts by mass or less and further more preferably 1 part by mass or more and 10 parts by mass or less in terms of solid content with respect to 100 parts by mass of the monomer.

Examples of the polymerization initiator include organic peroxides such as alkyl peroxides, t-butyl hydroperoxide, cumene hydroperoxide, p-methane hydroperoxide, lauroyl peroxide, 3,5,5-trimethyl hexanoyl peroxide, octanoyl peroxide, t-butyl cumyl peroxide, benzoyl peroxide, dichlorobenzoylperoxide, dicumyl peroxide, di-t-butyl peroxide, 1,1-bis(t-butylperoxy)-3,3,5-trimethylcyclohexane, 3,3,5-trimethylcyclohexanone peroxide, methylcyclohexanone peroxide, diisobutyl peroxydicarbonate, di-2-ethylhexyl peroxydicarbonate and t-butyl peroxyisobutyrate; 2,2'-azobisisobutyronitrile, dimethyl-2,2'-azobisisobutyrate, 2,2'-azobis(2,4-dimethylvaleronitrile), 2,2'-azobis(2-methylbutyronitrile), potassium persulfate, sodium persulfate, ammonium persulfate, hydrogen peroxide, ammonium (amine) salts of 4,4'-azobis-4-cyanovaleric acid, 2,2'-azobis(2-methylamidoxime) dihydrochloride, 2,2'-azobis(2-methylbutaneamidoxime) dihydrochloride tetrahydrate, 2,2'-azobis{2-methyl-N-[1,1-bis(hydroxymethyl)-2-hydroxyethyl]-propionamide}, 2,2'-azobis[2-methyl-N-(2-hydroxyethyl)-propionamid], various redox catalysts (including oxidizing agents such as ammonium persulfate, potassium persulfate, sodium persulfate, hydrogen peroxide, t-butyl hydroperoxide, benzoyl peroxide, cumene hydroperoxide and p-methane hydroperoxide, and reducing agents such as sodium sulfite, acidic sodium sulfite, Rongalite, and ascorbic acid), and the like. These polymerization initiators may be used either alone or in combination of two types or more.

The amount of the polymerization initiator used may be adjusted appropriately, but is preferably 0.01 parts by mass or more, more preferably 0.03 parts by mass or more, and further more preferably 0.05 parts by mass or more, with respect to 100 parts by mass of the monomer. The amount of the polymerization initiator used is preferably 5 parts by mass or less, more preferably 3 parts by mass or less, and further more preferably 1 part by mass with respect to 100 parts by mass of the monomer. The amount of the polymerization initiator used is preferably 0.01 parts by mass or more and 5 parts by mass or less, more preferably 0.03 parts by mass or more and 3 parts by mass or less, and further more preferably 0.05 parts by mass or more and 1 part by mass or less with respect to 100 parts by mass of the monomer.

Examples of the polymerization modifier include alcohols such as methanol, ethanol, propanol and butanol, aldehydes such as acetaldehyde, propionaldehyde, n-butyl aldehyde, furfural and benzaldehyde, and mercaptans such as n-dodecylmercaptan, thioglycolic acid, octyl thioglycolate, and thioglycerol. These may be used alone or in combination of two types of more thereof.

The amount of the polymerization modifier used may be adjusted appropriately, but is preferably 0.01 parts by mass or more, more preferably 0.05 parts by mass or more, and further more preferably 0.1 parts by mass or more with respect to 100 parts by mass of the monomer. The amount of the polymerization modifier used is preferably 10 parts by mass or less, more preferably 5 parts by mass or less, and further more preferably 3 parts by mass or less with respect to 100 parts by mass of the monomer. The amount of the polymerization modifier used is preferably 0.01 parts by mass or more and 10 parts by mass or less, more preferably 0.05 parts by mass or more and 5 parts by mass or less, and further more preferably 0.1 parts by mass or more and 3 parts by mass or less with respect to 100 parts by mass of the monomer.

Although a crosslinking agent may be used, it is preferable that a crosslinking agent is not used (that is, the resin contained as a high molecular fine particle dispersion does not contain a crosslinking agent). When a polymer that does not contain a crosslinking agent as a high molecular fine particle dispersion is dispersed in the aqueous ink composition, the dispersion stability of the polymer can be improved, resulting in further improving the storage stability.

When a crosslinking agent is contained, examples of the crosslinking agent include aliphatic dihydrazides such as oxalic acid dihydrazide, malonic acid dihydrazide, succinic acid dihydrazide, glutaric acid dihydrazide, adipic acid dihydrazide, and sebacic acid dihydrazide, carbonic acid polyhydrazide, aliphatic, alicyclic, and aromatic bis-semicarbazides, aromatic dicarboxylic acid dihydrazides, polyhydrazides of polyacrylic acid, dihydrazides of aromatic hydrocarbons, dihydrazides of unsaturated dicarboxylic acids such as hydrazine-pyridine derivatives, and maleic acid dihydrazide.

The amount of the crosslinking agent to be used may be appropriately adjusted, but preferably less than 2 parts by mass, more preferably less than 1 part by mass, and further more preferably less than 0.5 parts by mass with respect to 100 parts by mass of monomers.

The neutralizing agent is used, for example, for neutralizing acidic groups or basic groups derived from the monomer B. When the copolymer includes the monomer B having an acidic group or a basic group as a constituent unit, by neutralizing the acidic group or the basic group derived from the monomer B (that is, when the copolymer includes monomer B having a neutralized acidic group or a neutralized basic group as a constituent unit), an aqueous ink composition that more effectively exhibits the effects of the present invention can be obtained.

Examples of acids that neutralize the basic groups derived from the monomer B include inorganic acids such as hydrochloric acid, nitric acid, phosphoric acid, and sulfuric acid, and organic acids such as formic acid, acetic acid, propionic acid, benzoic acid, succinic acid, butyric acid, fumaric acid, and paratoluene sulfonic acid, citric acid, and oxalic acid. Among these, benzoic acid is preferably used from the viewpoint of solvent resistance during low temperature drying.

Bases that neutralize the acidic groups derived from the monomer B include inorganic bases such as alkali metal hydroxides, alkaline earth metal hydroxides, alkali metal carbonates, and alkaline earth metal carbonates, ammonia, and amines such as methylamine, ethylamine, propylamine, butylamine, hexylamine, octylamine, ethanolamine, isopropylamine, propanolamine, 2-methyl-2-aminopropanol, diethanolamine, N,N-dimethylethanolamine, N-methyldiethanolamine, dimethylamine, triethylamine, dibutylamine, N,N-diethylethanolamine, N,N-dibutylaminoethanol, N-(β-aminoethyl) ethanolamine, N-methylethanolamine, 2-ethylaminoethanol, mono-n-butylethanolamine, mono-n-butyldiethanolamine, n-tert-butyldiethanolamine, 3-methyl-2-oxazolidinone, n-(2-hydroxyethyl)morpholine, aminomethylpropanediol, aminoethylpropanediol, 2-(dimethylaminomethyl)-2-propanol, tri(hydroxymethyl)aminomethane, DL-2-amino-1-butanol, 3-amino-4-octanol, triethanolamine, tris(2-hydroxyethyl)amine, and the like. Among these, ammonia and N,N-dimethylethanolamine are preferably used from the viewpoint of solvent resistance during low temperature drying.

When the polymer including the thus obtained monomer A as a constituent unit is, for example, a copolymer with monomer B or another monomer, the arrangement of the monomers included in the copolymer may be a random copolymer having no order in the arrangement of the monomers, a block copolymer in which monomers of the same type are long and continuous, or a graft copolymer in which monomers are arranged in a branched manner. Among these, when a copolymer includes monomer A and monomer B as constituent units, the copolymer is preferably a random copolymer. By dispersing a random copolymer including the monomer A and the monomer B as constituent units in an aqueous ink composition as a polymer fine particle dispersion, it becomes possible to improve the dispersion stability of the copolymer, and when the aqueous ink composition is ejected onto the surface of the base material by an inkjet method, ejection stability can be improved.

The Tg of the resin containing this polymer is preferably 0°C or more and 120°C or less. When the Tg of the resin is 0°C or more, the abrasion resistance of the obtained recorded matter is improved. When the Tg of the resin is 120°C or less, the film forming properties of the aqueous ink composition are improved even in the case of drying at low temperatures, and a coating film of the aqueous ink composition having solvent resistance can be formed.

Note here that the Tg of the resin containing this polymer is more preferably 20°C or more, more preferably 30°C or more, and further more preferably 40°C or more. The Tg of the resin containing this polymer is more preferably 100°C or less, more preferably 90°C or less, and further more preferably 80°C or less. The Tg of the resin containing this copolymer is preferably 0°C or more and 120°C or less, more preferably 20°C or more and 100°C or less, still more preferably 30°C or more and 90°C or less, and further more preferably 40°C or more and 80°C or less.

When the resin is contained as a high molecular fine particle dispersion, the average particle diameter of the high molecular fine particle dispersion is preferably 10 nm or more, more preferably 20 nm or more, and further more preferably 30 nm or more from the viewpoint of dispersion stability in the ink composition and inkjet ejection property. The average particle diameter of the high molecular fine particle dispersion is preferably 500 nm or less, more preferably 350 nm or less, and further more preferably 250 nm or less from the viewpoint of dispersion stability in the ink composition and inkjet ejection property. The average particle diameter of the high molecular fine particle dispersion is preferably 10 nm or more and 500 nm or less, more preferably 20 nm or more and 350 nm or less, and further more preferably 30 nm or more and 250 nm or less. Note here that the average particle diameter of the resin emulsion can be measured using a concentrated particle size analyzer (manufactured by Otsuka Electronics Co., Ltd., model: FPAR-1000) at a measurement temperature of 25°C.

The weight average molecular weight of the high molecular fine particle dispersion is preferably 10000 or more, more preferably 50000 or more, and further more preferably 100000 or more from the viewpoint of solvent resistance. From the viewpoint of the storage stability of the aqueous ink composition of storage stability of the aqueous ink composition, the weight average molecular weight of the resin emulsion is preferably 2000000 or less, more preferably 1750000 or less, and further more preferably 1500000 or less. The weight average molecular weight of the polymer fine particle dispersion is preferably 10000 or more and 2000000 or less, more preferably 50000 or more and 1750000 or less, and further more preferably 100000 or more and 1500000 or less. Note here that in this embodiment, the molecular weight of the resin indicates the weight average molecular weight Mw, and is a value measured by GPC (gel permeation chromatography), using "HLC-8120GPC" manufactured by Tosoh Corporation and can be measured using a polystyrene standard for calibration curves as a standard.

The polymer including monomer A as a constituent unit may be obtained by a conventionally known polymerization method, or may be obtained by purchasing a resin including a polymer including the monomer A as a constituent unit from commercially available resins.

Furthermore, the aqueous ink composition according to this embodiment may further contain a resin that is different from the polymer including the monomer A as a constituent unit. Specifically, the resins including one or more resins, different from the above copolymers, selected from the group consisting of acrylic resins (including copolymers such as styrene-acrylic resins), polyurethane resins, polyester resins, vinyl chloride resins, vinyl acetate resin, polyether resin, vinyl chloride vinyl-acetate copolymer resin, polyethylene resin, acrylamide resin, epoxy resin, polycarbonate resin, silicone resin, and polystyrene resin, or copolymer resins, or mixtures thereof.

Examples of commercially available polymer fine particle dispersions include, but are not limited to, Acrit WEM-031U, WEM-200U, WEM-321, WEM-3000, WEM-202U, WEM-3008, (acrylicurethane resin emulsion manufactured by Taisei Fine Chemical Co., Ltd.), Acrit UW-550CS, UW-223SX, AKW107, RKW-500 (acrylic resin emulsion manufactured by Taisei Fine Chemical Co., Ltd.), LUBRIJET N240 (acrylic resin emulsion manufactured by Lubrizol), Superflex 150, 210 , 470, 500M, 620, 650, E2000, E4800, R5002 (urethane resin emulsion manufactured by Dai-Ichi Kogyo Seiyaku Co., Ltd.), VINYBLAN 701FE35, 701FE50, 701FE65, 700, 701, 711, 737, 747 (vinilchloride-acrylic resin emulsion manufactured by Nissin Chemical Co., Ltd.), VINYBLAN 2706, 2685 (acrylic resin emulsion manufactured by Nissin Chemical Co., Ltd.), Movinyl 743N, 6520, 6600, 6820, 7470, 7720 (acrylic resin emulsion manufactured by Japan Coating Resin Co., Ltd.), PRIMAL AC-261P, AC-818 (acrylic resin emulsion manufactured by Dow Chemical), JE-1056 (acrylic resin emulsion manufactured by Seiko PMC), NeoCryl XK-190 (acrylic resin emulsion manufactured by DSM Coating Resin Corporation), NeoCryl A2091, A2092, A639, A655, A662 (styrene-acrylic resin emulsion manufactured by DSM Coating Resin Corporation), QE-1042, KE-1062 (styrene-acrylic resin emulsion manufactured by Seiko PMC), JONCRYL7199, PDX-7630A (styrene-acrylic resin emulsion manufactured by BASF Japan), Chaline R170BX (silicone-acrylic resin emulsion manufactured by Nissin Chemical Industry, Co., Ltd.), Takelac W-6010 (urethane resin emulsion manufactured by Mitsui Chemicals, Inc.), ELITEL KA-5071S (polyester resin emulsion manufactured by UNITIKA LTD.), Polysol AP-1350 (acrylic resin emulsion manufactured by SHOWA DENKO K.K) and the like.

The content of the polymer including the monomer A as a constituent unit is not particularly limited, but the lower limit of the content of the resin is preferably 0.05% by mass or more, more preferably 0.1% by mass or more, further more preferably 0.5% by mass or more, and still more preferably 1% by mass or more with respect to the total amount of the aqueous ink composition. The upper limit of the resin content is preferably 20% by mass or less, and above all, more preferably 17.5% by mass or less, and further more preferably 15% by mass or less with respect to the total amount of the aqueous ink composition. The lower limit of the content of the resin is preferably 0.05% by mass or more and 20% by mass or less, more preferably 0.1% by mass or more and 17.5% by mass or less, still more preferably 0.5% by mass or more and 15% by mass or less, and further more preferably 1% by mass or more and 15% by mass or less with respect to the total amount of the aqueous ink composition.

[Water]

The aqueous ink composition according to this embodiment contains water. As water, it is preferable to use deionized water rather than water containing various ions. The content of water is not particularly limited as long as it can disperse or dissolve each component, but the lower limit of the content of water is preferably in the range of 30% by mass or more, more preferably in the range of 45% by mass or more, and further more preferably in the range of 50% by mass or more, with respect to the total amount of the aqueous ink composition. The upper limit of the content of water is preferably in the range of 85% by mass or less, more preferably in the range of 80% by mass or less, and further more in the range of 75% by mass or less, with respect to the total amount of the aqueous ink composition. is even more preferable. The content of water is preferably in the range of 30% by mass or more and 85% by mass or less, more preferably 45% by mass or more and 80% by mass or less, and 50% by mass or more and 75% by mass or less with respect to the total amount of the aqueous ink composition.

[Water-soluble solvent]

The aqueous ink according to this embodiment may contain a water-soluble solvent. The solvent is one that can disperse or dissolve the coloring material and the like.

Examples of the water-soluble solvent includes alkyl alcohols having 1 to 5 carbon atoms, such as, methyl alcohol, ethyl alcohol, n-propyl alcohol, isopropyl alcohol, n-butyl alcohol, sec-butyl alcohol, tert-butyl alcohol, isobutyl alcohol and n-pentanol; monohydric alcohols such as 3-methoxy-1-butanol, 3-methoxy-3-methyl-1-butanol, 3-methoxy-1-propanol, 1-methoxy-2-propanol, 3-methoxy-n-butanol; amides such as formamide, acetamide, propanamide, butanamide, isobutyramide, pentanamide, N-methylformamide, N-methylacetamide, N-methylpropanamide, N-methylbutanamide, N-methylisobutyramide, N-methylpentanamide, N-ethylformamide, N-ethylacetamide, N-ethylpropanamide, N-ethylbutanamide, N-ethylisobutyramide, N-ethylpentanamide, N-propylformamide, N-propylacetamide, N-propylpropanamide, N-propylbutanamide, N-propylisobutyramide, N-propylpentanamide, N-isopropylformamide, N-isopropylacetamide, N-isopropylpropanamide, N-isopropylbutanamide, N-isopropylisobutyramide, N-isopropylpentanamide, N-butylformamide, N-butylacetamide, N-butylpropanamide, N-butylbutanamide, N-butylisobutylamide, N-butylpentanamide, N,N-dimethylformamide, N,N-dimethylacetamide, N,N-dimethylpropanamide, N,N-dimethylbutanamide, N,N-dimethylisobutyramide, N,N-dimethylpentanamide, N,N-diethylformamide, N,N-diethylacetamide, N,N-diethylpropanamide, N,N-diethylbutanamide, N,N-diethylisobutyramide, N,N-diethylpentanamide, N,N-dipropylformamide, N,N-dipropylacetamide, N,N-dipropylpropanamide, N,N-dipropylbutanamide, N,N-dipropylisobutyramide, N,N-dipropylpentanamide, N,N-diisopropylformamide, N,N-diisopropylacetamide, N,N-diisopropylpropanamide, N,N-diisopropylbutanamide, N,N-diisopropylisobutyramide, N,N-diisopropylpentanamide, N,N-dibutylformamide, N,N-dibutylacetamide, N,N-dibutyl propanamide, N,N-dibutylbutanamide, N,N-dibutylisobutyramide, N,N-dibutylpentanamide, N-ethyl-N-methylformamide, N-ethyl-N-methylacetamide, N-ethyl-N-methylpropanamide, N-ethyl-N-methylbutanamide, N-ethyl-N-methylisobutyramide, N-ethyl-N-methylpentanamide, N-methyl-N-propylformamide, N-methyl-N-propylacetamide, N-methyl-N-propylpropanamide, N-methyl-N-propylbutanamide, N-methyl-N-propylisobutyramide, N-methyl-N-propylpentanamide, N-ethyl-N-propylformamide, N-methyl-N-(1-methylethyl)formamide, N-hydroxypropyl-N-methylacetamide, N-ethyl-N-propylacetamide, N-ethyl-N-propylpropanamide, N-ethyl-N-propylbutanamide, N-ethyl-N-propylisobutyramide, N-ethyl-N-propylpentanamide, 3-methyl-2-oxazolidinone, 3-ethyl-2-oxazolidinone, N-vinylmethyloxazolidinone, 3-methoxy-N,N-dimethylpropanamide, 3-butoxy-N,N-dimethylpropanamide, 3-methoxypropanamide, 3-butoxypropanamide, N,N-dibutyl-3-methoxypropanamide, N,N-dibutyl-3-butoxypropanamide, and N,N-dimethyl-3-butoxypropanamide; ketones or keto alcohols such as acetone, diacetone alcohol, and texanol; ethers such as tetrahydrofuran, dioxane (including 1,4-dioxane, and the like); oxyethylene or oxypropylene copolymers such as polyethylene glycol and polypropylene glycol; diols such as ethylene glycol, propylene glycol, 1,2-propanediol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,3-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylol ethane, trimethylolpropane, and 1,2,6-hexanetriol; tetrahydric alcohols such as mesoerythritol and pentaerythritol; monoalkyl ethers such as ethylene glycol monomethyl (or ethyl, isopropyl, n-butyl, isobutyl, n-hexyl, 2-ethylhexyl) ether, diethylene glycol monomethyl (or ethyl, isopropyl, n-butyl, isobutyl, n-hexyl, 2-ethylhexyl) ether, triethylene glycol monomethyl (or ethyl, propyl, isopropyl, n-butyl, isobutyl, t-butyl, pentyl, n-hexyl, 2-ethylhexyl) ether, propylene glycol monomethyl (or ethyl, propyl, isopropyl, n-butyl, isobutyl, t-butyl, pentyl, n-hexyl, 2-ethylhexyl) ether, dipropylene glycol monomethyl (or ethyl, propyl, isopropyl, n-butyl, isobutyl, t-butyl, pentyl, n-hexyl, 2-ethylhexyl) ether, tripropylene glycol monomethyl (or ethyl, propyl, isopropyl, n-butyl, isobutyl, t-butyl, pentyl, n-hexyl, 2-ethylhexyl) ether, and tetraethylene glycol monomethyl (or ethyl, propyl, isopropyl, n-butyl, isobutyl, t-butyl, pentyl, n-hexyl, 2-ethylhexyl) ether; dialkyl ethers of polyhydric alcohols, such as diethylene glycol dimethyl ether, diethylene glycol diethyl ether, diethylene glycol ethyl methyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol dimethyl ether, propylene glycol diethyl ether, propylene glycol ethyl methyl ether, dipropylene glycol dimethyl ether, dipropylene glycol diethyl ether, dipropylene glycol ethyl methyl ether, tripropylene glycol dimethyl ether, tripropylene glycol diethyl ether, tripropylene glycol ethyl methyl ether; acetates such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl, isobutyl, t-butyl, pentyl, n-hexyl, 2-ethylhexyl) ether acetate, ethylene glycol diacetate, diethylene glycol diacetate, propylene glycol diacetate, dipropylene glycol diacetate; lactones such as γ-butyrolactone, α-methylene-γ-butyrolactone, ε-caprolactone, γ-valerolactone, γ-hexanolactone, γ-heptanolactone, δ-valerolactone, δ-hexanolactone, δ-heptalactone, δ-octalactone, δ-nonalactone , δ-decalactone, δ-undecalactone, γ,γ-dimethyl-γ-butyrolactone, α-methyl-γ-butyrolactone, γ-crotolactone, α-methylene-γ-butyrolactone, β-methyl-γ-butyrolactone, and 6-methylvalerolactone; carbonate esters such as 2,3-butylene carbonate, ethylene carbonate, and propylene carbonate; acetate esters such as methyl acetate, ethyl acetate, n-propyl acetate, isopropyl acetate, n-butyl acetate, isobutyl acetate, hexyl acetate, and octyl acetate; lactate esters such as methyl lactate, ethyl lactate, butyl lactate, propyl lactate, ethylhexyl lactate, amyl lactate, and isoamyl lactate; dibasic acid esters such as dimethyl oxalate, diethyl oxalate, dimethyl malonate, diethyl malonate, dipropyl malonate, dimethyl succinate, diethyl succinate, dimethyl glutarate, and diethyl glutarat e; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine, saturated hydrocarbons such as n-hexane, isohexane, n-nonane, isononane, dodecane, and isododecane, unsaturated hydrocarbons such as 1-hexene, 1-heptene, and 1-octene; cyclic saturated hydrocarbons such as cyclohexane, cycloheptane, cyclooctane, cyclodecane, and decalin; cyclounsaturated hydrocarbons such as cyclohexene, cycloheptene, cyclooctene, 1,1,3,5,7-cyclooctatetraene, and cyclododecene; aromatic hydrocarbons such as benzene, toluene, and xylene; nitrogen-containing heterocyclic compounds such as N-methyl-2-pyrrolidone, 2-pyrrolidone, β-lactam, δ-lactam, ε-caprolactam, N-methyl-epsilon-caprolactam, 2-hydroxylethylpyrrolidone, N-2-hydroxyethyl-2-pyrrolidone, 3-methyl-2-pyrrolidinone, 1,3-dimethyl-2-imidazolidinone; cyclic compounds such as sulfolane; morpholines such as N-methylmorpholine, N-ethylmorpholine, N-formylmorpholine, N-hydroxyethylmorpholine, 2-hydroxylethylmorpholine, and 4-acetylmorpholine; terpene solvents, and the like. These can be used alone or in combination of two or more. Among these, it is preferable to select a water-soluble solvent so that the aqueous ink has a desired static surface tension, and, for example, preferably to include at least one water-soluble solvent such as an alkanediol.

The content of the water-soluble solvent is not particularly limited as long as it can disperse or dissolve each component, but the lower limit of the content of the water-soluble solvent is preferably within a range of 5% by mass or more, more preferably within a range of 10% by mass or more, and further more preferably within a range of 12% by mass or more with respect to the total amount of the aqueous ink. The upper limit of the content of the water-soluble solvent is preferably in the range of 50% by mass or less, more preferably in the range of 45% by mass or less, and in the range of 40% by mass or less with respect to the total amount of the aqueous ink. The content of the water-soluble solvent is preferably within a range of 5% by mass or more and 50% by mass or less, more preferably within a range of 10% by mass or more and 45% by mass or less, and within a range of 12% by mass or more and 40% by mass or less.

[Coloring material]

The aqueous ink composition according to this embodiment may contain a coloring material. Although it is not essential for the ink composition according to this embodiment to contain a coloring material, containing of a coloring material makes it possible to make a coloring ink that forms a desired image pattern or a white ink, metallic ink, and the like that can serve as a base layer. The coloring material may be a dye or a pigment.

In the aqueous ink composition according to this embodiment, pigments that can be used are not particularly limited, and include organic pigments or inorganic pigments used in conventional aqueous ink composition. These may be used alone or in combination of two or more. Note here that the aqueous ink composition according to this embodiment does not need to contain a coloring material. When using a pigment in the aqueous ink composition according to this embodiment, the dispersion stability of the pigment can be improved by using a dispersant or a dispersion aid (pigment derivative).

Furthermore, a pigment or a dye may be included in the resin for use.

Examples of the pigment include inorganic pigments or organic pigments conventionally used in aqueous ink composition. These may be used alone or in combination of two or more. Specific examples of the organic pigments include insoluble azo pigments, soluble azo pigments, derivatives from dyes, phthalocyanine organic pigments, quinacridone organic pigments, perylene organic pigments, perinone organic pigments, azomethine organic pigments, and anthraquinone organic pigments (anthrone organic pigments), xanthene organic pigments, diketopyrrolopyrrole organic pigments, dioxazine organic pigments, nickel azo pigments, isoindolinone organic pigments, pyranthrone organic pigments, thioindigo organic pigments, condensed azo organic pigments, benzimidazolone organic pigments, quinophthalone organic pigments, isoindoline organic pigments, quinacridone solid solution pigments, perylene solid solution pigments, and other pigments such as lake pigments and carbon black.

Examples of organic pigments using color index (C.I.) numbers include C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, 214, C.I. Pigment Red 5, 7, 9, 12, 48, 48:2, 48:3, 49, 52, 53, 57, 57:1, 97, 112, 122, 123, 146, 149, 150, 168, 177, 180, 184, 185, 192, 202, 206, 208, 209, 213, 215, 216, 217, 220, 223, 224, 226, 227, 228, 238, 240, 254, 255, 269, 291, C.I. Pigment Orange 16, 36, 43, 51, 55, 59, 61, 64, 71, 73, C. I. Pigment Violet 19, 23, 29, 30, 37, 40, 50, C.I. Pigment Blue 15, 15:1, 15:3, 15:4, 15:6, 16, 22, 60, 64, C.I. Pigment Green 7, 36, 58, 59, 62, 63, C.I. Pigment Brown 23, 25, 26, C.I. Pigment Black 7 and the like.

In the aqueous ink according to this embodiment, specific examples of dyes that can be used include azo dyes, benzoquinone dyes, naphthoquinone dyes, anthraquinone dyes, cyanine dyes, squarylium dyes, croconium dyes, merocyanine dyes, stilbene dyes, diarylmethane dyes, triarylmethane dyes, fluorane dyes, spiropyran dyes, phthalocyanine dyes, indigo dyes such as indigoid, fulgide dyes, nickel complex dyes, and azulene dyes.

Furthermore, specific examples of the inorganic pigments include titanium oxide, barium sulfate, calcium carbonate, zinc oxide, barium carbonate, silica, talc, clay, synthetic mica, alumina, zinc white, lead sulfate, yellow lead, zinc yellow, red iron oxide (red iron oxide (III)), cadmium red, ultramarine blue, navy blue, chromium oxide green, cobalt green, amber, titanium black, synthetic iron black, inorganic solid solution pigments, and the like.

The average dispersed particle diameter of the pigment is not particularly limited as long as the desired color can be produced. Although it varies depending on the type of pigment, from the viewpoint of obtaining good dispersion stability and sufficient coloring power, the lower limit of the average dispersed particle diameter of the pigment is preferably in the range of 10 nm or more, and preferably in the range of 20 nm or more, and further more preferably in the range of 30 nm or more. The upper limit of average dispersed particle diameter of the pigment is preferably in the range of 500 nm or less, more preferably in the range of 400 nm or less, and further more preferably in the range of 350 nm or less. When the average dispersed particle diameter is 500 nm or less, even when the aqueous ink composition according to this embodiment is inkjet ejected, the nozzle of the inkjet head is unlikely to be clogged, and a homogeneous image with high reproducibility can be obtained. When the average dispersed particle diameter is 10 nm or more, the light resistance of the obtained recorded matter can be made good. The range of the average dispersed particle diameter of the pigment is preferably in the range of 10 nm or more and 500 nm or less, more preferably in the range of 20 nm or more and 400 nm or less, and further more preferably in the range of 30 nm or more and 350 nm or less. Note here that in this embodiment, the average dispersed particle diameter of the pigment is the average particle diameter (D50) measured at 25°C using a concentrated particle diameter analyzer (manufactured by Otsuka Electronics Co., Ltd., model: FPAR-1000).

The ink composition according to this embodiment may contain a bright pigment as a pigment. Examples of bright pigments include metal-containing bright pigments that are at least one of simple metals such as aluminum, silver, gold, nickel, chromium, tin, zinc, indium, titanium, copper, and the like; metal compounds; alloys and mixtures thereof; pearlescent pigments having pearlescent luster or interference luster, such as mica, fish scale foil, bismuth acid chloride, silicon dioxide, metal oxides, metallic compounds, and laminated layers thereof.

When the aqueous ink composition according to this embodiment contains a bright pigment, it is preferable that the bright pigment is plate-like (also expressed as fine plate-like, scale-like, and the like). Thereby, a more suitable metallic gloss can be imparted to the object.

When the aqueous ink composition according to this embodiment contains coloring materials (including dyes, pigments, and bright pigments), the content of the coloring material is not particularly limited, but is 0.05% by mass or more, more preferably 0.08% by mass or more and the further more preferably 0.1% by mass or more with respect to the total amount of the aqueous ink composition. When the aqueous ink composition according to the present embodiment contains a coloring material, the content of the coloring material is preferably 20.0% by mass or less, and 17.0% by mass or less, and even more preferably 15.0% by mass or less with respect to the total amount of the aqueous ink composition. The content range of the coloring material is preferably 0.05% by mass or more and 20.0% by mass or less, more preferably 0.08% by mass or more and 17.0% by mass or less, and 0.1% by mass or more and 15.0% by mass or less with respect to the total amount of the aqueous ink composition. When the content of the coloring material is in the range of 0.05% by mass or more or 20.0% by mass or less, the dispersion stability of the coloring material and the coloring power can be excellently balanced.

[Pigment dispersant]

The aqueous ink composition according to this embodiment may contain a pigment dispersant together with the pigment. Herein, the pigment dispersant refers to a resin or a surfactant that has the function of improving the dispersibility of the pigment within the ink when it is attached to a part of the surface of the pigment.

The pigment dispersant that can be used in the aqueous ink composition according to this embodiment is not particularly limited. For example, cationic, anionic, nonionic, amphoteric, silicone (silicon), and fluorine-based surfactants can be used. Among the surfactants, polymer surfactants (polymer dispersants) such as those exemplified below are preferable.

As the pigment dispersant that can be used in the aqueous ink composition according to this embodiment, a water-soluble polymer dispersant can be preferably used. Examples of the water-soluble polymer dispersants include dispersants including polyester-based, polyacrylic-based, polyurethane-based, polyamine-based, polycaptolactone-based main chains, and side chains having a polar group such as an amino group, a carboxyl group, a sulfo group, and a hydroxy group. Examples include (co)polymers of unsaturated carboxylic esters such as polyacrylic esters; copolymers of aromatic vinyl compounds such as styrene and $\alpha$-methylstyrene and unsaturated carboxylic esters such as acrylic esters; (partial) amine salts, (partial) ammonium salts and (partial) alkylamine salts of (co)polymers of unsaturated carboxylic acids such as polyacrylic acid; (co)polymers of hydroxyl group-containing unsaturated carboxylic acid esters such as hydroxyl group-containing polyacrylic esters and modified products thereof; polyurethanes; unsaturated polyamides; polysiloxanes; long-chain polyaminoamide phosphates; amides obtained by reaction between polyethyleneimine derivatives (poly(lower alkylene imine) and polyesters containing free carboxyl groups and their bases); polyallylamine derivatives (reaction products obtained by reacting polyallylamine with one or more compounds selected from three types of compounds that are polyester having a free carboxyl group, polyamide, and co-condensates of ester and amide (polyesteramides)), and the like. Among them, water-soluble polymer dispersants containing (meth) acrylic resins are preferable from the viewpoint of dispersion stability of the ink and image clarity of printed product.

Specific examples of the water-soluble polymer dispersants include SMA1440, SMA2625, SMA17352, SMA3840, SMA1000, SMA2000, SMA3000 manufactured by Cray Valley, JONCRYL67, JONCRYL678, JONCRYL586, JONCRYL611, JONCRYL680, JONCRYL682, JONCRYL690, JONCRYL819, JONCRYL-JDX5050, EFKA4550, EFKA4560, EFKA4585, EFKA5220, EFKA6230, Dispex Ultra PX4575 manufactured by BASF Japan, SOLSPERSE20000, SOLSPERSE27000, SOLSPERSE40000, SOLSPERSE41000, SOLSPERSE41090, SOLSPERSE43000, SOLSPERSE44000, SOLSPERSE45000, SOLSPERSE46000, SOLSPERSE47000, SOLSPERSE53095, SOLSPERSE54000, SOLSPERSE64000, SOLSPERSE65000, SOLSPERSE66000, SOLSPERSE J400, SOLSPERSE W100, SOLSPERSE W200, SOLSPERSE W320, and SOLSPERSE WV400 manufactured by Lubrizol, ANTI-TERRA-250, BYKJET-9150, BYKJET-9151, BYKJET-9152, BYKJET-9170, DISPERBYK-102, DISPERBYK-168, DISPERBYK-180, DISPERBYK-184, DISPERBYK-185, DISPERBYK-187, DISPERBYK-190, DISPERBYK-191, DISPERBYK-193, DISPERBYK-194N, DISPERBYK-198, DISPERBYK-199, DISPERBYK-2010, DISPERBYK-2012, DISPERBYK-2013 , DISPERBYK-2014, DISPERBYK-2015, DISPERBYK-2018, DISPERBYK-2019, DISPERBYK-2023, DISPERBYK-2026, DISPERBYK-2055, DISPERBYK-2060, DISPERBYK-2061, DISPERBYK-2081, DISPERBYK-2096, DISPERBYK-2157, DISPERBYK-2158, DISPERBYK-2159, DISPERBYK-2190, DISPERBYK-2200, DISPERBYK-2290, DISPERBYK-2291 manufactured by BYK, TEGO DISPERS650, TEGO DISPERS651, TEGO DISPERS652, TEGO DISPERS655, TEGO DISPERS660C, TEGO DISPERS670, TEGO DISPERS715W, TEGO DISPERS740W, TEGO DISPERS741W, TEGO DISPERS750W, TEGO DISPERS752W, TEGO DISPERS755W, TEGO DISPERS757W, TEGO DISPERS760W, TEGO DISPERS761W, TEGO DISPERS765W, ZETASPER SE170, ZETASPERSE179, ZETASPERSE182, ZETASPERSE3100, ZETASPERSE3400, ZETASPERSE3700, ZETASPERSE3800 manufactured by Evonik Industries, SN Dispersant 2010, SN Dispersant 2060, SN Dispersant 4215, SN Dispersant 5027, SN Dispersant 5029, SN Dispersant 5034, SN Dispersant 5468, Nopcol 5200, Nopcosant K, Nopcosant R, Nopcospers 44-C, Nopcosperse 6100, Nopcosperse 6150 manufactured by SAN NOPCO LIMITED, and the like. These pigment dispersants can be suitably used in the aqueous ink composition according to this embodiment.

[Cationic or anionic compound]

The aqueous ink composition according to this embodiment may contain a cationic or anionic compound. The aqueous ink composition according to this embodiment does not necessarily contain a cationic or anionic compound, but by containing a cationic or anionic compound, the aqueous ink composition according to this embodiment can be a receiving liquid (pretreatment solution). In general, the coloring material included in the coloring ink is anionic, and by applying a receiving liquid (pretreatment liquid) containing a cationic compound to the base material before applying the coloring ink to the base material, the cationic compound makes it possible to aggregate the coloring material, thereby suppressing bleeding of the coloring ink. In addition, if the coloring material contained in the coloring ink is cationic, a receiving liquid (pretreatment liquid) including an anionic compound can be applied to the base material prior to applying the coloring ink to the base material, and the anionic compound makes it possible to aggregate the coloring material, thereby suppressing bleeding of the coloring ink.

Examples of the cationic compounds can include cationic resins and polyvalent metal salts (multivalent metal ions).

The cationic resin can be synthesized by known methods, or commercially available products can be used. Examples of commercially available products include APC-810, 815; D-6010, 6020, 6030, 6040, 6050, 6060, 6080, 6310; DEC-50, 53, 56, 65; FL-14, 42, 44LF, 61, 2099, 2250,2273, 2350, 2550, 2565, 2599, 2650, 2850, 2949, 3050, 3150, 4340, 4420, 4440, 4450, 4520, 4530, 4535, 4540, 4620, 4820; FQP-1264; RSL-18-22, 4071H, 4400, 8391, 8391H, HD70C, HF70D; WS-72 (manufactured by SNF), Arafix 100, 251S, 255, 255LOX (manufactured by Arakawa Chemical), DK-6810, 6853, 6885; WS-4010, 4011, 4020, 4024, 4027, 4030 (manufactured by Seiko PMC), Senka F-300; Papiogen P-105, P-113, P-271, P-316; Pitchnol QG5A; Miliogen P-20; Unisense FPA100L, FPA101L, FPA102L, FPA1000L, FPA1001L, FPA100LU, FPA102LU, FPA1000LU; Unisense FCA1000L, FCA1001L, FCA1002L, FCA1003L, FCA5000L; Unisense KCA100L, KCA100LU, KCA1000LU, KCA1001LU; Unisense KHE100L, KHE101L, KHE102L, E104L, KHE105L, KHE107L, KHE1000L, KHE1001L; Unisense KHP10P, KHP11L, KHP10LU, KHP11LU, KHP12LU, KHP20LU; Unisense KHF10L, KHF11L; Unisense FPV1000L, FPV1000LU; Unisense FCV1000L; Unisense ZCA1000L, ZCA1001L, ZCA1002L, ZCA5000L; Unisense KPV100LU, KPV1000LU (manufactured by Senka), Paralock 410K101, 410K111, 420K308, 420K300, 460K313, 460K318, 470K308, 480K300, 490K300, 490K309, 500K30E, 500K40E, 59D, 920AP500, 975AP500, PD700, PD714L, PD714S, P600, (manufactured by Asada Chemical **Co.,** Ltd.), Sumirez Resin 650(30), 675A, 6615, SLX-1 (manufactured by Taoka Chemical Industry **Co.,** Ltd.), EP-1137; MZ-477, 480; NS-310X, 625XC (manufactured by Takamatsu Oil and Fat **Co.,** Ltd.), PAA-D11-HCL, D19-HCL, D41-HCL, D19A; PAA-HCL-03, 05, 3L, 10L; PAA-1112CL, 21CL, AC5050A, N5050CL, SA; PAS-A-1, 5; PAS-H-1L, 5L, 10L; PAS-J-81, 81L; PAS-M-1, 1A, 1L; PAS-21, 21CL, 22SA-40, 24, 92, 92A, 880, 2201CL, 2401 (manufactured by Nittobo Medical), PP-17 (manufactured by Meisei Chemical Works, LTD.); Catiomaster PD-1, 7, 30, A, PDT-2, PE-10, PE-30, DT-EH, EPA-SK01, TMHMDA-E (manufactured by Yokkaichi Chemical Co., Ltd.), Jet Fix 36N, 38A, 5052 (manufactured by Satoda Kako Co., Ltd.), Movinyl 3500, 6910, 6940, 6950, 6951, 7820 (manufactured by Japan Coating Resin Co., Ltd.), CTW-113S, WEM-505C, WBR-2122C (manufactured by Taisei Fine Chemical Co., Ltd.), AP-1350, AE-803, AE-821, AM-3500 (manufactured by Resonac), Hydran CP-7050, and CP-7520 (manufactured by DIC), and the like.

Note here that the cationic resin may exist in the aqueous ink composition in a dissolved state or in a dispersed state as a polymer fine particle dispersion.

Examples of the metal salt include polyvalent metal salts including an ion of a polyvalent metal with a valence of at least two or more and an anion. Examples of polyvalent metal ions include calcium ions, magnesium ions, aluminum ions, titanium ions, iron (II) ions, iron (III) ions, cobalt ions, nickel ions, copper ions, zinc ions, barium ions, strontium ions, and the like. Among them, it is preferable to contain one or more ions selected from calcium ions, magnesium ions, nickel ions, zinc ions, and aluminum ions because they have a large interaction with the coloring material in the ink composition and is highly effective in suppressing bleeding and unevenness.

The anion may be an inorganic anion or an organic anion. Specific examples of organic anions include anions such as acetic acid, benzoic acid, salicylic acid, 2,4-dihydroxybenzoic acid, 2,5-dihydroxybenzoic acid, dimethylolpropionic acid, pantothenic acid, succinic acid, maleic acid, glutaric acid, suberic acid, trimellitic acid, and methylmalonic acid. Specific examples of inorganic anions include chloride ions, bromide ions, nitrate ions, sulfate ions, and the like.

The content of the cationic or anionic compound is not particularly limited, but the lower limit of the content of the cationic or anionic compound is preferably in the range of 0.1% by mass or more, more preferably within 0.8% by mass or more, and further more preferably in the range of 1.0% by mass or more with respect to the total amount of the aqueous ink composition. When the content of the cationic or anionic compound is in the range of 0.1% by mass or more with respect to the total amount of the aqueous ink composition, the coloring material can be fixed more effectively, and the bleeding of the coloring ink can be reduced. The upper limit of the content of the cationic or anionic compound is preferably in the range of 15% by mass or less, more preferably in the range of 8% by mass or less, and further more preferably in the range of 7% by mass or less with respect to the total amount of the aqueous ink composition. When the content of the cationic or anionic compound is in the range of 15% by mass or less with respect to the total amount of the aqueous ink composition, the storage stability and ejection stability of the aqueous ink composition are improved. The content of the cationic or anionic compound is preferably in the range of 0.1% by mass or more and 15% by mass or less, more preferably in the range of 0.8% by mass or more and 8% by mass or less, and further more preferably in the range of 1.0% by mass or more and 7% by mass or less with respect to the total amount of the aqueous ink composition.

[Leveling agent]

The aqueous ink according to this embodiment may contain a leveling agent as a surfactant different from the emulsifier and pigment dispersant contained in the above-mentioned polymer. When the leveling agent is contained, the surface tension of the aqueous ink composition can be controlled within an appropriate range. Examples of the leveling agents include, but not limited to, anionic surfactants, nonionic surfactants, silicone (silicon) surfactants, fluorine surfactants, acetylene glycol surfactants, and the like, from the viewpoint that excellent adjusting property of the surface tension can be obtained.

Specific examples include Emar, Latemul, Perex, Neoperex, Demol (all anionic surfactants; manufactured by Kao Corporation), Sunnol, Liporan, Ripon, and Ripal (all anionic surfactants; manufactured by Lion Corporation), Neugen, Epan, and Sorgen (all nonionic surfactants; manufactured by Dai-Ichi Kogyo Seiyaku Co., Ltd.), Emulgen, Amit, and Emazol (all nonionic surfactants; manufactured by Kao Corporation), Naroacty, Emulmin, and Sanonic (all nonionic surfactants; manufactured by Sanyo Chemical Industries, Ltd.), Surfynol 104, 82, 420, 440, 465, 485, TG, 2502, SE-F, 107L, Dynol 360, Dynol 604, Dynol 607 (all acetylene glycol surfactants; manufactured by Evonik), Dynol 960 (a blend of acetylene glycol and silicon surfactants; manufactured by Evonik), Surfynol AD01 (alkane glycol surfactants; manufactured by Evonik), Olfin E1004, E1010, PD004, and EXP4300 (all acetylene glycol surfactants; manufactured by Nissin Chemical Industry Co., Ltd.), Megafac (fluorine surfactants; manufactured by DIC Corporation), Surflon (fluorine surfactant; manufactured by AGC Seimi Chemical Co., Ltd.), BYK302, 306, 307, 331, 333, 345, 346, 347, 348, 349, 3420, 3450, 3451, 3455, and 3456 (all silicone surfactant; manufactured by Bikkemie Co., Ltd.), KP-110, 112, 323, 341, and 6004 (all silicone (silicon) surfactants; manufactured by Shin-Etsu Chemical Co., Ltd.), Silface SAG002, Silface SAG005, Silface SAG008, Silface SAG014, Silface SAG503A, Silface SJM-002, and Silface SJM-003 (all silicone (silicon) surfactants; manufactured by Nissin Chemical Industry Co., Ltd.), TEGO FLOW 425, TEGO Glide 100, 110, 130, 410, 432, 440, 450, 482, 490, 492, 494, 496, ZG400, TEGO Twin 4000, TEGO Twin 4100, TEGO Twin 4200, TEGO Wet 240, KL245, 250, 260, 265, 270, 280 (all silicone (silicon) surfactants; manufactured by Evonik), TEGO Wet 500, 505, 510, 520 (all nonionic surfactants; manufactured by Evonik), and the like.

The content of the leveling agent is not particularly limited, but the lower limit of the content of the leveling agent is preferably in the range of 0.30% by mass or more, more preferably in the range of 0.40% by mass or more, and further more preferably 0.50% by mass or more with respect to the total amount of the aqueous ink composition. The upper limit of the content of the leveling agent is preferably in the range of 5.0% by mass or less, more preferably in the range of 4.0% by mass or less, and further more preferably 3.0% by mass or less with respect to the total amount of the aqueous ink composition. The content of the leveling agent is preferably in the range of 0.30% by mass or more and 5.0% by mass or less, 0.40% by mass or more and 4.0% by mass or less, and further more preferably in the range of 0.50% by mass or more and 3.0% by mass or less with respect to the total amount of the aqueous ink composition.

[Other components]

The aqueous ink composition may further include conventionally known additives, as necessary. Examples of the additives include waxes, viscosity modifiers, pH adjusting agents, antioxidants, preservatives, antifungal agents, and the like.

<Method for preparing aqueous ink composition>

The method for preparing an aqueous ink composition is not particularly limited, and examples of the method include a method for preparing by adding a self-dispersing pigment, a resin, a surfactant, and other components as necessary to a water-soluble solvent; a method for preparing by adding a pigment and a dispersant to a water-soluble solvent and dispersing thereof, and then adding a resin, a surfactant, and other components as necessary, a method for preparing by adding a pigment, a resin, and a surfactant, and other components as necessary to a water-soluble solvent, and then dispersing the pigment, and the like.

The method of applying the aqueous ink composition according to this embodiment onto the surface of the base material is a method for inkjet ejection by ink jet method. With the inkjet method, it is possible to form a desired image by ejection in an arbitrary position on the electron.

The surface tension of the aqueous ink composition is not particularly limited, but the upper limit of the surface tension at 25°C of the nonaqueous ink composition according to this embodiment is preferably 40.0 mN/m or less, more preferably 35.0 mN/m or less, and further more preferably 32.0 mN/m or less. The lower limit of the surface tension at 25°C of the nonaqueous ink composition according to this embodiment is preferably 17.0 mN/m or more, more preferably 18.0 mN/m or more, and even more preferably 19.0 mN/m or more. The surface tension range of the resin composition according to this embodiment at 25°C is preferably 17.0 mN/m or more and 40.0 mN/m or less, more preferably 18.0 mN/m or more and 35.0 mN/m or less, and further more preferably 19.0 mN/m or more and 32.0 mN/m or less.

<<2. Ink set>>

The above aqueous ink composition may be a coloring ink, a metallic ink, and the like, a receiving liquid including a cationic compound, or may be a clear ink that does not contain a coloring material, or may be an overcoat ink. The ink set according to this embodiment may be a combination of these ink compositions.

In the ink set according to this embodiment, it is required that at least one aqueous ink composition included in the ink set is an aqueous ink composition containing a polymer including certain monomer as a constituent unit. For example, in an ink set including aqueous ink composition A and an aqueous ink composition B, the aqueous ink composition A is an aqueous ink composition containing a polymer including the above certain monomer as a constituent unit, and the aqueous ink composition B may be a different aqueous ink composition from an aqueous ink composition containing a polymer including the above certain monomer as a constituent unit. Furthermore, both the composition A and the aqueous ink composition B may be aqueous ink compositions containing a polymer including the above certain monomer as a constituent unit. The same is true to ink sets including three or more types of aqueous ink composition.

Examples of the ink set according to this embodiment include an ink set including a coloring ink composition containing a coloring material and a receiving liquid (pretreatment liquid) including a cationic compound, and an ink set including a coloring ink composition containing a coloring material, a receiving liquid (pretreatment liquid) including a cationic compound, and an overcoat ink, and an ink set including a coloring ink composition containing a coloring material and an overcoat ink.

Furthermore, the ink set may be a combination of coloring ink compositions containing a coloring material, or the ink set may be a combination of a plurality of ink compositions that combines coloring ink compositions, for example, an ink set may be a combination of a plurality of ink compositions such as coloring ink compositions of yellow, magenta, cyan, black, and intermediate colors thereof (for example, orange ink, green ink, blue ink, violet ink, red ink) or light colors (for example, light magenta ink, light cyan ink, light black ink). Furthermore, an ink set may be an ink set including a white ink composition containing a white coloring material, a yellow ink composition, a magenta ink composition, a cyan ink composition, and a black ink composition, or may be an ink set including a white ink composition containing a white coloring material, a yellow ink composition, a magenta ink composition, a cyan ink composition, a black ink composition, and an intermediate color ink composition of yellow, magenta, cyan, or black or a light color ink composition. In addition, an ink set may be an ink set including a metallic ink including a bright pigment, a yellow ink composition, a magenta ink composition, a cyan ink composition, and a black ink composition, or may be an ink set including a metallic ink including a bright pigment, a yellow ink composition, a magenta ink composition, a cyan ink composition, a black ink composition, and an intermediate color ink composition of yellow, magenta, cyan, and black, or a light color ink composition.

<<3. Recording method>>

The recording method according to this embodiment is a recording method of coating a base material with the above aqueous ink composition containing a polymer including a certain monomer as a constituent unit by an inkjet method.

The above aqueous ink composition containing a polymer including a certain monomer as a constituent unit has high storage stability, so it is possible to coat a base material with the aqueous ink composition while high ejection stability is maintained.

Furthermore, the recording method according to this embodiment preferably includes an ejecting step of inkjet ejecting the above aqueous ink composition containing a polymer including a specific monomer as a constituent unit onto the surface of a surface-treated resin base material. The above aqueous ink composition containing a polymer including a certain monomer as a constituent unit can form a coating film with high adhesion to various base materials, but when the base material is subjected to surface treatment, a coating film with even higher adhesion to the base material can be formed.

Examples of this surface treatment method include surface treatments such as corona treatment, flame treatment, plasma treatment, blaze treatment, ultraviolet irradiation treatment, chromic acid treatment, silane coupling treatment. Two or more surface treatments may be combined.

The base material is not particularly limited, but it is preferably a resin base material, and particularly preferably an olefin resin. The olefin resin may be unstretched or may be stretched such as uniaxially stretched, biaxially stretched, or the like.

Furthermore, the recording method according to this embodiment may include a drying step of drying the aqueous ink composition applied on the surface of the base material. Thereby, the heating temperature during printing can be adjusted and the productivity of recorded matter can be improved.

Examples of methods for drying the aqueous ink composition applied on the surface of the base material include methods for drying using a heating mechanism such as a pre-heater, a platen heater, and an after-heater provided in an inkjet recording device, or may be a blower mechanism that blows hot air or room temperature air to the surface of the recorded matter, or may be a radiation mechanism of irradiating a surface of the recorded matter with infrared rays or the like. Furthermore, a plurality of these heating mechanisms may be combined.

Specifically, in the recording method according to this embodiment, drying is carried out so that the surface of the recorded matter is a temperature of 110°C or less, more preferably 90°C or less, and further more preferably 70°C or lower. Furthermore, drying is carried out so that the surface of the recorded matter is a temperature of 30°C or higher, more preferably 35°C or higher, and further more preferably a temperature of 40°C or higher. In the recording method according to this embodiment, drying is carried out so that the surface of the recorded matter is a temperature of 30°C or higher and 110°C or lower, more preferably 35°C or higher and 90°C or lower, and further more preferably 40°C or higher and 70°C or lower.

Furthermore, the inkjet ejecting method of the above aqueous ink composition containing a polymer including a specific monomer as a constituent unit may be a piezo method, a thermal method, an electrostatic method, and the like.

<<4. Method for producing recorded matter>>

The above-mentioned recording method may also be defined as a method for producing recorded matter in which the above-mentioned aqueous ink composition containing a polymer including a certain of monomers as a constituent unit is applied onto a base material by an inkjet method.

<<5. Recorded matter>>

Each layer constituting the recorded matter produced by the method for producing the recorded matter of the above embodiment will be described. Specifically, recorded matter includes the above-mentioned aqueous ink composition containing a polymer including a certain monomer as a constituent unit or the aqueous ink composition included in the above-mentioned ink set applied on the base material. Hereinafter, a medium (recording medium) and an aqueous ink composition layer constituting the recorded matter will be described.

The base material (recording medium) included in the recorded matter according to this embodiment is not particularly limited, and various types of base materials can be used, and non-absorbent base materials such as a resin base material, a metal plate, and glass, or absorbent base materials such as paper and cloth, or surface-coated base materials such as a base material having a receiving layer, may be used.

Non-absorbent base materials include resin base materials such as polyester resin, polypropylene synthetic paper, polypropylene resin, polyethylene resin, acrylic resin, styrene resin, polycarbonate resin, ABS resin, vinyl chloride resin, and polyimide resin, and metal, metal foil coated paper, glass, synthetic rubber, and natural rubber, and the like.

Since the above-mentioned aqueous ink composition containing a polymer including a certain monomer as a constituent unit can form a coating film with high adhesion even to olefin resins, the base material (recording medium) is preferably olefin resin. Among these, particularly high adhesion is exhibited to the surfaces of olefin resins that have been subjected to surface treatment such as corona treatment, flame treatment, plasma treatment, blaze treatment, ultraviolet irradiation treatment, chromic acid treatment, and silane coupling treatment. Note here that the olefin resin may be unstretched or may be stretched, for example, uniaxially stretched, biaxially stretched, or the like.

Examples of the absorbent base material include woody paper, medium-quality paper, high-quality paper, synthetic paper, cotton, synthetic fabric, silk, hemp, fabric, nonwoven fabric, leather, and the like.

Examples of the surface-coated base material include coated paper, art paper, cast paper, lightweight coated paper, lightly coated paper, and the like.

[Layer of aqueous ink composition]

A layer of an aqueous ink composition is a layer formed by volatilization of the solvent (water or water-soluble organic solvent) included in the above-mentioned aqueous ink composition containing a polymer including a certain monomer as a constituent unit. For example, when the aqueous ink composition contains a coloring material, the layer becomes a decorative layer or a base layer thereof for forming a desired image.

Furthermore, when the above-mentioned aqueous ink composition containing a polymer including a certain monomer as a constituent unit is a receiving liquid including a cationic compound, the above-mentioned aqueous ink composition (a receiving liquid) containing a polymer including a certain monomer as a constituent unit may be applied on the base material, and the above-mentioned aqueous ink composition (coloring ink) containing a polymer including a certain monomer as a constituent unit may be applied thereon, or the above aqueous ink composition (receiving liquid) containing a polymer including a certain monomer as a constituent unit may be applied on the base material, and then an ink composition that is different from the above-mentioned aqueous ink composition (coloring ink) containing a polymer including a certain monomer as a constituent unit may be applied thereon.

Furthermore, when the above-mentioned aqueous ink composition containing a polymer including a certain monomer as a constituent unit is an overcoat ink, an overcoat layer is formed on the surface of the recorded matter. Note here that in this case, the ink composition forming the recording layer of the recorded matter may be the above-mentioned aqueous ink composition containing a polymer including a certain monomer as a constituent unit, or an ink composition that is different from the above-mentioned aqueous ink composition containing a polymer including a certain monomer as a constituent unit.

<<6. Inkjet recording device>>

An inkjet recording device according to this embodiment is an inkjet recording device including a storage container (ink ejecting mechanism) filled with the abovementioned aqueous ink composition containing a polymer including a certain monomer as a constituent unit or an ink composition included in the above ink set.

Note here that the storage container provided in the inkjet recording device is not particularly limited, and examples thereof include containers such as ink bottles, pouches, bag-in-boxes, and drums. Further, these containers may be further housed in a cartridge or the like. The material of the storage container is not particularly limited, and may be made of conventionally known resin, or may be made of a material including some metal material (for example, an aluminum pouch with an aluminum vapor deposition layer).

Furthermore, this device preferably includes a drying mechanism that dries the ink composition after the ink composition is ejected. This makes it possible to adjust the surface temperature of the recorded matter during printing and to effectively remove volatile components contained in each ink composition.

The drying mechanism is not particularly limited as long as it can dry a medium to be recorded, but the preferable examples include a heater such as a pre-heater, platen heater, and an after-heater, radiation irradiation, or a blower mechanism (hot air, room temperature air, and the like). Furthermore, mechanism including a combination a plurality of these heating mechanisms may be used.

Furthermore, the ejection method in each ejection section may be any method such as a piezo method, a thermal method, or an electrostatic method.

EXAMPLES

Hereinafter, the present invention will be described in more detail with reference to Examples, but the present invention is not limited to these descriptions in any way.

1. Synthesis of polymer fine particle dispersion

[Example 1]

A mixture including 92.6 parts of cyclohexyl methacrylate and 13.1 parts of dimethylamino ethylbenzoate methacrylate was added in an aqueous solution in which 2.0 parts of "Emulgen A-90 (manufactured by Kao Corporation; nonionic surfactant, solid content 100%)" and 6.2 parts of "Sanisol B-50 (manufactured by Kao Corporation; cationic surfactant, solid content 50%)" were dissolved in 40.0 parts of water (deionized water), and the mixture solution was stirred to produce an emulsified monomer composition.

Next, to a glass reaction vessel provided with a thermometer, a stirrer, a reflux condenser, a nitrogen introduction tube, and a dropping funnel, 190.0 parts of water (deionized water) and 4.1 parts of "Sanisol B-50 (manufactured by Kao Corporation; cationic surfactant, solid content 50%)" were charged and stirred to dissolve, and heated to 73°C. To the obtained mixture solution, 5% by mass of the emulsified monomer was added and stirred, and 0.5 parts of a 15% aqueous solution of 2,2-azobis(2-diaminopropane)dihydrochloride was added to the reaction vessel to perform an initial polymerization reaction. Thereafter, the temperature was raised to 80°C, and while the temperature was maintained, 1.2 parts of a 14% aqueous solution of 2,2-azobis(2-diaminopropane)dihydrochloride and the remaining emulsified monomer composition were added dropwise over 4 hours to allow a polymerization reaction to proceed. After completion of the dropwise addition, the reaction was allowed to mature for 1 hour. Thereafter, the mixture was cooled to room temperature to obtain a polymer fine particle dispersion.

[Examples 4 to 8, 12, 16 to 17]

Polymer fine particle dispersion products were obtained in the same manner as in Example 1 except that the types of monomers and blending amounts were changed as shown in the table below.

[Example 2]

A mixture including 92.6 parts of cyclohexyl methacrylate and 13.1 parts of dimethylamino ethylbenzoate methacrylate was added to an aqueous solution in which 6.5 parts of "Emulgen A-90 (manufactured by Kao Corporation; nonionic surfactant, solid content 100%)" were dissolved in 40.0 parts of water (deionized water), and the obtained mixture solution was stirred to produce an emulsified monomer composition.

Next, to a glass reaction vessel provided with a thermometer, a stirrer, a reflux condenser, a nitrogen introduction tube, and a dropping funnel, 190.0 parts of water (deionized water) and 6.5 parts of "Emulgen A-90 (manufactured by Kao Corporation; nonionic surfactant, solid content 100%)" were charged and stirred to dissolve, and the temperature was raised to 73°C. To the obtained mixture solution, 5% by mass of the emulsified monomer was added and stirred, and 0.5 parts of a 15% aqueous solution of 2,2-azobis(2-diaminopropane)dihydrochloride were added to the reaction vessel to cause an initial polymerization reaction. Thereafter, the temperature was raised to 80°C. While the temperature was maintained, 1.2 parts of a 14% aqueous solution of 2,2-azobis(2-diaminopropane)dihydrochloride and the remaining above emulsifying monomer composition were added dropwise over 4 hours to allow the polymerization reaction to proceed. After completion of the dropwise addition, the reaction was allowed to mature for 1 hour. Thereafter, the mixture was cooled to room temperature to obtain a polymer fine particle dispersion.

[Example 3]

A polymer fine particle dispersion was obtained in the same manner as in Example 2 except that the types and blending amounts of monomers were changed as shown in the table below in Example 2.

[Example 9]

A mixture including 92.6 parts of cyclohexyl methacrylate and 13.1 parts of dimethylamino ethylbenzoate methacrylate was added to an aqueous solution in which 6.5 parts of "LATEMUL PD-420 (manufactured by Kao Corporation; reactive surfactant, solid content 100%)" were dissolved in 40.0 parts of water (deionized water), and the obtained mixture solution was stirred to produce an emulsified monomer composition.

Next, to a glass reaction vessel provided with a thermometer, a stirrer, a reflux condenser, a nitrogen introduction tube, and a dropping funnel, 190.0 parts of water (deionized water) and 6.5 parts of "LATEMUL PD-420 (manufactured by Kao Corporation; reactive surfactant, solid content 100%)" were charged and stirred to dissolve, and heated to 73°C. To the obtained mixture solution, 5% by mass of the emulsified monomer was added and stirred, and 0.5 parts of a 15% aqueous solution of 2,2-azobis(2-diaminopropane)dihydrochloride were added to the reaction vessel to cause an initial polymerization reaction. Thereafter, the temperature was raised to 80°C. While the temperature was maintained, 1.2 parts of a 14% aqueous solution of 2,2-azobis(2-diaminopropane)dihydrochloride and the remaining emulsified monomer composition were added dropwise over 4 hours to allow the polymerization reaction to proceed. After completion of the dropwise addition, the reaction was allowed to mature for 1 hour. Thereafter, the mixture was cooled to room temperature to obtain a polymer fine particle dispersion.

[Example 10]

A mixture including 91.6 parts of cyclohexyl methacrylate, 1.0 parts of 2-(acryloylamino)-2-methyl-4-pentanone, and 13.1 parts of dimethylamino ethylbenzoate methacrylate was added in an aqueous solution in which 2.0 parts of "Emulgen A-90 (manufactured by Kao Corporation; nonionic surfactant, solid content 100%)" and 6.2 parts of "Sanisol B-50 (manufactured by Kao Corporation; cationic surfactant, solid content 50%)" were dissolved in 40.0 parts of water (deionized water), and the obtained mixture solution was stirred to produce an emulsified monomer composition.

Next, to a glass reaction vessel provided with a thermometer, a stirrer, a reflux condenser, a nitrogen introduction tube, and a dropping funnel, 190.0 parts of water (deionized water) and 4.1 parts of "Sanisol B-50 (manufactured by Kao Corporation; cationic surfactant, solid content 50%)" were charged and stirred to dissolve and heated to 73°C. To the obtained mixture solution, 5% by mass of the above emulsified monomer was added and stirred, and 0.5 parts of a 15% aqueous solution of 2,2-azobis(2-diaminopropane)dihydrochloride was added to the reaction vessel to perform an initial polymerization reaction. Thereafter, the temperature was raised to 80°C, and while the temperature was maintained, 1.2 parts of a 14% aqueous solution of 2,2-azobis(2-diaminopropane)dihydrochloride and the remaining emulsified monomer composition were added dropwise over 4 hours to allow the polymerization reaction to proceed. After completion of the dropwise addition, the reaction was allowed to mature for 1 hour. Thereafter, the mixture was cooled to room temperature, and 1 part of adipic acid dihydrazide was added and stirred to obtain a polymer fine particle dispersion.

[Example 11]

To an aqueous solution in which 2.0 parts of "Emulgen A-90 (manufactured by Kao Corporation; nonionic surfactant, solid content 100%)" and 6.2 parts of "Emarl 20CM (Kao Corporation; anionic surfactant, solid content 25%)" were dissolved in 41.0 parts of water (deionized water), 100 parts of vinylcyclohexane was added, and the obtained mixed solution was stirred to produce an emulsified monomer composition.

Next, to a glass reaction vessel provided with a thermometer, a stirrer, a reflux condenser, a nitrogen introduction tube, and a dropping funnel, 185.0 parts of water (deionized water) and 4.1 parts of "Emarl 20CM (Kao Corporation; anionic surfactant, solid content 25%)" were charged, and stirred to dissolve, and the temperature was raised to 73°C. To the obtained mixture solution, 5% by mass of the emulsified monomer was added and stirred, 1.4 parts 3% potassium persulfate was added to the reaction vessel to perform an initial polymerization reaction. Thereafter, the temperature was raised to 80°C, and while the temperature was maintained, 6.7 parts of 3% potassium persulfate and the remaining emulsified monomer composition were added dropwise over 4 hours to allow the polymerization reaction to proceed. After completion of the dropwise addition, the pH was adjusted to 8 using a 10% ammonia aqueous solution, and the reaction was matured for one hour. Thereafter, the mixture was cooled to room temperature to obtain a polymer fine particle dispersion.

[Examples 13, 18 to 21]

The polymer fine particle dispersion was obtained in the same manner as in Example 11 except that the types of monomers and blending amounts were changed as shown in the table below.

[Example 14]

To a reaction vessel provided with a cooling tube, an addition funnel, a nitrogen inlet, a mechanical stirrer, and a digital thermometer, 100.0 parts by mass of diethylene glycol ethyl methyl ether was charged, the temperature was raised to 95°C under a nitrogen atmosphere. and a solution in which 95.5 parts by mass of cyclohexyl methacrylate, 1.50 parts by mass of methacrylic acid, and 1.60 parts by mass of Perbutyl O (manufactured by NOF Corporation) were mixed was continuously added dropwise over 2 hours. Thereafter, the temperature was maintained at 95°C, and 0.50 parts by mass of Perbutyl O (manufactured by NOF Corporation) was added four times every 30 minutes after the completion of the dropwise addition. Thereafter, the mixture was matured for 3.5 hours and diluted by adding 77.5 parts by mass of diethylene glycol ethyl methyl ether. After dilution, a solution of resin 1 was obtained by cooling to room temperature. The weight average molecular weight, solid content, viscosity, and other physical properties of the coating film of resin 1 obtained are shown in the table below.

[Example 15]

To a reaction vessel provided with a cooling tube, an addition funnel, a nitrogen inlet, a mechanical stirrer, and a digital thermometer, 100.0 parts by mass of diethylene glycol monobutyl ether was charged, and the temperature was raised to 70°C under a nitrogen atmosphere. Thereafter, to a reaction vessel, a solution including 0.4 parts by mass of iodine, 1.6 parts by mass of 2,2'-azobis(isobutyronitrile), 69.0 parts by mass of cyclohexyl methacrylate, and 0.1 parts by mass of diphenylmethane was continuously mixed is added dropwise over 2 hours. Thereafter, the temperature was maintained at 70°C and maturing was performed for 3.5 hours to obtain an A chain. After cooling the obtained A chain solution to 60°C, 1.9 parts by mass of 2,2'-azobis(isobutyronitrile), 29.6 parts by mass of n-butyl methacrylate, and 1.5 parts by mass of methacrylic acid were added. Thereafter, the temperature was raised to 70°C, and polymerization was performed for 4 hours to form a B chain and obtain a block copolymer. Dilution was carried out by adding 133.3 parts by mass of water (deionized water). The obtained block copolymer solution was added dropwise at room temperature, the pH was adjusted to 8 using a 10% ammonia aqueous solution and the reaction was matured for 1 hour to obtain a polymer fine particle dispersion.

[Comparative Examples 1 and 2]

A polymer fine particle dispersion was obtained in the same manner as in Example 1 except that the types of monomers and blending amounts were changed as shown in the table below in Example 1.

2. Preparation of pigment dispersion

To 81.85 g of water (deionized water), 2.5 g of pigment dispersion resin ((meth)acrylic resin, weight average molecular weight 20000, acid value 143 mgKOH/g) and 0.6 g of N,N-dimethylaminoethanol were dissolved, and to the solution, 15 g of C.I. Pigment Blue 15:3 and 0.05 g of an antifoaming agent ("Surfynol 104PG" manufactured by Air Products) were added and dispersed in a paint shaker using zirconia beads to obtain a pigment dispersion.

3. Preparation of aqueous ink composition

(Preparation method of coloring ink)

An aqueous ink composition including 20% by mass of pigment dispersion, 25% by mass of the polymer fine particle dispersion (Examples 14, 15, 18 to 21, solid content concentration 30%), 25% by mass of 1,2-propanediol, 0.5% by mass of a polysiloxane compound, and 29.5% by mass of water (deionized water) was produced.

(Preparation method of receiving liquid)

An aqueous ink composition including 25% by mass of the polymer fine particle dispersion (Examples 1 to 13, 16, and 17, Comparative Examples 1 and 2, solid content concentration 30%), 9% by mass of 1,2-hexanediol, 25% by mass of 1,2-propanediol, 0.5% by mass of a polysiloxane compound, and 40.5% by mass of water (ionized water) was produced.

(Preparation of aqueous ink composition of Examples 22 to 27)

An aqueous ink composition (receiving liquid) including 25% by mass of polymer fine particle dispersions (Examples 22 to 27, solid content concentration 30%), 25% by mass of 1,2-hexanediol, 0.5% by mass of a polysiloxane compound, and water (deionized water) in a remaining amount was produced.

(Preparation of aqueous ink compositions of Examples 28 to 33)

An aqueous ink composition (receiving liquid) including 25% by mass of polymer fine particle dispersions (Examples 28 to 33, solid content concentration 30%), 25% by mass of N-N diethylformamide, 0.5% by mass of a polysiloxane compound, and water (deionized water) in a remaining amount was produced.

(Preparation of aqueous ink compositions of Examples 34 to 39)

An aqueous ink composition (receiving liquid) including 25% by mass of polymer fine particle dispersions (Examples 34 to 39, solid content concentration 30%), 20% by mass of 1,2-propanediol, 9% by mass of N-N-diethylformamide, and 0.5% by mass of polysiloxane, and water (deionized water) in a remaining amount was produced.

(Preparation of aqueous ink compositions of Examples 40 to 45)

An aqueous ink composition (receiving liquid) including 25% by mass of polymer fine particle dispersions (Examples 40 to 45, solid content concentration 30%), 25% by mass of 3-methoxy-1-butanol, 0.5% by mass of a polysiloxane compound, and water (deionized water) in a remaining amount was produced.

(Preparation of aqueous ink compositions of Examples 46 to 51)

An aqueous ink composition (receiving liquid) 25% by mass of polymer fine particle dispersion (Examples 46 to 51, solid content concentration 30%), 20% by mass of 1,2-propanediol, 9% by mass of 3-methoxy-1-butanol, and 0.5% by mass of a polysiloxane compound, and water (deionized water) in a remaining amount was produced.

(Preparation of aqueous ink compositions of Examples 52 to 57)

An aqueous ink composition (receiving liquid) including 25% by mass of polymer fine particle dispersion (Examples 52 to 57, solid content concentration 30%), 25% by mass of 2-pyrrolidone, 0.5% by mass of a polysiloxane compound, water (deionized water) in a remaining amount was produced.

(Preparation of aqueous ink compositions of Examples 58 to 63)

An aqueous ink composition (receiving liquid) including 25% by mass of polymer fine particle dispersion (Examples 58 to 63, solid content concentration 30%), 20% by mass of 1,2-propanediol, 9% by mass of 2-pyrrolidone, and 0.5% by mass of a polysiloxane compound, and water (deionized water) in a remaining amount was produced.

(Preparation of aqueous ink compositions of Examples 64 to 69)

An aqueous ink composition (receiving liquid) including 25% by mass of polymer fine particle dispersion (Examples 64 to 69, solid content concentration 30%), 25% by mass of 3-methyl-1,3-butanediol, 0.5% by mass of a polysiloxane compound, and water (deionized water) in a remaining amount of was prepared.

(Preparation of aqueous ink compositions of Examples 70 to 75)

An aqueous ink composition (receiving liquid) including 25% by mass of polymer fine particle dispersion (Examples 70 to 75 solid content concentration 30%), 20% by mass of 1,2-propanediol, 9% by mass of 3-methyl-1,3-butanediol, and 0.5% by mass of a polysiloxane compound and water (deionized water) in a remaining amount was produced.

(Preparation of aqueous ink compositions of Examples 76 to 81)

An aqueous ink composition (receiving liquid) including 25% by mass of polymer fine particle dispersion (Examples 76 to 81, solid content concentration 30%), 25% by mass of 3-methoxy-N,N-dimethylpropanamide, 0.5% by mass of a polysiloxane compound, water (deionized water) in a remaining amount was prepared.

(Preparation of aqueous ink compositions of Examples 82 to 87)

An aqueous ink composition (receiving liquid) including 25% by mass of polymer fine particle dispersion (Examples 82 to 87, solid content concentration 30%), 20% by mass of 1,2-propanediol, 9% by mass of 3-methoxy-N,N-dimethylpropanamide, 0.5% by mass of a siloxane compound, and water (deionized water) in a remaining amount was produced.

(Preparation of aqueous ink compositions of Examples 88 to 93)

An aqueous ink composition (receiving liquid) including 25% by mass of polymer fine particle dispersion (Examples 88 to 93, solid content concentration 30%), 25% by mass of 3-butoxy-N,N-dimethylpropanamide, 0.5% by mass of a polysiloxane compound, and water (deionized water) in a remaining amount was produced.

(Preparation of aqueous ink compositions of Examples 94 to 99)

An aqueous ink composition (receiving liquid) including 25% by mass of polymer fine particle dispersion (Examples 94 to 99, solid content concentration 30%), 20% by mass of 1,2-propanediol, 9% by mass of 3-butoxy-N,N-dimethylpropanamide, 0.5% by mass of a siloxane compound, and water (deionized water) in a remaining amount was produced.

(Preparation of aqueous ink compositions of Examples 100 to 105)

An aqueous ink composition (receiving liquid) including 25% by mass of polymer fine particle dispersion (Examples 100 to 105, solid content concentration 30%), 25% by mass of Texanol, 0.5% by mass of a polysiloxane compound, and water (deionized water) in a remaining amount was produced.

(Preparation of aqueous ink compositions of Examples 106 to 111)

An aqueous ink composition (receiving liquid) including 25% by mass of polymer fine particle dispersion (Examples 106 to 111, solid content concentration 30%), 20% by mass of 1,2-propanediol, 9% by mass of Texanol, 0.5% by mass of a polysiloxane compound, and water (deionized water) in a remaining amount was produced.

(Preparation of aqueous ink compositions of Examples 112 to 117)

An aqueous ink composition (receiving liquid) including 25% by mass of polymer fine particle dispersion (Examples 112 to 117 solid content concentration 30%), 25% by mass of $\gamma$-valerolactone, 0.5% by mass of a polysiloxane compound, and water (deionized water) in a remaining amount was produced.

(Preparation of aqueous ink compositions of Examples 118 to 123)

An aqueous ink composition (receiving liquid) including 25% by mass of polymer fine particle dispersion (Examples 118 to 123, solid content concentration 30%), 20% by mass of 1,2-propanediol, 9% by mass of $\gamma$-valerolactone, 0.5% by mass of a polysiloxane compound, and water (deionized water) in a remaining amount was produced.

(Preparation of aqueous ink compositions of Examples 124 to 129)

An aqueous ink composition (receiving liquid) including 25% by mass of polymer fine particle dispersion (Examples 124 to 129, solid content concentration 30%), 25% by mass of N-methyl-epsilon-caprolactam, 0.5% by mass of a polysiloxane compound, and water (deionized water) in a remaining amount was produced.

(Preparation of aqueous ink compositions of Examples 130 to 135)

An aqueous ink composition (receiving liquid) including 25% by mass of polymer fine particle dispersion (Examples 130 to 135, solid content concentration 30%), 20% by mass of 1,2-propanediol, 9% by mass of N-methyl-epsilon-caprolactam, 0.5% by mass of a polysiloxane compound, and water (deionized water) in a remaining amount was produced.

(Preparation of aqueous ink compositions of Examples 136 to 141)

An aqueous ink composition (receiving liquid) including 25% by mass of polymer fine particle dispersion (Examples 136 to 141, solid content concentration 30%), 25% by mass of 2-hydroxylethylmorpholine, 0.5% by mass of a polysiloxane compound, and water (deionized water) in a remaining amount was produced.

(Preparation of aqueous ink compositions of Examples 142 to 147)

An aqueous ink composition (receiving liquid) including 25% by mass of polymer fine particle dispersion (Examples 142 to 147, solid content concentration 30%), 20% by mass of 1,2-propanediol, 9% by mass of 2-hydroxylethylmorpholine, and 0.5% by mass of a polysiloxane compound, and water (deionized water) in a remaining amount was produced.

(Preparation of aqueous ink compositions of Examples 148 to 153)

An aqueous ink composition (receiving liquid) including 25% by mass of polymer fine particle dispersion (Examples 148 to 153, solid content concentration 30%), 25% by mass of 2-hydroxylethylpyrrolidone, 0.5% by mass of a polysiloxane compound, and water (deionized water) in a remaining amount was produced.

(Preparation of aqueous ink compositions of Examples 154 to 159)

An aqueous ink composition (receiving liquid) including 25% by mass of polymer fine particle dispersion (Examples 154 to 159, solid content concentration 30%), 20% by mass of 1,2-propanediol, 9% by mass of 2-hydroxylethylpyrrolidone, and 0.5% by mass of a polysiloxane compound, and water (deionized water) in a remaining amount was produced.

(Preparation of aqueous ink compositions of Examples 160 to 165)

An aqueous ink composition (receiving liquid) including 25% by mass of polymer fine particle dispersion (Examples 160 to 165, solid content concentration 30%), 25% by mass of tripropylene glycol monomethyl ether, 0.5% by mass of a polysiloxane compound, and water (deionized water) in a remaining amount was produced.

(Preparation of aqueous ink compositions of Examples 166 to 171)

An aqueous ink composition (receiving liquid) including 25% by mass of polymer fine particle dispersion (Examples 166 to 171, solid content concentration 30%), 20% by mass of 1,2-propanediol, 9% by mass of tripropylene glycol monomethyl ether, 0.5% by mass of a polysiloxane compound, and water (deionized water) in a remaining amount was produced.

(Preparation of aqueous ink compositions of Examples 172 to 177)

An aqueous ink composition (receiving liquid) including 25% by mass of polymer fine particle dispersion (Examples 172 to 177, solid content concentration 30%), 25% by mass of dipropylene glycol monomethyl ether, 0.5% by mass of a polysiloxane compound, and water (deionized water) in a remaining amount was produced.

(Preparation of aqueous ink compositions of Examples 178 to 183)

An aqueous ink composition (receiving liquid) including 25% by mass of polymer fine particle dispersion (Examples 178 to 183, solid content concentration 30%), 20% by mass of 1,2-propanediol, 9% by mass of dipropylene glycol monomethyl ether, and 0.5% by mass of a polysiloxane compound, and water (deionized water) in a remaining amount was produced.

(Preparation of aqueous ink compositions of Examples 184 to 189)

An aqueous ink composition (receiving liquid) including 25% by mass of polymer fine particle dispersion (Examples 184 to 189, solid content concentration 30%), 25% by mass of triethylene glycol monomethyl ether, 0.5% by mass of a polysiloxane compound, and water (deionized water) in a remaining amount was produced.

(Preparation of aqueous ink compositions of Examples 190 to 195)

An aqueous ink composition (receiving liquid) including 25% by mass of polymer fine particle dispersion (Examples 190 to 195, solid content concentration 30%), 20% by mass of 1,2-propanediol, 9% by mass of triethylene glycol monomethyl ether, and 0.5% by mass of a polysiloxane compound, and water (deionized water) in a remaining amount was produced.

(Preparation of aqueous ink compositions of Examples 196 to 201)

An aqueous ink composition (receiving liquid) including 25% by mass of polymer fine particle dispersion (Examples 196 to 201, solid content concentration 30%), 25% by mass of triethylene glycol monobutyl ether, 0.5% by mass of a polysiloxane compound, and water (deionized water) in a remaining amount was produced.

(Preparation of aqueous ink compositions of Examples 202 to 207)

An aqueous ink composition (receiving liquid) including 25% by mass of polymer fine particle dispersion (Examples 202 to 207, solid content concentration 30%), 20% by mass of 1,2-propanediol, 9% by mass of triethylene glycol monomethyl ether, and 0.5% by mass of a polysiloxane compound, and water (deionized water) in a remaining amount was produced.

(Preparation of aqueous ink compositions of Examples 208 to 214)

An aqueous ink composition (receiving liquid) including 13% by mass of polymer fine particle dispersion (Examples 208 to 214, solid content concentration 30%), 25% by mass of 1,2-propanediol, 9% by mass of 1,2-hexanediol, 0.5% by mass of a polysiloxane compound, and water (deionized water) in a remaining amount was produced.

(Preparation of aqueous ink compositions of Examples 215 to 218)

An aqueous ink composition (receiving liquid) including 25% by mass of polymer fine particle dispersion (Examples 215 to 218, solid content concentration 30%), 9% by mass of 1,2-hexanediol, 20% by mass of 3-methoxy-1-butanol, 0.5% by mass of a polysiloxane compound, and water (deionized water) in a remaining amount was produced.

(Preparation of aqueous ink compositions of Examples 219 to 222)

An aqueous ink composition (coloring ink) including 20% by mass of pigment dispersion, 25% by mass of polymer fine particle dispersion (Examples 219 to 222, solid content concentration 30%), 25% by mass of 1,2-hexanediol, 0.5% by mass of a polysiloxane compound, and water (deionized water) in a remaining amount was produced.

(Preparation of aqueous ink compositions of Examples 223 to 226)

An aqueous ink composition (coloring ink) including 20% by mass of pigment dispersion, 25% by mass of polymer fine particle dispersion (Examples 223 to 226, solid content concentration 30%), 25% by mass of N-N diethylformamide, 0.5% by mass of a polysiloxane compound, and water (deionized water) in a remaining amount was produced.

(Preparation of aqueous ink compositions of Examples 227 to 230)

An aqueous ink composition (coloring ink) including 20% by mass of pigment dispersion, 25% by mass of polymer fine particle dispersion (Examples 227 to 230, solid content concentration 30%), 25% by mass of 3-methoxy-1-butanol, 0.5% by mass of a polysiloxane compound, and water (deionized water) in a remaining amount was produced.

(Preparation of aqueous ink compositions of Examples 231 to 234)

An aqueous ink composition (coloring ink) including 20% by mass of pigment dispersion, 25% by mass of polymer fine particle dispersion (Examples 231 to 234, solid content concentration 30%), 20% by mass of 1,2-propanediol, 9% by mass of 3-methoxy-1-butanol, 0.5% by mass of a polysiloxane compound, and water (deionized water) in a remaining amount was produced.

(Preparation of aqueous ink compositions of Examples 235 to 238)

An aqueous ink composition (coloring ink) including 20% by mass of pigment dispersion, 25% by mass of polymer fine particle dispersion (Examples 235 to 238, solid content concentration 30%), 25% by mass of 2-pyrrolidone, 0.5% by mass of a polysiloxane compound, and water (deionized water) in a remaining amount was produced.

(Preparation of aqueous ink compositions of Examples 239 to 242)

An aqueous ink composition (coloring ink) including 20% by mass of pigment dispersion, 25% by mass of polymer fine particle dispersion (Examples 239 to 242, solid content concentration 30%), 20% by mass of 1,2-propanediol, 9% by mass of 2-pyrrolidone, 0.5% by mass of a polysiloxane compound, and water (deionized water) in a remaining amount was produced.

(Preparation of aqueous ink compositions of Examples 243 to 246)

An aqueous ink composition (coloring ink) including 20% by mass of a pigment dispersion, 25% by mass of a polymer fine particle dispersion (Examples 243 to 246, solid content concentration 30%), 25% by mass of 3-methyl-1,3-butanediol, 0.5% by mass of a polysiloxane compound, and water (deionized water) in a remaining amount was produced.

(Preparation of aqueous ink compositions of Examples 247 to 250)

An aqueous ink composition (coloring ink) including 20% by mass of pigment dispersion, 25% by mass of polymer fine particle dispersion (Examples 247 to 250, solid content concentration 30%), 20% by mass of 1,2-propanediol, 9% by mass of 3-methyl-1,3-butanediol, 0.5% by mass of a polysiloxane compound, and water (deionized water) in a remaining amount was produced.

(Preparation of aqueous ink compositions of Examples 251 to 254)

An aqueous ink composition (coloring ink) including 20% by mass of pigment dispersion, 25% by mass of polymer fine particle dispersion (Examples 251 to 254, solid content concentration 30%), 25% by mass of 3-methoxy-N,N-dimethylpropanamide, 0.5% by mass of a polysiloxane compound, and water (deionized water) in a remaining amount was produced.

(Preparation of aqueous ink compositions of Examples 255 to 258)

An aqueous ink composition (coloring ink) including 20% by mass of pigment dispersion, 25% by mass of polymer fine particle dispersion (Examples 255 to 258, solid content concentration 30%), 20% by mass of 1,2-propanediol, 9% by mass of 3-methoxy-N,N-dimethyl propanamide, 0.5% by mass of a polysiloxane compound, and water (deionized water) in a remaining amount was produced.

(Preparation of aqueous ink compositions of Examples 259 to 262)

An aqueous ink composition (coloring ink) including 20% by mass of pigment dispersion, 25% by mass of polymer fine particle dispersion (Examples 259 to 262, solid content concentration 30%), 25% by mass of 3-butoxy-N,N-dimethylpropanamide, 0.5% by mass of a polysiloxane compound, and water (deionized water) in a remaining amount was produced.

(Preparation of aqueous ink compositions of Examples 263 to 266)

An aqueous ink composition (coloring ink) including 20% by mass of pigment dispersion, 25% by mass of polymer fine particle dispersion (Examples 263 to 266, solid content concentration 30%), 20% by mass of 1,2-propanediol, 9% by mass of 3-butoxy-N,N-dimethyl propanamide, 0.5% by mass of a polysiloxane compound, and water (deionized water) in a remaining amount was produced.

(Preparation of aqueous ink compositions of Examples 267 to 270)

An aqueous ink composition (coloring ink) including 20% by mass of pigment dispersion, 25% by mass of polymer fine particle dispersion (Examples 267 to 270, solid content concentration 30%), 25% by mass of Texanol, 0.5% by mass of a polysiloxane compound, and water (deionized water) in a remaining amount was produced.

(Preparation of aqueous ink compositions of Examples 271 to 274)

An aqueous ink composition (coloring ink) including 20% by mass of pigment dispersion, 25% by mass of polymer fine particle dispersion (Examples 271 to 274, solid content concentration 30%), 20% by mass of 1,2-propanediol, 9% by mass of Texanol, 0.5% by mass of a polysiloxane compound, and water (deionized water) in a remaining amount was produced.

(Preparation of aqueous ink compositions of Examples 275 to 278)

An aqueous ink composition (coloring ink) including 20% by mass of pigment dispersion, 25% by mass of polymer fine particle dispersion (Examples 275 to 278, solid content concentration 30%), 25% by mass of $\gamma$-valerolactone, 0.5% by mass of a polysiloxane compound, and water (deionized water) in a remaining amount was produced.

(Preparation of aqueous ink compositions of Examples 279 to 282)

An aqueous ink composition (coloring ink) including 20% by mass of pigment dispersion, 25% by mass of polymer fine particle dispersion (Examples 279 to 282, solid content concentration 30%), 20% by mass of 1,2-propanediol, 9% by mass of γ-valerolactone, 0.5% by mass of a polysiloxane compound, and water (deionized water) in a remaining amount was produced.

(Preparation of aqueous ink compositions of Examples 283 to 286)

An aqueous ink composition (coloring ink) including 20% by mass of pigment dispersion, 25% by mass of polymer fine particle dispersion (Examples 283 to 286 solid content concentration 30%), 25% by mass of N-methyl-epsilon-caprolactam, 0.5% by mass of a polysiloxane compound, and water (deionized water) in a remaining amount was produced.

(Preparation of aqueous ink compositions of Examples 287 to 290)

An aqueous ink composition (coloring ink) including 20% by mass of pigment dispersion, 25% by mass of polymer fine particle dispersion (Examples 287 to 290, solid content concentration 30%), 20% by mass of 1,2-propanediol, 9% by mass of N-methyl-epsilon-caprolactam, 0.5% by mass of a polysiloxane compound, and water (deionized water) in a remaining amount was produced.

(Preparation of aqueous ink compositions of Examples 291 to 294)

An aqueous ink composition (coloring ink) including 20% by mass of pigment dispersion, 25% by mass of polymer fine particle dispersion (Examples 291 to 294, solid content concentration 30%), 25% by mass of 2-hydroxyethylmorpholine, 0.5% by mass of polysiloxane compound, and water (deionized water) in a remaining amount was produced.

(Preparation of aqueous ink compositions of Examples 295 to 298)

An aqueous ink composition (coloring ink) including 20% by mass of pigment dispersion, 25% by mass of polymer fine particle dispersion (Examples 295 to 298 solid content concentration 30%), 20% by mass of 1,2-propanediol, 9% by mass of 2-hydroxyethylmorpholine, 0.5% by mass of a polysiloxane compound, and water (deionized water) in a remaining amount was produced.

(Preparation of aqueous ink compositions of Examples 299 to 302)

An aqueous ink composition (coloring ink) including 20% by mass of pigment dispersion, 25% by mass of polymer fine particle dispersion (Examples 299 to 302, solid content concentration 30%), 25% by mass of 2-hydroxyethylpyrrolidone, 0.5% by mass of polysiloxane compound, and water (deionized water) in a remaining amount was produced.

(Preparation of aqueous ink compositions of Examples 303 to 306)

An aqueous ink composition (coloring ink) including 20% by mass of pigment dispersion, 25% by mass of polymer fine particle dispersion (Examples 303 to 306, solid content concentration 30%), 20% by mass of 1,2-propanediol, 9% by mass of 2-hydroxyethylpyrrolidone, 0.5% by mass of a polysiloxane compound, and water (deionized water) in a remaining amount was produced.

(Preparation of aqueous ink compositions of Examples 307 to 310)

An aqueous ink composition (coloring ink) including 20% by mass of pigment dispersion, 25% by mass of polymer fine particle dispersion (Examples 307 to 310, solid content concentration 30%), 25% by mass of tripropylene glycol monomethyl ether, 0.5% by mass of polysiloxane compound, and water (deionized water) in a remaining amount was produced.

(Preparation of aqueous ink compositions of Examples 311 to 314)

An aqueous ink composition (coloring ink) including 20% by mass of pigment dispersion, 25% by mass of polymer fine particle dispersion (Examples 311 to 314, solid content concentration 30%), 20% by mass of 1,2-propanediol, 9% by mass of tripropylene glycol monomethyl ether, 0.5% by mass of a polysiloxane compound, and water (deionized water) in a remaining amount was produced.

(Preparation of aqueous ink compositions of Examples 315 to 318)

An aqueous ink composition (coloring ink) including 20% by mass of pigment dispersion, 25% by mass of polymer fine particle dispersion (Examples 315 to 318, solid content concentration 30%), 25% by mass of dipropylene glycol monomethyl ether, 0.5% by mass of polysiloxane compound, and water (deionized water) in a remaining amount was produced.

(Preparation of aqueous ink compositions of Examples 319 to 322)

An aqueous ink composition (coloring ink) including 20% by mass of pigment dispersion, 25% by mass of polymer fine particle dispersion (Examples 319 to 322, solid content concentration 30%), 20% by mass of 1,2-propanediol, 9% by mass of dipropylene glycol monomethyl ether, 0.5% by mass of a polysiloxane compound, and water (deionized water) in a remaining amount was produced.

(Preparation of aqueous ink compositions of Examples 323 to 326)

An aqueous ink composition (coloring ink) including 20% by mass of pigment dispersion, 25% by mass of polymer fine particle dispersion (Examples 323 to 326, solid content concentration 30%), 25% by mass of triethylene glycol monomethyl ether, 0.5% by mass of polysiloxane compound, and water (deionized water) in a remaining amount was produced.

(Preparation of aqueous ink compositions of Examples 327 to 330)

An aqueous ink composition (coloring ink) including 20% by mass of pigment dispersion, 25% by mass of polymer fine particle dispersion (Examples 327 to 330, solid content concentration 30%), 20% by mass of 1,2-propanediol, 9% by mass of triethylene glycol monomethyl ether, 0.5% by mass of a polysiloxane compound, and water (deionized water) in a remaining amount was produced.

(Preparation of aqueous ink compositions of Examples 331 to 334)

An aqueous ink composition (coloring ink) including 20% by mass of pigment dispersion, 25% by mass of polymer fine particle dispersion (Examples 331 to 334, solid content concentration 30%), 25% by mass of triethylene glycol monobutyl ether, 0.5% by mass of a polysiloxane compound, and water (deionized water) in a remaining amount was produced.

(Preparation of aqueous ink compositions of Examples 335 to 338)

An aqueous ink composition (coloring ink) including 20% by mass of pigment dispersion, 25% by mass of polymer fine particle dispersion (Examples 335 to 338, solid content concentration 30%), 20% by mass of 1,2-propanediol, 9% by mass of triethylene glycol monobutyl ether, 0.5% by mass of a polysiloxane compound, and water (deionized water) in a remaining amount was produced.

(Preparation of aqueous ink compositions of Examples 339 to 342)

An aqueous ink composition (coloring ink) including 20% by mass of pigment dispersion, 25% by mass of polymer fine particle dispersion (Examples 339 to 342 solid content concentration 30%), 20% by mass of 1,2-propanediol, 9% by mass of 1,2-hexanediol, 0.5% by mass of a polysiloxane compound, and water (deionized water) in a remaining amount was produced.

4. Evaluation of aqueous ink composition

(Storage stability)

The storage stability of the aqueous ink composition of Examples and Comparative Examples was evaluated. Specifically, the aqueous ink compositions of Examples and Comparative Examples were heated in an oven at 60°C for one week, and the viscosity before and after heating was measured at a liquid temperature of 25°C, and evaluated based on the following evaluation criteria. The evaluation results are shown in the table below (denoted as "storage stability" in the table).

Evaluation criteria

A: Viscosity change rate was 5% or less
B: Viscosity change rate was more than 5% and less than 7.5%
C: Viscosity change rate was 7.5% or more and less than 10%
D: Viscosity change rate was 10% or more (out of practical use)

(Intermittent ejection properties)

The intermittent ejection properties (ejection stability) of the aqueous ink compositions of Examples and Comparative Examples were evaluated. Specifically, an ink cartridge (storage container) is filled with an aqueous ink composition, and the ink cartridge (storage container) is mounted on a serial type inkjet recording device equipped with a piezo type inkjet head, a nozzle check pattern is printed by the inkjet recording device, and then the similar printing is carried out after allowing the printing to stand for 10 minutes without a head cap. The presence or absence of nozzle chipping was checked before and after standing, and the same printing was repeated until nozzle chipping was less than 10% with respect to the pattern before standing, and the ejection property was evaluated based on the number of times of printing according to the following evaluation criteria. The evaluation results are shown in the table below (denoted as "intermittent ejection property" in the table).

Evaluation criteria

A: 10% or less nozzle chipping in the first printing after standing
B: 10% or less nozzle chipping in the 2nd printing after standing
C: 10% or less nozzle chipping in the 3rd printing after standing
D: 10% or less nozzle chipping in the 4th printing after standing
E: 11% or more nozzle chipping in the 4th printing after standing (out of practical use)

(Adhesion)

Adhesion was evaluated for the aqueous ink compositions of Examples and Comparative Examples. Specifically, a solid image having a density of 100% was printed by an inkjet recording device using the aqueous ink compositions of Examples and Comparative Examples on a base material to be printed (untreated OPP base material, OPP base material surface-treated by corona treatment, PET base material surface-treated by corona treatment), and dried at 100°C for 8 minutes, a cellophane tape (product name "Cellotape®", manufactured by NICHIBAN) was sufficiently pressed against the solid part of the image, and then the cellophane tape was peeled off. Then, the peeling state of the image was visually observed, and the adhesion was evaluated according to the following evaluation criteria.

Evaluation criteria

A: An image was not peel off at all.
B: An image was slightly peeled off.
C: An area of an image that was peeled off was smaller than an area of the image that remained without being peeled off.
D: An area of an image that was peeled off was larger than an area of the image that remained without being peeled off.
E: The entire image was peeled off.

(out of practical use)

(Solvent resistance)

Solvent resistance was evaluated for aqueous ink compositions of Examples and Comparative Examples. Specifically, a solid image print with a print density of 100% was produced on a base material to be printed (OPP base material surface-treated by corona treatment) and dried at 120°C for 8 minutes. For the coated film on the coated surface of the ink composition after drying, an appearance of the coated film was observed under the conditions in which a Gakushin friction fastness tester type II was used, a weight was 500 g, and cloth was kanakin No. 3 cloth immersed in an ethanol aqueous solution with a mass concentration of 50%, and the appearance of the coating film was evaluated according to the following evaluation criteria (coating film appearance index) (described as solvent resistance in the table).

Evaluation criteria

A: No change in appearance after 100 times
B: No change in appearance after 75 times, slight change in appearance after 100 times
C: No change in appearance after 50 times, slight change in appearance after 75 times
D: No change in appearance after 25 times, slight change in appearance after 50 times
E: Change in appearance after 25 times (out of practical use)

[Table 2-1]

| | | Structure | Side chain SP value | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Monomer B | MAA | | | - | | - | - | - | - | | | - | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 92.6% | 92.6% | 74.1% | 64.8% | 50.0% | - | - | - | 92.6% | 91.6% |
| | CHA | Alicyclic | 9.96 | - | - | - | 27.8% | - | 50.0% | - | - | - | - |
| | Vinylcyclohexane | Alicyclic | 8.54 | - | - | - | - | - | - | - | - | - | - |
| | TBCHA | Alicyclic | 9.08 | - | - | - | - | - | - | - | 92.6% | - | - |
| | 4-acryloylmorpholine | Heterocyclic | 12.95 | - | - | - | - | - | - | 92.6% | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | 1.0% |
| | MMA | | 10.26 | - | - | - | - | - | - | - | - | - | - |
| | BMA | | 9.48 | - | - | 18.5% | - | 42.6% | 42.6% | - | - | - | - |
| Surfactant (not reactive) Weight based on 100% of monomer | Emulgen A-90(solid content 100%) | - | - | 2.0% | 13.0% | 13.0% | 2.0% | 2.0% | 2.0% | 2.0% | 2.0% | | 2.0% |
| | Emar 20CM(Solid content 25%) | - | - | - | - | - | - | - | - | - | - | | - |
| | Sanisol B-50(solid content 50%) | - | - | 5.2% | - | - | 5.2% | 5.2% | 5.2% | 5.2% | 52% | | 52% |
| Reactive surfactant Weight based on 100% of monomer | Latemul PD-420(solid content 100%) | - | - | | | | | | | | | 13.0% | |

(continued)

| | | Structure | Side chain SP value | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Crosslinking agent Weight based on 100% of monomer | Adipic acid dihydrazide | - | - | | | | | | | | | | 1.0% |

[Table 2-2]

| | Structure | Side chain SP value | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Adjusting ink | Content of resin solution(30% solid content) | | 25% | 25% | 25% | 25% | 25% | 25% | 25% | 25% | 25% | 25% |
| Content of adjusting ink solvent | 1,2-propanediol | | 25% | 25% | 25% | 25% | 25% | 25% | 25% | 25% | 25% | 25% |
| | 1,2-hexanediol | | 9% | 9% | 9% | 9% | 9% | 9% | 9% | 9% | 9% | 9% |
| | N-N diethylformamide | | | | | | | | | | | |
| | 3-methoxy-1-butanol | | | | | | | | | | | |
| | 2-pyrrolidone | | | | | | | | | | | |
| | 3-methyl-1,3-butanediol | | | | | | | | | | | |
| | 3-methoxy-N,N-dimethylpropanamide | | | | | | | | | | | |
| | 3-butoxy-N,N-dimethylpropanamide | | | | | | | | | | | |
| | Texanol | | | | | | | | | | | |
| | γ-valerolactone | | | | | | | | | | | |
| | N-methyl-epsilon-caprolactam | | | | | | | | | | | |
| | 2-hydroxylethylmorpholine | | | | | | | | | | | |
| | 2-hydroxylethylpyrrolidone | | | | | | | | | | | |
| | Tripropylene glycol monomethyl ether | | | | | | | | | | | |
| | Dipropylene glycol monomethyl ether | | | | | | | | | | | |
| | Triethylene glycol monomethyl ether | | | | | | | | | | | |
| | Triethylene glycol monobutyl ether | | | | | | | | | | | |

| | | Structure | Side chain SP value | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | | OPP | | A | A | A | A | A | A | B | B | A | A |
| | | Corona OPP | | A | A | A | A | A | A | A | A | A | A |
| | | Corona PET | | A | A | A | A | A | A | A | A | A | A |
| Storage stability | | | | A | A | A | A | A | A | A | A | C | C |
| Intermittent ejection property | | | | A | A | A | A | A | A | A | A | A | A |
| Solvent resistance (Corona OPP) | | | | A | A | A | A | A | A | D | A | A | A |

EP 4 549 524 A1

[Table 3-1]

| | | Structure | Side chain SP value | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Monomer B | MAA | | | | | - | 1.5% | 1.5% | | | 1.5% | 1.5% | 1.5% |
| | DMMA | | | - | 7.4% | | - | - | 7.4% | 7.4% | - | - | - |
| Monomer A | CHMA | Alicyclic | 9.96 | - | - | - | 98.5% | 69.0% | - | - | 78.8% | 68.6% | 98.5% |
| | CHA | Alicyclic | 9.96 | - | - | - | - | - | - | 42.6% | - | 29.4% | - |
| | Vinylcyclohexane | Alicyclic | 8.54 | 100.0% | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | 100.0% | - | - | 92.6% | - | - | - | - |
| | BzMA | Aromatic ring | 10.49 | - | 92.6% | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | - | 29.6% | - | 50.0% | 19.7% | - | - |
| Surfactant (not reactive) Weight based on 100% of monomer | Emulgen A-90(solid content 100%) | - | - | 2.0% | 2.0% | 2.0% | - | | 2.0% | 2.0% | 2.0% | 2.0% | 2.0% |
| | Emar 20CM(Solid content 25%) | - | - | 2.6% | - | 2.6% | - | | - | - | 2.6% | 2.6% | 2.6% |
| | Sanisol B-50(solid content 50%) | - | - | - | 5% | - | - | - | 5% | 5% | - | | - |
| Reactive surfactant Weight based on 100% of monomer | Latemul PD-420(solid content 100%) | - | - | | | | | | | | | | |

EP 4 549 524 A1

36

(continued)

| | | Structure | Side chain SP value | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Crosslinking agent Weight based on 100% of monomer | Adipic acid dihydrazide | - | - | | | | | | | | | | |

[Table 3-2]

| | | Structure | Side chain SP value | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 25% | 25% | 25% | 25% | 25% | 25% | 25% | 25% | 25% | 25% |
| | 1,2-hexanediol | | | 9% | 9% | 9% | | | 9% | 9% | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-caprolactam | | | | | | | | | | | | |
| | 2-hydroxylethylmorpholine | | | | | | | | | | | | |
| | 2-hydroxylethylpyrrolidone | | | | | | | | | | | | |
| | Tripropylene glycol mono-methyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol monobu-tyl ether | | | | | | | | | | | | |
| | Polymerization method | | | Emulsification | Emulsification | Emulsification | Solution | Solution | Emulsification | Emulsification | Emulsification | Emulsification | Emulsification |
| | Polymer structure | | | Random | Random | Random | Random | AB block | Random | Random | Random | Random | Random |

(continued)

| | | Structure | Side chain SP value | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Adhesion | | OPP | | A | C | A | A | A | A | B | B | B | B |
| | | Corona OPP | | A | C | A | A | A | A | B | B | B | B |
| | | Corona PET | | D | A | A | A | A | A | B | A | A | A |
| Storage stability | | | | D | A | D | A | A | C | A | A | A | A |
| Intermittent ejection property | | | | A | A | A | C | C | A | A | A | A | A |
| Solvent resistance (Corona OPP) | | | | A | A | D | A | A | D | C | A | A | A |

[Table 4-1]

| | | Structure | Side chain SP value | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Monomer B | MAA | | | 1.5% | - | - | - | - | - | - | - | | - |
| | DMMA | | | - | 7.4% | 7.4% | 7.4% | 7.4% | 7.4% | 7.4% | 7.4% | 7.4% | 7.4% |
| Monomer A | CHMA | Alicyclic | 9.96 | - | 92.6% | 92.6% | 74.1% | 64.8% | - | - | 92.6% | 92.6% | 74.1% |
| | CHA | Alicyclic | 9.96 | 98.5% | - | - | - | 27.8% | 92.6% | 92.6% | - | - | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | 18.5% | - | - | - | - | - | 18.5% |
| Surfactant (not reactive) Weight based on 100% of monomer | Emulgen A-90(solid content 100%) | - | - | 2.0% | 2.0% | 13.0% | 13.0% | 2.0% | 2.0% | 13.0% | 2.0% | 13.0% | 13.0% |
| | Emar 20CM(Solid content 25%) | - | - | 2.6% | - | - | - | | - | - | - | - | - |
| | Sanisol B-50(solid content 50%) | - | - | - | 5.2% | - | - | 5.2% | 5.2% | - | 5.2% | - | - |
| Reactive surfactant Weight based on 100% of monomer | Latemul PD-420(solid content 100%) | - | - | | | | | | | | | | |

(continued)

| | Structure | Side chain SP value | Example 21 | Example 22 | Example 23 | Example 24 | Example 25 | Example 26 | Example 27 | Example 28 | Example 29 | Example 30 |
|---|---|---|---|---|---|---|---|---|---|---|---|---|
| Crosslinking agent Weight based on 100% of monomer | Adipic acid dihydrazide | - | - | | | | | | | | | | |

[Table 4-2]

| | | Structure | Side chain SP value | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 25% | | | | | | | | | |
| | 1,2-hexanediol | | | | 25% | 25% | 25% | 25% | 25% | 25% | | | |
| | N-N diethylformamide | | | | | | | | | | 25% | 25% | 25% |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

EP 4 549 524 A1

42

| | | Structure | Side chain SP value | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | | OPP | | B | A | A | A | A | A | A | A | A | A |
| | | Corona OPP | | B | A | A | A | A | A | A | A | A | A |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | B | B | B |
| Solvent resistance (Corona OPP) | | | | A | A | A | A | A | A | A | A | A | A |

[Table 5-1]

| | | Structure | Side chain SP value | Example 31 | Example 32 | Example 33 | Example 34 | Example 35 | Example 36 | Example 37 | Example 38 | Example 39 | Example 40 |
|---|---|---|---|---|---|---|---|---|---|---|---|---|---|
| Monomer B | MAA | | | - | - | - | - | - | - | - | - | - | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 64.8% | - | - | 92.6% | 92.6% | 74.1% | 64.8% | - | - | 92.6% |
| | CHA | Alicyclic | 9.96 | 27.8% | 92.6% | 92.6% | - | - | - | 27.8% | 92.6% | 92.6% | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | - | - | 18.5% | - | - | - | - |
| Surfactant (not reactive) Weight based on 100% of monomer | Emulgen A-90(solid content 100%) | - | - | 2.0% | 2.0% | 13.0% | 2.0% | 13.0% | 13.0% | 2.0% | 2.0% | 13.0% | 2.0% |
| | Emar 20CM(Solid content 25%) | - | - | - | - | - | - | | | - | - | - | - |
| | Sanisol B-50(solid content 50%) | - | - | 5.2% | 5.2% | - | 5.2% | - | - | 5.2% | 5.2% | - | 5.2% |
| Reactive surfactant Weight based on 100% of monomer | Latemul PD-420(solid content 100%) | - | - | | | | | | | | | | |

(continued)

| | | Example 31 | Example 32 | Example 33 | Example 34 | Example 35 | Example 36 | Example 37 | Example 38 | Example 39 | Example 40 |
|---|---|---|---|---|---|---|---|---|---|---|---|
| Structure | Side chain SP value | - | | | | | | | | | |
| Crosslinking agent Weight based on 100% of monomer | Adipic acid dihydrazide | | | | | | | | | | |

[Table 5-2]

| | | Structure | Side chain SP value | Example 31 | Example 32 | Example 33 | Example 34 | Example 35 | Example 36 | Example 37 | Example 38 | Example 39 | Example 40 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | | 20% | 20% | 20% | 20% | 20% | 20% | |
| | 1,2-hexanediol | | | | | | | | | | | | |
| | N-N diethylformamide | | | 25% | 25% | 25% | 9% | 9% | 9% | 9% | 9% | 9% | |
| | 3-methoxy-1-butanol | | | | | | | | | | | | 25% |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

EP 4 549 524 A1

(continued)

| | Structure | Side chain SP value | Example 31 | Example 32 | Example 33 | Example 34 | Example 35 | Example 36 | Example 37 | Example 38 | Example 39 | Example 40 |
|---|---|---|---|---|---|---|---|---|---|---|---|---|
| Polymerization method | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | Random | Random | Random | Random | Random | Random | Random | Random | Random | Random |
| Adhesion | OPP | | A | A | A | A | A | A | A | A | A | A |
| | Corona OPP | | A | A | A | A | A | A | A | A | A | A |
| | Corona PET | | A | A | A | A | A | A | A | A | A | A |
| Storage stability | | | A | A | A | A | A | A | A | A | A | A |
| Intermittent ejection property | | | B | B | B | A | A | A | A | A | A | B |
| Solvent resistance (Corona OPP) | | | A | A | A | A | A | A | A | A | A | A |

[Table 6-1]

| | | Structure | Side chain SP value | Example 41 | Example 42 | Example 43 | Example 44 | Example 45 | Example 46 | Example 47 | Example 48 | Example 49 | Example 50 |
|---|---|---|---|---|---|---|---|---|---|---|---|---|---|
| Monomer B | MAA | | | | - | - | - | - | - | | - | | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 92.6% | 74.1% | 64.8% | - | - | 92.6% | 92.6% | 74.1% | 64.8% | - |
| | CHA | Alicyclic | 9.96 | - | - | 27.8% | 92.6% | 92.6% | - | - | - | 27.8% | 92.6% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | 18.5% | - | - | - | - | - | 18.5% | - | - |
| Surfactant (not reactive) Weight based on 100% of monomer | Emulgen A-90(solid content 100%) | - | - | 13.0% | 13.0% | 2.0% | 2.0% | 13.0% | 2.0% | 13.0% | 13.0% | 2.0% | 2.0% |
| | Emar 20CM(Solid content 25%) | - | - | - | - | - | - | - | - | - | - | - | - |
| | Sanisol B-50(solid content 50%) | - | - | - | - | 5.2% | 5.2% | - | 5.2% | - | - | 5.2% | 5.2% |
| Reactive surfactant Weight based on 100% of monomer | Latemul PD-420(solid content 100%) | - | - | | | | | | | | | | |

(continued)

| | | Example 41 | Example 42 | Example 43 | Example 44 | Example 45 | Example 46 | Example 47 | Example 48 | Example 49 | Example 50 |
|---|---|---|---|---|---|---|---|---|---|---|---|
| Crosslinking agent Weight based on 100% of monomer | Adipic acid dihydrazide | Structure | - | | | | | | | | | |
| | | Side chain SP value | - | | | | | | | | | |

[Table 6-2]

| | | Structure | Side chain SP value | Example 41 | Example 42 | Example 43 | Example 44 | Example 45 | Example 46 | Example 47 | Example 48 | Example 49 | Example 50 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | | | | 20% | 20% | 20% | 20% | 20% |
| | 1,2-hexanediol | | | | | | | | | | | | |
| | N-N diethylformamide | | | | | | | | | | | | |
| | 3-methoxy-1-butanol | | | 25% | 25% | 25% | 25% | 25% | 9% | 9% | 9% | 9% | 9% |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

(continued)

| | | Structure | Side chain SP value | Example 41 | Example 42 | Example 43 | Example 44 | Example 45 | Example 46 | Example 47 | Example 48 | Example 49 | Example 50 |
|---|---|---|---|---|---|---|---|---|---|---|---|---|---|
| Polymerization method | | | | Emulsification | Emulsification | Emulsification | Emulsification | Emulsification | Emulsification | Emulsification | Emulsification | Emulsification | Emulsification |
| Polymer structure | | | | Random | Random | Random | Random | Random | Random | Random | Random | Random | Random |
| Adhesion | | OPP | | A | A | A | A | A | A | A | A | A | A |
| | | Corona OPP | | A | A | A | A | A | A | A | A | A | A |
| | | Corona PET | | A | A | A | A | A | A | A | A | A | A |
| Storage stability | | | | A | A | A | A | A | A | A | A | A | A |
| Intermittent ejection property | | | | B | B | B | B | B | A | A | A | A | A |
| Solvent resistance (Corona OPP) | | | | A | A | A | A | A | A | A | A | A | A |

[Table 7-1]

| | | Structure | Side chain SP value | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|
| Monomer B | MAA | | | - | - | - | - | - | - | - | - | - | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | - | 92.6% | 92.6% | 74.1% | 64.8% | - | - | 92.6% | 92.6% | 74.1% |
| | CHA | Alicyclic | 9.96 | 92.6% | - | - | - | 27.8% | 92.6% | 92.6% | - | - | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | 18.5% | - | - | - | - | - | 18.5% |
| Surfactant (not reactive) Weight based on 100% of monomer | Emulgen A-90(solid content 100%) | - | - | 13.0% | 2.0% | 13.0% | 13.0% | 2.0% | 2.0% | 13.0% | 2.0% | 13.0% | 13.0% |
| | Emar 20CM(Solid content 25%) | - | - | - | - | - | - | | - | - | - | - | - |
| | Sanisol B-50(solid content 50%) | - | - | - | 5.2% | - | - | 5.2% | 5.2% | - | 5.2% | - | - |
| Reactive surfactant Weight based on 100% of monomer | Latemul PD-420(solid content 100%) | - | - | | | | | | | | | | |

52

| | | Structure | Side chain SP value | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|
| Crosslinking agent Weight based on 100% of monomer | Adipic acid dihydrazide | - | - | | | | | | | | | | |

[Table 8-1]

| | | Structure | Side chain SP value | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | | | | | | | 20% | 20% | 20% |
| | 1,2-hexanediol | | | | | | | | | | | | |
| | N-N diethylformamide | | | | | | | | | | | | |
| | 3-methoxy-1-butanol | | | 9% | | | | | | | | | |
| | 2-pyrrolidone | | | | 25% | 25% | 25% | 25% | 25% | 25% | 9% | 9% | 9% |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

54

EP 4 549 524 A1

| | | Structure | Side chain SP value | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | OPP | | | A | A | A | A | A | A | A | A | A | A |
| | Corona OPP | | | A | A | A | A | A | A | A | A | A | A |
| | Corona PET | | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

EP 4 549 524 A1

[Table 8-2]

| Category | Component | Structure | Side chain SP value | Example 61 | Example 62 | Example 63 | Example 64 | Example 65 | Example 66 | Example 67 | Example 68 | Example 69 |
|---|---|---|---|---|---|---|---|---|---|---|---|---|
| Monomer B | MAA | | | - | - | - | - | - | - | - | - | - |
| | DMMA | | | 7.4% | 7.4% | 7.4% | 7.4% | 7.4% | 7.4% | 7.4% | 7.4% | 7.4% |
| | CHMA | Alicyclic | 9.96 | 64.8% | - | - | 92.6% | 92.6% | 74.1% | 64.8% | - | - |
| | CHA | Alicyclic | 9.96 | 27.8% | 92.6% | 92.6% | - | - | - | 27.8% | 92.6% | 92.6% |
| Monomer A | Vinylcyclohexane | Alicyclic | 8.54 | - | - | - | - | - | - | - | - | - |
| | TBCHA | Alicyclic | 9.08 | - | - | - | - | - | - | - | - | - |
| | 4-acryloylmorpholine | Heterocyclic | 12.95 | - | - | - | - | - | - | - | - | - |
| | HCHMA | Alicyclic | 13.02 | - | - | - | - | - | - | - | - | - |
| | BzMA | Aromatic ring | 10.49 | - | - | - | - | - | - | - | - | - |
| Monomer C | 2-(acryloylamino)-2-methyl-4-pentanone | | 12.04 | - | - | - | - | - | - | - | - | - |
| | MMA | | 10.26 | - | - | - | - | - | - | - | - | - |
| | BMA | | 9.48 | - | - | - | - | - | 18.5% | - | - | - |
| Surfactant (not reactive) | Emulgen A-90(solid content 100%) | - | - | 2.0% | 2.0% | 13.0% | 2.0% | 13.0% | 13.0% | 2.0% | 2.0% | 13.0% |
| Weight based on 100% of monomer | Emar 20CM(Solid content 25%) | - | - | - | - | - | - | - | - | - | - | - |
| | Sanisol B-50(solid content 50%) | - | - | 5.2% | 5.2% | - | 5.2% | - | - | 5.2% | 5.2% | - |
| Reactive surfactant Weight based on 100% of monomer | Latemul PD-420(solid content 100%) | - | - | | | | | | | | | |

(continued)

| | Structure | Side chain SP value | Example 61 | Example 62 | Example 63 | Example 64 | Example 65 | Example 66 | Example 67 | Example 68 | Example 69 |
|---|---|---|---|---|---|---|---|---|---|---|---|
| Crosslinking agent Weight based on 100% of monomer | Adipic acid dihydrazide | - | - | | | | | | | | | |

[Table 8-2]

| | | Structure | Side chain SP value | Example 61 | Example 62 | Example 63 | Example 64 | Example 65 | Example 66 | Example 67 | Example 68 | Example 69 |
|---|---|---|---|---|---|---|---|---|---|---|---|---|
| Adjusting ink | Content of resin solution(30% solid content) | | | 25% | 25% | 25% | 25% | 25% | 25% | 25% | 25% | 25% |
| Content of adjusting ink solvent | 1,2-propanediol | | | 20% | 20% | 20% | | | | | | |
| | 1,2-hexanediol | | | | | | | | | | | |
| | N-N diethylformamide | | | | | | | | | | | |
| | 3-methoxy-1-butanol | | | | | | | | | | | |
| | 2-pyrrolidone | | | 9% | 9% | 9% | | | | | | |
| | 3-methyl-1,3-butanediol | | | | | | 25% | 25% | 25% | 25% | 25% | 25% |
| | 3-methoxy-N,N-dimethylpropanamide | | | | | | | | | | | |
| | 3-butoxy-N,N-dimethylpropanamide | | | | | | | | | | | |
| | Texanol | | | | | | | | | | | |
| | γ-valerolactone | | | | | | | | | | | |
| | N-methyl-epsilon-caprolactam | | | | | | | | | | | |
| | 2-hydroxylethylmorpholine | | | | | | | | | | | |
| | 2-hydroxylethylpyrrolidone | | | | | | | | | | | |
| | Tripropylene glycol monomethyl ether | | | | | | | | | | | |
| | Dipropylene glycol monomethyl ether | | | | | | | | | | | |
| | Triethylene glycol monomethyl ether | | | | | | | | | | | |
| | Triethylene glycol monobutyl ether | | | | | | | | | | | |
| Polymerization method | | | | Emulsification | Emulsification | Emulsification | Emulsification | Emulsification | Emulsification | Emulsification | Emulsification | Emulsification |
| Polymer structure | | | | Random | Random | Random | Random | Random | Random | Random | Random | Random |

(continued)

| Structure | Side chain SP value | Example 61 | Example 62 | Example 63 | Example 64 | Example 65 | Example 66 | Example 67 | Example 68 | Example 69 |
|---|---|---|---|---|---|---|---|---|---|---|
| Adhesion | OPP | A | A | A | A | A | A | A | A | A |
| | Corona OPP | A | A | A | A | A | A | A | A | A |
| | Corona PET | A | A | A | A | A | A | A | A | A |
| Storage stability | | A | A | A | A | A | A | A | A | A |
| Intermittent ejection property | | A | A | A | A | A | A | A | A | A |
| Solvent resistance (Corona OPP) | | A | A | A | A | A | A | A | A | A |

[Table 9-1]

| | | Structure | Side chain SP value | Example 70 | Example 71 | Example 72 | Example 73 | Example 74 | Example 75 | Example 76 | Example 77 | Example 78 | Example 79 |
|---|---|---|---|---|---|---|---|---|---|---|---|---|---|
| Monomer B | MAA | | | - | | - | - | - | - | | - | | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 92.6% | 92.6% | 74.1% | 64.8% | - | - | 92.6% | 92.6% | 74.1% | 64.8% |
| | CHA | Alicyclic | 9.96 | - | - | - | 27.8% | 92.6% | 92.6% | - | - | - | 27.8% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | 18.5% | - | - | - | - | - | 18.5% | - |
| Surfactant (not reactive) Weight based on 100% of monomer | Emulgen A-90(solid content 100%) | - | - | 2.0% | 13.0% | 13.0% | 2.0% | 2.0% | 13.0% | 2.0% | 13.0% | 13.0% | 2.0% |
| | Emar 20CM(Solid content 25%) | - | - | - | - | - | - | - | - | - | - | - | - |
| | Sanisol B-50(solid content 50%) | - | - | 5.2% | - | - | 5.2% | 5.2% | - | 5.2% | - | - | 5.2% |
| Reactive surfactant Weight based on 100% of monomer | Latemul PD-420(solid content 100%) | - | - | | | | | | | | | | |

EP 4 549 524 A1

60

(continued)

| | | Side chain SP value | Example 70 | Example 71 | Example 72 | Example 73 | Example 74 | Example 75 | Example 76 | Example 77 | Example 78 | Example 79 |
|---|---|---|---|---|---|---|---|---|---|---|---|---|
| | Structure | - | | | | | | | | | | |
| Crosslinking agent Weight based on 100% of monomer | Adipic acid dihydrazide | | | | | | | | | | | |

[Table 9-2]

| | | Structure | Side chain SP value | Example 70 | Example 71 | Example 72 | Example 73 | Example 74 | Example 75 | Example 76 | Example 77 | Example 78 | Example 79 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | 20% | 20% | 20% | 20% | | | | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | 9% | 9% | 9% | 9% | 9% | 9% | | | | |
| | 3-methoxy-N,N-dimethylpropanamide | | | | | | | | | 25% | 25% | 25% | 25% |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

EP 4 549 524 A1

(continued)

| | | Structure | Side chain SP value | Example 70 | Example 71 | Example 72 | Example 73 | Example 74 | Example 75 | Example 76 | Example 77 | Example 78 | Example 79 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | | OPP | | A | A | A | A | A | A | A | A | A | A |
| | | Corona OPP | | A | A | A | A | A | A | A | A | A | A |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

63

[Table 10-1]

| | | Structure | Side chain SP value | Example 80 | Example 81 | Example 82 | Example 83 | Example 84 | Example 85 | Example 86 | Example 87 | Example 88 | Example 89 |
|---|---|---|---|---|---|---|---|---|---|---|---|---|---|
| Monomer B | MAA | | | - | - | - | - | - | - | - | - | - | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | - | - | 92.6% | 92.6% | 74.1% | 64.8% | - | - | 92.6% | 92.6% |
| | CHA | Alicyclic | 9.96 | 92.6% | 92.6% | - | - | - | 27.8% | 92.6% | 92.6% | - | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | - | 18.5% | - | - | - | - | - |
| Surfactant (not reactive) Weight based on 100% of monomer | Emulgen A-90(solid content 100%) | - | - | 2.0% | 13.0% | 2.0% | 13.0% | 13.0% | 2.0% | 2.0% | 13.0% | 2.0% | 13.0% |
| | Emar 20CM(Solid content 25%) | - | - | - | - | - | - | - | - | - | - | - | - |
| | Sanisol B-50(solid content 50%) | - | - | 5.2% | - | 5.2% | - | - | 5.2% | 5.2% | - | 5.2% | - |
| Reactive surfactant Weight based on 100% of monomer | Latemul PD-420(solid content 100%) | - | - | | | | | | | | | | |

(continued)

| | | Structure | Side chain SP value | Example 80 | Example 81 | Example 82 | Example 83 | Example 84 | Example 85 | Example 86 | Example 87 | Example 88 | Example 89 |
|---|---|---|---|---|---|---|---|---|---|---|---|---|---|
| Crosslinking agent Weight based on 100% of monomer | Adipic acid dihydrazide | - | - | | | | | | | | | | |

[Table 10-2]

| | | Structure | Side chain SP value | Example 80 | Example 81 | Example 82 | Example 83 | Example 84 | Example 85 | Example 86 | Example 87 | Example 88 | Example 89 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | 20% | 20% | 20% | 20% | 20% | 20% | | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | 25% | 25% | 9% | 9% | 9% | 9% | 9% | 9% | | |
| | 3-butoxy-N,N-dimethylpropanamide | | | | | | | | | | | 25% | 25% |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

| | | Structure | Side chain SP value | Example 80 | Example 81 | Example 82 | Example 83 | Example 84 | Example 85 | Example 86 | Example 87 | Example 88 | Example 89 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | | OPP | | A | A | A | A | A | A | A | A | A | A |
| | | Corona OPP | | A | A | A | A | A | A | A | A | A | A |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

EP 4 549 524 A1

[Table 11-1]

| | | Structure | Side chain SP value | Example 90 | Example 91 | Example 92 | Example 93 | Example 94 | Example 95 | Example 96 | Example 97 | Example 98 | Example 99 |
|---|---|---|---|---|---|---|---|---|---|---|---|---|---|
| Monomer B | MAA | | | - | - | - | - | - | - | | - | - | |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 74.1% | 64.8% | - | - | 92.6% | 92.6% | 74.1% | 64.8% | - | - |
| | CHA | Alicyclic | 9.96 | - | 27.8% | 92.6% | 92.6% | - | - | - | 27.8% | 92.6% | 92.6% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | 18.5% | - | - | - | - | - | 18.5% | - | - | - |
| Surfactant (not reactive) Weight based on 100% of monomer | Emulgen A-90(solid content 100%) | - | - | 13.0% | 2.0% | 2.0% | 13.0% | 2.0% | 13.0% | 13.0% | 2.0% | 2.0% | 13.0% |
| | Emar 20CM(Solid content 25%) | - | - | - | - | - | - | - | - | - | - | - | - |
| | Sanisol B-50(solid content 50%) | - | - | - | 5.2% | 5.2% | - | 5.2% | - | - | 5.2% | 5.2% | - |
| Reactive surfactant Weight based on 100% of monomer | Latemul PD-420(solid content 100%) | - | - | | | | | | | | | | |

(continued)

| | Structure | Side chain SP value | Example 90 | Example 91 | Example 92 | Example 93 | Example 94 | Example 95 | Example 96 | Example 97 | Example 98 | Example 99 |
|---|---|---|---|---|---|---|---|---|---|---|---|---|
| Crosslinking agent Weight based on 100% of monomer | Adipic acid dihydrazide | - | | | | | | | | | | |

[Table 11-2]

| | | Structure | Side chain SP value | Example 90 | Example 91 | Example 92 | Example 93 | Example 94 | Example 95 | Example 96 | Example 97 | Example 98 | Example 99 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | | | 20% | 20% | 20% | 20% | 20% | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | 25% | 25% | 25% | 25% | 9% | 9% | 9% | 9% | 9% | 9% |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

EP 4 549 524 A1

70

(continued)

| | | Structure | Side chain SP value | Example 90 | Example 91 | Example 92 | Example 93 | Example 94 | Example 95 | Example 96 | Example 97 | Example 98 | Example 99 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | | OPP | | A | A | A | A | A | A | A | A | A | A |
| | | Corona OPP | | A | A | A | A | A | A | A | A | A | A |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 12-1]

| | | Structure | Side chain SP value | Example 100 | Example 101 | Example 102 | Example 103 | Example 104 | Example 105 | Example 106 | Example 107 | Example 108 | Example 109 |
|---|---|---|---|---|---|---|---|---|---|---|---|---|---|
| Monomer B | MAA | | | - | | - | - | - | - | | - | | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 92.6% | 92.6% | 74.1% | 64.8% | - | - | 92.6% | 92.6% | 74.1% | 64.8% |
| | CHA | Alicyclic | 9.96 | - | - | - | 27.8% | 92.6% | 92.6% | - | - | - | 27.8% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | 18.5% | - | - | - | - | - | 18.5% | - |
| Surfactant (not reactive) Weight based on 100% of monomer | Emulgen A-90(solid content 100%) | - | - | 2.0% | 13.0% | 13.0% | 2.0% | 2.0% | 13.0% | 2.0% | 13.0% | 13.0% | 2.0% |
| | Emar 20CM(Solid content 25%) | - | - | - | - | - | - | - | - | - | - | - | - |
| | Sanisol B-50(solid content 50%) | - | - | 5.2% | - | - | 5.2% | 5.2% | - | 5.2% | - | - | 5.2% |
| Reactive surfactant Weight based on 100% of monomer | Latemul PD-420(solid content 100%) | - | - | | | | | | | | | | |

| Crosslinking agent Weight based on 100% of monomer | | Structure | Side chain SP value | Example 100 | Example 101 | Example 102 | Example 103 | Example 104 | Example 105 | Example 106 | Example 107 | Example 108 | Example 109 |
|---|---|---|---|---|---|---|---|---|---|---|---|---|---|
| | Adipic acid dihydra-zide | - | - | | | | | | | | | | |

[Table 12-2]

| | | Structure | Side chain SP value | Example 100 | Example 101 | Example 102 | Example 103 | Example 104 | Example 105 | Example 106 | Example 107 | Example 108 | Example 109 |
|---|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | | | | | 20% | 20% | 20% | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | 25% | 25% | 25% | 25% | 25% | 25% | 9% | 9% | 9% | 9% |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |
| Polymerization method | | | | Emulsification | Emulsification | Emulsification | Emulsification | Emulsification | Emulsification | Emulsification | Emulsification | Emulsification | Emulsification |

| | Structure | Side chain SP value | Example 100 | Example 101 | Example 102 | Example 103 | Example 104 | Example 105 | Example 106 | Example 107 | Example 108 | Example 109 |
|---|---|---|---|---|---|---|---|---|---|---|---|---|
| Polymer structure | | | Random | Random | Random | Random | Random | Random | Random | Random | Random | Random |
| Adhesion | OPP | | A | A | A | A | A | A | A | A | A | A |
| | Corona OPP | | A | A | A | A | A | A | A | A | A | A |
| | Corona PET | | A | A | A | A | A | A | A | A | A | A |
| Storage stability | | | A | A | A | A | A | A | A | A | A | A |
| Intermittent ejection property | | | A | A | A | A | A | A | A | A | A | A |
| Solvent resistance (Corona OPP) | | | A | A | A | A | A | A | A | A | A | A |

[Table 13-1]

| | | Structure | Side chain SP value | Example 110 | Example 111 | Example 112 | Example 113 | Example 114 | Example 115 | Example 116 | Example 117 | Example 118 | Example 119 |
|---|---|---|---|---|---|---|---|---|---|---|---|---|---|
| Monomer B | MAA | | | - | - | - | - | - | - | - | - | - | - |
| | DMMA | | | 7.4% | 7.4% | 7.4% | 7.4% | 7.4% | 7.4% | 7.4% | 7.4% | 7.4% | 7.4% |
| | CHMA | Alicyclic | 9.96 | - | - | 92.6% | 92.6% | 74.1% | 64.8% | - | - | 92.6% | 92.6% |
| | CHA | Alicyclic | 9.96 | 92.6% | 92.6% | - | - | - | 27.8% | 92.6% | 92.6% | - | - |
| | Vinylcyclohexane | Alicyclic | 8.54 | - | - | - | - | - | - | - | - | - | - |
| Monomer A | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | | | | | | | | | | |
| | 2-(acryloylamino)-2-methyl-4-pentanone | | 12.04 | - | - | - | - | - | - | - | - | - | - |
| Monomer C | MMA | | 10.26 | - | - | - | - | - | - | - | - | - | - |
| | BMA | | 9.48 | - | - | - | - | 18.5% | - | - | - | - | - |
| Surfactant (not reactive) | Emulgen A-90(solid content 100%) | - | - | 2.0% | 13.0% | 2.0% | 13.0% | 13.0% | 2.0% | 2.0% | 13.0% | 2.0% | 13.0% |
| Weight based on 100% of monomer | Emar 20CM(Solid content 25%) | - | - | - | - | - | - | - | - | - | - | - | - |
| | Sanisol B-50(solid content 50%) | - | - | 5.2% | - | 5.2% | - | - | 5.2% | 5.2% | - | 5.2% | - |
| Reactive surfactant Weight based on 100% of monomer | Latemul PD-420(solid content 100%) | - | - | | | | | | | | | | |

| | | Structure | Side chain SP value | Example 110 | Example 111 | Example 112 | Example 113 | Example 114 | Example 115 | Example 116 | Example 117 | Example 118 | Example 119 |
|---|---|---|---|---|---|---|---|---|---|---|---|---|---|
| Crosslinking agent Weight based on 100% of monomer | Adipic acid dihydrazide | - | - | | | | | | | | | | |

[Table 13-2]

| | | Structure | Side chain SP value | Example 110 | Example 111 | Example 112 | Example 113 | Example 114 | Example 115 | Example 116 | Example 117 | Example 118 | Example 119 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | | | | | | | 20% | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | 9% | 9% | | | | | | | | |
| | γ-valerolactone | | | | | 25% | 25% | 25% | 25% | 25% | 25% | 9% | 9% |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

EP 4 549 524 A1

78

(continued)

| | | Structure | Side chain SP value | Example 110 | Example 111 | Example 112 | Example 113 | Example 114 | Example 115 | Example 116 | Example 117 | Example 118 | Example 119 |
|---|---|---|---|---|---|---|---|---|---|---|---|---|---|
| Polymerization method | | | | Emulsification | Emulsification | Emulsification | Emulsification | Emulsification | Emulsification | Emulsification | Emulsification | Emulsification | Emulsification |
| Polymer structure | | | | Random | Random | Random | Random | Random | Random | Random | Random | Random | Random |
| Adhesion | | OPP | | A | A | A | A | A | A | A | A | A | A |
| | | Corona OPP | | A | A | A | A | A | A | A | A | A | A |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 14-1]

| | | Structure | Side chain SP value | Example 120 | Example 121 | Example 122 | Example 123 | Example 124 | Example 125 | Example 126 | Example 127 | Example 128 | Example 129 |
|---|---|---|---|---|---|---|---|---|---|---|---|---|---|
| Monomer B | MAA | | | - | - | - | - | - | - | | - | | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 74.1% | 64.8% | - | - | 92.6% | 92.6% | 74.1% | 64.8% | - | - |
| | CHA | Alicyclic | 9.96 | - | 27.8% | 92.6% | 92.6% | - | - | - | 27.8% | 92.6% | 92.6% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | 18.5% | - | - | - | - | - | 18.5% | - | - | - |
| Surfactant (not reactive) Weight based on 100% of monomer | Emulgen A-90(solid content 100%) | - | - | 13.0% | 2.0% | 2.0% | 13.0% | 2.0% | 13.0% | 13.0% | 2.0% | 2.0% | 13.0% |
| | Emar 20CM(Solid content 25%) | - | - | - | - | - | - | - | - | - | - | - | - |
| | Sanisol B-50(solid content 50%) | - | - | - | 5.2% | 5.2% | - | 5.2% | - | - | 5.2% | 5.2% | - |
| Reactive surfactant Weight based on 100% of monomer | Latemul PD-420(solid content 100%) | - | - | | | | | | | | | | |

80

(continued)

| | Structure | Side chain SP value | Example 120 | Example 121 | Example 122 | Example 123 | Example 124 | Example 125 | Example 126 | Example 127 | Example 128 | Example 129 |
|---|---|---|---|---|---|---|---|---|---|---|---|---|
| Crosslinking agent Weight based on 100% of monomer | Adipic acid dihydrazide | - | | | | | | | | | | |

[Table 14-2]

| | | Structure | Side chain SP value | Example 120 | Example 121 | Example 122 | Example 123 | Example 124 | Example 125 | Example 126 | Example 12 | Example 128 | Example 129 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | 20% | 20% | | | | | | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | 9% | 9% | 9% | 9% | | | | | | |
| | N-methyl-epsilon-caprolactam | | | | | | | 25% | 25% | 25% | 25% | 25% | 25% |
| | 2-hydroxylethylmorpho-line | | | | | | | | | | | | |
| | 2-hydroxylethylpyrroli-done | | | | | | | | | | | | |
| | Tripropylene glycol mono-methyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |
| Polymerization method | | | | Emulsification | Emulsification | Emulsfication | Emulsification | Emulsification | Emulsication | Emulsification | Emulsification | Emulsification | Emulsification |

82

(continued)

| | Structure | Side chain SP value | Example 120 | Example 121 | Example 122 | Example 123 | Example 124 | Example 125 | Example 126 | Example 12 | Example 128 | Example 129 |
|---|---|---|---|---|---|---|---|---|---|---|---|---|
| Polymer structure | | | Random | Random | Random | Random | Random | Random | Random | Random | Random | Random |
| Adhesion | OPP | | A | A | A | A | A | A | A | A | A | A |
| | Corona OPP | | A | A | A | A | A | A | A | A | A | A |
| | Corona PET | | A | A | A | A | A | A | A | A | A | A |
| Storage stability | | | A | A | A | A | A | A | A | A | A | A |
| Intermittent ejection property | | | A | A | A | A | A | A | A | A | A | A |
| Solvent resistance (Corona OPP) | | | A | A | A | A | A | A | A | A | A | A |

[Table 15-1]

| | | Structure | Side chain SP value | Example 130 | Example 131 | Example 132 | Example 133 | Example 134 | Example 135 | Example 136 | Example 137 | Example 138 |
|---|---|---|---|---|---|---|---|---|---|---|---|---|
| Monomer B | MAA | | | - | - | - | - | - | - | - | - | - |
| | DMMA | | | 7.4% | 7.4% | 7.4% | 7.4% | 7.4% | 7.4% | 7.4% | 7.4% | 7.4% |
| | CHMA | Alicyclic | 9.96 | 92.6% | 92.6% | 74.1% | 64.8% | - | - | 92.6% | 92.6% | 74.1% |
| | CHA | Alicyclic | 9.96 | - | - | - | 27.8% | 92.6% | 92.6% | - | - | - |
| Monomer A | Vinylcyclohexane | Alicyclic | 8.54 | - | - | - | - | - | - | - | - | - |
| | TBCHA | Alicyclic | 9.08 | - | - | - | - | - | - | - | - | - |
| | 4-acryloylmorpholine | Heterocyclic | 12.95 | - | - | - | - | - | - | - | - | - |
| | HCHMA | Alicyclic | 13.02 | - | - | - | - | - | - | - | - | - |
| | BzMA | Aromatic ring | 10.49 | - | - | - | - | - | - | - | - | - |
| Monomer C | 2-(acryloylamino)-2-methyl-4-pentanone | | 12.04 | - | - | - | - | - | - | - | - | - |
| | MMA | | 10.26 | - | - | 18.5% | - | - | - | - | - | 18.5% |
| | BMA | | 9.48 | - | - | 18.5% | - | - | - | - | - | 18.5% |
| Surfactant (not reactive) | Emulgen A-90 (solid content 100%) | - | - | 2.0% | 13.0% | 13.0% | 2.0% | 2.0% | 13.0% | 2.0% | 13.0% | 13.0% |
| | Emar 20CM (Solid content 25%) | - | - | - | - | - | - | - | - | - | - | - |
| | Sanisol B-50 (solid content 50%) | - | - | 5.2% | - | - | 5.2% | 5.2% | - | 5.2% | - | - |
| Reactive surfactant | Latemul PD-420 (solid content 100%) | - | - | | | | | | | | | |

Weight based on 100% of monomer (Surfactant (not reactive))

Weight based on 100% of monomer (Reactive surfactant)

| | | Structure | Side chain SP value | Example 130 | Example 131 | Example 132 | Example 133 | Example 134 | Example 135 | Example 136 | Example 137 | Example 138 |
|---|---|---|---|---|---|---|---|---|---|---|---|---|
| Crosslinking agent Weight based on 100% of monomer | Adipic acid dihydrazide | - | - | | | | | | | | | |

[Table 15-2]

| | | Structure | Side chain SP value | Example 130 | Example 131 | Example 132 | Example 133 | Example 134 | Example | Example 136 | Example 137 | Example 138 |
|---|---|---|---|---|---|---|---|---|---|---|---|---|
| Adjusting ink | Content of resin solution(30% solid content) | | | 25% | 25% | 25% | 25% | 25% | 25% | 25% | 25% | 25% |
| Content of adjusting ink solvent | 1,2-propanediol | | | 20% | 20% | 20% | 20% | 20% | 20% | | | |
| | 1,2-hexanediol | | | | | | | | | | | |
| | N-N diethylformamide | | | | | | | | | | | |
| | 3-methoxy-1-butanol | | | | | | | | | | | |
| | 2-pyrrolidone | | | | | | | | | | | |
| | 3-methyl-1,3-butanediol | | | | | | | | | | | |
| | 3-methoxy-N,N-dimethylpropanamide | | | | | | | | | | | |
| | 3-butoxy-N,N-dimethylpropanamide | | | | | | | | | | | |
| | Texanol | | | | | | | | | | | |
| | γ-valerolactone | | | | | | | | | | | |
| | N-methyl-epsilon-caprolactam | | | 9% | 9% | 9% | 9% | 9% | 9% | | | |
| | 2-hydroxylethylmorpholine | | | | | | | | | 25% | 25% | 25% |
| | 2-hydroxylethylpyrrolidone | | | | | | | | | | | |
| | Tripropylene glycol monomethyl ether | | | | | | | | | | | |
| | Dipropylene glycol monomethyl ether | | | | | | | | | | | |
| | Triethylene glycol monomethyl ether | | | | | | | | | | | |
| | Triethylene glycol monobutyl ether | | | | | | | | | | | |
| Polymerization method | | | | Emulsification | Emulsification | Emulsification | Emulsication | Emulsification | Emulsification | Emulsification | Emulsification | Emulsification |
| Polymer structure | | | | Random | Random | Random | Random | Random | Random | Random | Random | Random |

EP 4 549 524 A1

| | | Structure | Side chain SP value | Example 130 | Example 131 | Example 132 | Example 133 | Example 134 | Example | Example 136 | Example 137 | Example 138 |
|---|---|---|---|---|---|---|---|---|---|---|---|---|
| Adhesion | | OPP | | A | A | A | A | A | A | A | A | A |
| | | Corona OPP | | A | A | A | A | A | A | A | A | A |
| | | Corona PET | | A | A | A | A | A | A | A | A | A |
| Storage stability | | | | A | A | A | A | A | A | A | A | A |
| Intermittent ejection property | | | | A | A | A | A | A | A | A | A | A |
| Solvent resistance (Corona OPP) | | | | A | A | A | A | A | A | A | A | A |

[Table 16-1]

| | | Structure | Side chain SP value | Example 139 | Example 140 | Example 141 | Example 142 | Example 143 | Example 144 | Example 145 | Example 146 | Example 147 | Example 148 |
|---|---|---|---|---|---|---|---|---|---|---|---|---|---|
| Monomer B | MAA | | | - | - | - | - | - | - | - | - | - | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 64.8% | - | - | 92.6% | 92.6% | 74.1% | 64.8% | - | - | 92.6% |
| | CHA | Alicyclic | 9.96 | 27.8% | 92.6% | 92.6% | - | - | - | 27.8% | 92.6% | 92.6% | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | - | - | 18.5% | - | - | - | - |
| Surfactant (not reactive) Weight based on 100% of monomer | Emulgen A-90(solid content 100%) | - | - | 2.0% | 2.0% | 13.0% | 2.0% | 13.0% | 13.0% | 2.0% | 2.0% | 13.0% | 2.0% |
| | Emar 20CM(Solid content 25%) | - | - | - | - | - | - | - | - | - | - | - | - |
| | Sanisol B-50(solid content 50%) | - | - | 5.2% | 5.2% | - | 5.2% | - | - | 5.2% | 5.2% | - | 5.2% |
| Reactive surfactant Weight based on 100% of monomer | Latemul PD-420(solid content 100%) | - | - | | | | | | | | | | |

(continued)

| | | Side chain SP value | Example 139 | Example 140 | Example 141 | Example 142 | Example 143 | Example 144 | Example 145 | Example 146 | Example 147 | Example 148 |
|---|---|---|---|---|---|---|---|---|---|---|---|---|
| | Structure | | | | | | | | | | | |
| agent Weight based on 100% of monomer | Adipic acid dihydra-zide | - | | | | | | | | | | |

[Table 16-2]

| | | | Example 139 | Example 140 | Example 141 | Example 142 | Example 143 | Example 144 | 145 | Example 146 | Example 147 | Example 148 |
|---|---|---|---|---|---|---|---|---|---|---|---|---|
| Adjusting ink | Structure | | | | | | | | | | | |
| | Side chain SP value | | | | | | | | | | | |
| Content of resin solution(30% solid content) | | | 25% | 25% | 25% | 25% | 25% | 25% | 25% | 25% | 25% | 25% |
| Content of adjusting ink solvent | 1,2-propanediol | | | | | 20% | 20% | 20% | 20% | 20% | 20% | |
| | 1,2-hexanediol | | | | | | | | | | | |
| | N-N diethylformamide | | | | | | | | | | | |
| | 3-methoxy-1-butanol | | | | | | | | | | | |
| | 2-pyrrolidone | | | | | | | | | | | |
| | 3-methyl-1,3-butanediol | | | | | | | | | | | |
| | 3-methoxy-N,N-dimethylpropanamide | | | | | | | | | | | |
| | 3-butoxy-N,N-dimethylpropanamide | | | | | | | | | | | |
| | Texanol | | | | | | | | | | | |
| | γ-valerolactone | | | | | | | | | | | |
| | N-methyl-epsilon-caprolactam | | | | | | | | | | | |
| | 2-hydroxylethylmorpholine | | 25% | 25% | 25% | 9% | 9% | 9% | 9% | 9% | 9% | |
| | 2-hydroxylethylpyrrolidone | | | | | | | | | | | 25% |
| | Tripropylene glycol mono-methyl ether | | | | | | | | | | | |
| | Dipropylene glycol mono-methyl ether | | | | | | | | | | | |
| | Triethylene glycol mono-methyl ether | | | | | | | | | | | |
| | Triethylene glycol mono-butyl ether | | | | | | | | | | | |
| Polymerization method | | | Emulsification | Emulsification | Emuls fication | Emulsification | Emulsification | Emulsification | Emulsification | Emulsification | Emulsification | Emulsification |

(continued)

| | | Structure | Side chain SP value | Example 139 | Example 140 | Example 141 | Example 142 | Example 143 | Example 144 | 145 | Example 146 | Example 147 | Example 148 |
|---|---|---|---|---|---|---|---|---|---|---|---|---|---|
| Polymer structure | | | | Random | Random | Random | Random | Random | Random | Random | Random | Random | Random |
| Adhesion | OPP | | | A | A | A | A | A | A | A | A | A | A |
| | Corona OPP | | | A | A | A | A | A | A | A | A | A | A |
| | Corona PET | | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 17-1]

| | | Structure | Side chain SP value | Example 149 | Example 150 | Example 151 | Example 152 | Example 153 | Example 154 | Example 155 | Example 156 | Example 157 | Example 158 |
|---|---|---|---|---|---|---|---|---|---|---|---|---|---|
| Monomer B | MAA | | | | - | - | - | - | - | | - | | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 92.6% | 74.1% | 64.8% | - | - | 92.6% | 92.6% | 74.1% | 64.8% | - |
| | CHA | Alicyclic | 9.96 | - | - | 27.8% | 92.6% | 92.6% | - | - | - | 27.8% | 92.6% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | 18.5% | - | - | - | - | - | 18.5% | - | - |
| Surfactant (not reactive) Weight based on 100% of monomer | Emulgen A-90(solid content 100%) | - | - | 13.0% | 13.0% | 2.0% | 2.0% | 13.0% | 2.0% | 13.0% | 13.0% | 2.0% | 2.0% |
| | Emar 20CM(Solid content 25%) | - | - | - | - | - | - | - | - | - | - | - | - |
| | Sanisol B-50(solid content 50%) | - | - | - | - | 5.2% | 5.2% | - | 5.2% | - | - | 5.2% | 5.2% |
| Reactive surfactant Weight based on 100% of monomer | Latemul PD-420(solid content 100%) | - | - | | | | | | | | | | |

| | | Structure | Side chain SP value | Example 149 | Example 150 | Example 151 | Example 152 | Example 153 | Example 154 | Example 155 | Example 156 | Example 157 | Example 158 |
|---|---|---|---|---|---|---|---|---|---|---|---|---|---|
| agent Weight based on 100% of monomer | Adipic acid dihydrazide | - | - | | | | | | | | | | |

[Table 17-2]

| | | Structure | Side chain SP value | Example 149 | Example 150 | Example 151 | Example 152 | Example 153 | Example 154 | Example 155 | Example 156 | Example 157 | Example 158 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | | | | 20% | 20% | 20% | 20% | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ -valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | 25% | 25% | 25% | 25% | 25% | 9% | 9% | 9% | 9% | 9% |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |
| Polymerization method | | | | Emulsification | Emulsification | Emulsfication | Emulsfication | Emulsfication | Emulsilication | Emulsfication | Emulsfication | Emulsfication | Emulsfication |

(continued)

| | | Example 149 | Example 150 | Example 151 | Example 152 | Example 153 | Example 154 | Example 155 | Example 156 | Example 157 | Example 158 |
|---|---|---|---|---|---|---|---|---|---|---|---|
| Polymer structure | Structure / Side chain SP value | Random | Random | Random | Random | Random | Random | Random | Random | Random | Random |
| Adhesion | OPP | A | A | A | A | A | A | A | A | A | A |
| | Corona OPP | A | A | A | A | A | A | A | A | A | A |
| | Corona PET | A | A | A | A | A | A | A | A | A | A |
| Storage stability | | A | A | A | A | A | A | A | A | A | A |
| Intermittent ejection property | | A | A | A | A | A | A | A | A | A | A |
| Solvent resistance (Corona OPP) | | A | A | A | A | A | A | A | A | A | A |

[Table 18-1]

| | | Structure | Side chain SP value | Example 159 | Example 160 | Example 161 | Example 162 | Example 163 | Example 164 | Example 165 | Example 166 | Example 167 | Example 168 |
|---|---|---|---|---|---|---|---|---|---|---|---|---|---|
| Monomer B | MAA | | | - | - | - | - | - | - | - | - | - | - |
| | DMMA | | | 7.4% | 1.4% | 7.4% | 7.4% | 7.4% | 7.4% | 7.4% | 7.4% | 7.4% | 7.4% |
| | CHMA | Alicyclic | 9.96 | - | 92.6% | 92.6% | 74.1% | 64.8% | - | - | 92.6% | 92.6% | 74.1% |
| | CHA | Alicyclic | 9.96 | 92.6 | - | - | - | 27.8% | 92.6% | 92.6% | - | - | - |
| Monomer A | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | 18.5% | - | - | - | - | - | 18.5% |
| Surfactant (not reactive) Weight based on 100% of monomer | Emulgen A-90(solid content 100%) | - | - | 13.0% | 2.0% | 13.0% | 13.0% | 2.0% | 2.0% | 13.0% | 2.0% | 13.0% | 13.0% |
| | Emar 20CM(Solid content 25%) | - | - | - | - | - | - | - | - | - | - | - | - |
| | Sanisol B-50(solid content 50%) | - | - | - | 5.2% | - | - | 5.2% | 5.2% | - | 5.2% | - | - |
| Reactive surfactant Weight based on 100% of monomer | Latemul PD-420(solid content 100%) | - | - | | | | | | | | | | |

| | | Structure | Side chain SP value | Example 159 | Example 160 | Example 161 | Example 162 | Example 163 | Example 164 | Example 165 | Example 166 | Example 167 | Example 168 |
|---|---|---|---|---|---|---|---|---|---|---|---|---|---|
| agent Weight based on 1E of monomer | Adipic acid dihydrazide | - | - | | | | | | | | | | |

[Table 18-2]

| | Structure | Side chain SP value | Example 159 | Example 160 | Example 161 | Example 162 | Example 163 | Example 164 | Example | Example 166 | Example 167 | Example 168 |
|---|---|---|---|---|---|---|---|---|---|---|---|---|
| Adjusting ink | Content of resin solution(30% solid content) | | 25% | 25% | 25% | 25% | 25% | 25% | 25% | 25% | 25% | 25% |
| Content of adjusting ink solvent | 1,2-propanediol | | 20% | | | | | | | | | |
| | 1,2-hexanediol | | | | | | | | | 20% | 20% | 20% |
| | N-N diethylformamide | | | | | | | | | | | |
| | 3-methoxy-1-butanol | | | | | | | | | | | |
| | 2-pyrrolidone | | | | | | | | | | | |
| | 3-methyl-1,3-butanediol | | | | | | | | | | | |
| | 3-methoxy-N,N-dimethylpropanamide | | | | | | | | | | | |
| | 3-butoxy-N,N-dimethylpropanamide | | | | | | | | | | | |
| | Texanol | | | | | | | | | | | |
| | γ-valerolactone | | | | | | | | | | | |
| | N-methyl-epsilon-caprolactam | | | | | | | | | | | |
| | 2-hydroxylethylmorpholine | | | | | | | | | | | |
| | 2-hydroxylethylpyrrolidone | | 9% | | | | | | | | | |
| | Tripropylene glycol monomethyl ether | | | 25% | 25% | 25% | 25% | 25% | 25% | 9% | 9% | 9% |
| | Dipropylene glycol mono-methyl ether | | | | | | | | | | | |
| | Triethylene glycol mono-methyl ether | | | | | | | | | | | |
| | Triethylene glycol mono-butyl ether | | | | | | | | | | | |
| | Polymerization method | | Emulsification | Emulsification | Emulsification | Emulsification | Emulsification | Emulsification | Emulsification | Emulsification | Emulsification | Emulsification |

98

(continued)

| | Structure | Side chain SP value | Example 159 | Example 160 | Example 161 | Example 162 | Example 163 | Example 164 | Example | Example 166 | Example 167 | Example 168 |
|---|---|---|---|---|---|---|---|---|---|---|---|---|
| Polymer structure | | | Random | Random | Random | Random | Random | Random | Random | Random | Random | Random |
| Adhesion | OPP | | A | A | A | A | A | A | A | A | A | A |
| | Corona OPP | | A | A | A | A | A | A | A | A | A | A |
| | Corona PET | | A | A | A | A | A | A | A | A | A | A |
| Storage stability | | | A | A | A | A | A | A | A | A | A | A |
| Intermittent ejection property | | | A | A | A | A | A | A | A | A | A | A |
| Solvent resistance (Corona OPP) | | | A | A | A | A | A | A | A | A | A | A |

[Table 19-1]

| | | Structure | Side chain SP value | Example 169 | Example 170 | Example 171 | Example 172 | Example 173 | Example 174 | Example 175 | Example 176 | Example 177 | Example 178 |
|---|---|---|---|---|---|---|---|---|---|---|---|---|---|
| Monomer B | MAA | | | - | - | - | - | - | - | - | - | - | - |
| | DMMA | | | 7.4% | 7.4% | 7.4% | 7.4% | 7.4% | 7.4% | 7.4% | 7.4% | 7.4% | 7.4% |
| | CHMA | Alicyclic | 9.96 | 64.8% | - | - | 92.6% | 92.6% | 74.1% | 64.8% | - | - | 92.6% |
| | CHA | Alicyclic | 9.96 | 27.8% | 92.6% | 92.6% | - | - | - | 27.8% | 92.6% | 92.6% | - |
| Monomer A | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | - | - | 18.5% | - | - | - | - |
| Surfactant (not reactive) | Emulgen A-90(solid content 100%) | - | - | 2.0% | 2.0% | 13.0% | 2.0% | 13.0% | 13.0% | 2.0% | 2.0% | 13.0% | 2.0% |
| | Emar 20CM(Solid content 25%) | - | - | - | - | - | - | - | - | - | - | - | - |
| Weight based on 100% of monomer | Sanisol B-50(solid content 50%) | - | - | 5.2% | 5.2% | - | 5.2% | - | - | 5.2% | 5.2% | - | 5.2% |
| Reactive surfactant / Weight based on 100% of monomer | Latemul PD-420(solid content 100%) | - | - | | | | | | | | | | |

(continued)

| | | Structure | Side chain SP value | Example 169 | Example 170 | Example 171 | Example 172 | Example 173 | Example 174 | Example 175 | Example 176 | Example 177 | Example 178 |
|---|---|---|---|---|---|---|---|---|---|---|---|---|---|
| agent Weight based on 100% of monomer | Adipic acid dihydrazide | - | - | | | | | | | | | | |

[Table 19-2]

| | | Structure | Side chain SP value | Example 169 | Example 170 | Example 171 | Example 172 | Example 173 | Example 174 | Example 175 | Example 176 | Example 177 | Example 178 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | 20% | | | | | | | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ -valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | 9% | 9% | 9% | | | | | | | |
| | Dipropylene glycol monomethyl ether | | | | | | 25% | 25% | 25% | 25% | 25% | 25% | 9% |
| | Triethylene glycol mono-methyl ether | | | | | | | | | | | | |
| | Triethylene glycol mono-butyl ether | | | | | | | | | | | | |
| Polymerization method | | | | Emulsification | Emulsification | Emulsification | Emulsfication | Emulsification | Emulsfication | Emulsfication | Emulsification | EmulsFication | Emulsification |

(continued)

| | | Example 169 | Example 170 | Example 171 | Example 172 | Example 173 | Example 174 | Example 175 | Example 176 | Example 177 | Example 178 |
|---|---|---|---|---|---|---|---|---|---|---|---|
| Polymer structure | Structure Side chain SP value | Random | Random | Random | Random | Random | Random | Random | Random | Random | Random |
| Adhesion | OPP | A | A | A | A | A | A | A | A | A | A |
| | Corona OPP | A | A | A | A | A | A | A | A | A | A |
| | Corona PET | A | A | A | A | A | A | A | A | A | A |
| Storage stability | | A | A | A | A | A | A | A | A | A | A |
| Intermittent ejection property | | A | A | A | A | A | A | A | A | A | A |
| Solvent resistance (Corona OPP) | | A | A | A | A | A | A | A | A | A | A |

[Table 20-1]

| | | Structure | Side chain SP value | Example 179 | Example 180 | Example 181 | Example 182 | Example 183 | Example 184 | Example 185 | Example 186 | Example 187 | Example 188 |
|---|---|---|---|---|---|---|---|---|---|---|---|---|---|
| Monomer B | MAA | | | | - | - | - | - | - | | - | | - |
| | DMMA | | | 7.4% | 7.4% | 7.4% | 7.4% | 7.4% | 7.4% | 7.4% | 7.4% | 7.4% | 7.4% |
| Monomer A | CHMA | Alicyclic | 9.96 | 92.6% | 74.1% | 64.8% | - | - | 92.6% | 92.6% | 74.1% | 64.8% | - |
| | CHA | Alicyclic | 9.96 | - | - | 27.8% | 92.6% | 92.6% | - | - | - | 27.8% | 92.6% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | 18.5% | - | - | - | - | - | 18.5% | - | - |
| Surfactant (not reactive) Weight based on 100% of monomer | Emulgen A-90(solid content 100%) | - | - | 13.0% | 13.0% | 2.0% | 2.0% | 13.0% | 2.0% | 13.0% | 13.0% | 2.0% | 2.0% |
| | Emar 20CM(Solid content 25%) | - | - | - | - | - | - | - | - | - | - | - | - |
| | Sanisol B-50(solid content 50%) | - | - | - | - | 5.2% | 5.2% | - | 5.2% | - | - | 5.2% | 5.2% |
| Reactive surfactant Weight based on 100% of monomer | Latemul PD-420(solid content 100%) | - | - | | | | | | | | | | |

(continued)

| | | Side chain SP value | Example 179 | Example 180 | Example 181 | Example 182 | Example 183 | Example 184 | Example 185 | Example 186 | Example 187 | Example 188 |
|---|---|---|---|---|---|---|---|---|---|---|---|---|
| | Structure | - | | | | | | | | | | |
| agent Weight based on 100% of monomer | Adipic acid dihydrazide | - | | | | | | | | | | |

[Table 20-2]

| | | Structure | Side chain SP value | Example 179 | Example 180 | Example 181 | Example 182 | Example 183 | Example 184 | Example 185 | Example 186 | Example 187 | Example 188 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | 20% | 20% | 20% | | | | | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpro-panamide | | | | | | | | | | | | |
| | Texanol | | | | | | | | | | | | |
| | $\gamma$-valerolactone | | | | | | | | | | | | |
| | N-methyl-epsilon-caprolactam | | | | | | | | | | | | |
| | 2-hydroxylethylmorpholine | | | | | | | | | | | | |
| | 2-hydroxylethylpyrrolidone | | | | | | | | | | | | |
| | Tripropylene glycol mono-methyl ether | | | | | | | | | | | | |
| | Dipropylene glycol mono-methyl ether | | | 9% | 9% | 9% | 9% | 9% | | | | | |
| | Triethylene glycol monomethyl ether | | | | | | | | 25% | 25% | 25% | 25% | 25% |
| | Triethylene glycol monobutyl ether | | | | | | | | | | | | |
| Polymerization method | | | | Emulsification | Emulsification | Emulsfication | Emulsification | Emulsification | Emul sification | Emulsification | Emulsification | Emulsification | Emulsification |

(continued)

| | | Structure | Side chain SP value | Example 179 | Example 180 | Example 181 | Example 182 | Example 183 | Example 184 | Example 185 | Example 186 | Example 187 | Example 188 |
|---|---|---|---|---|---|---|---|---|---|---|---|---|---|
| Polymer structure | | | | Random | Random | Random | Random | Random | Random | Random | Random | Random | Random |
| Adhesion | OPP | | | A | A | A | A | A | A | A | A | A | A |
| | Corona OPP | | | A | A | A | A | A | A | A | A | A | A |
| | Corona PET | | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 21-1]

| | | Structure | Side chain SP value | Example 189 | Example 190 | Example 191 | Example 192 | Example 193 | Example 194 | Example 195 | Example 196 | Example 197 | Example 198 |
|---|---|---|---|---|---|---|---|---|---|---|---|---|---|
| Monomer B | MAA | | | - | - | - | - | - | - | - | - | - | - |
| | DMMA | | | 7.4% | 1.4% | 7.4% | 7.4% | 7.4% | 7.4% | 7.4% | 7.4% | 7.4% | 7.4% |
| Monomer A | CHMA | Alicyclic | 9.96 | - | 92.6% | 92.6% | 74.1% | 64.8% | - | - | 92.6% | 92.6% | 74.1% |
| | CHA | Alicyclic | 9.96 | 92.6 | - | - | - | 27.8% | 92.6% | 92.6% | - | - | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | 18.5% | - | - | - | - | - | 18.5% |
| Surfactant (not reactive) Weight based on 100% of monomer | Emulgen A-90(solid content 100%) | - | - | 13.0% | 2.0% | 13.0% | 13.0% | 2.0% | 2.0% | 13.0% | 2.0% | 13.0% | 13.0% |
| | Emar 20CM(Solid content 25%) | - | - | - | - | - | - | - | - | - | - | - | - |
| | Sanisol B-50(solid content 50%) | - | - | - | 5.2% | - | - | 5.2% | 5.2% | - | 5.2% | - | - |
| Reactive surfactant Weight based on 100% of monomer | Latemul PD-420(solid content 100%) | - | - | | | | | | | | | | |

| | | Structure | Side chain SP value | Example 189 | Example 190 | Example 191 | Example 192 | Example 193 | Example 194 | Example 195 | Example 196 | Example 197 | Example 198 |
|---|---|---|---|---|---|---|---|---|---|---|---|---|---|
| agent Weight based on 100% of monomer | Adipic acid dihydra-zide | - | - | | | | | | | | | | |

EP 4 549 524 A1

[Table 21-2]

| | | Structure | Side chain SP value | Example 189 | Example 190 | Example 191 | Example 192 | Example 193 | Example 194 | Example 195 | Example 196 | Example 197 | Example 198 |
|---|---|---|---|---|---|---|---|---|---|---|---|---|---|
| Adjusting ink | Content of resin solution(30% solid content) | | | 25% | | 25% | 25% | 25% | 25% | 25% | | 25% | 25% |
| Content of adjusting ink solvent | 1,2-propanediol | | | | 20% | 20% | 20% | 20% | 20% | 20% | | | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethyl-propanamide | | | | | | | | | | | | |
| | Texanol | | | | | | | | | | | | |
| | $\gamma$-valerolactone | | | | | | | | | | | | |
| | N-methyl-epsilon-caprolactam | | | | | | | | | | | | |
| | 2-hydroxylethylmorpholine | | | | | | | | | | | | |
| | 2-hydroxylethylpyrrolidone | | | | | | | | | | | | |
| | Tripropylene glycol mono-methyl ether | | | | | | | | | | | | |
| | Dipropylene glycol mono-methyl ether | | | | | | | | | | | | |
| | Triethylene glycol mono-methyl ether | | | 25% | 9% | 9% | 9% | 9% | 9% | 9% | | | |
| | Triethylene glycol monobutyl ether | | | | | | | | | | 25% | 25% | |
| Polymerization method | | | | Emulsification | Emulsification | Emuls fication | Emulsification | Emulsification | Emulsification | Emulsification | Emulsification | Emulsification | Emulsification |

| | | Structure | Side chain SP value | Example 189 | Example 190 | Example 191 | Example 192 | Example 193 | Example 194 | Example 195 | Example 196 | Example 197 | Example 198 |
|---|---|---|---|---|---|---|---|---|---|---|---|---|---|
| Polymer structure | | | | Random | Random | Random | Random | Random | Random | Random | Random | Random | Random |
| Adhesion | | OPP | | A | A | A | A | A | A | A | A | A | A |
| | | Corona OPP | | A | A | A | A | A | A | A | A | A | A |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 22-1]

| | | Structure | Side chain SP value | Example 199 | Example 200 | Example 201 | Example 202 | Example 203 | Example 204 | Example 205 | Example 206 | Example 207 |
|---|---|---|---|---|---|---|---|---|---|---|---|---|
| Monomer B | MAA | | | - | - | - | - | - | - | - | - | - |
| | DMMA | | | 7.4% | 7.4% | 7.4% | 7.4% | 7.4% | 7.4% | 7.4% | 7.4% | 7.4% |
| Monomer A | CHMA | Alicyclic | 9.96 | 64.8% | - | - | 92.6% | 92.6% | 74.1% | 64.8% | - | - |
| | CHA | Alicyclic | 9.96 | 27.8% | 92.6% | 92.6% | - | - | - | 27.8% | 92.6% | 92.6% |
| | Vinylcyclohexane | Alicyclic | 8.54 | - | - | - | - | - | - | - | - | - |
| | TBCHA | Alicyclic | 9.08 | - | - | - | - | - | - | - | - | - |
| | 4-acryloylmorpholine | Heterocyclic | 12.95 | - | - | - | - | - | - | - | - | - |
| | HCHMA | Alicyclic | 13.02 | - | - | - | - | - | - | - | - | - |
| | BzMA | Aromatic ring | 10.49 | - | - | - | - | - | - | - | - | - |
| Monomer C | 2-(acryloylamino)-2-methyl-4-pentanone | | 12.04 | - | - | - | - | - | - | - | - | - |
| | MMA | | 10.26 | - | - | - | - | - | - | - | - | - |
| | BMA | | 9.48 | - | - | - | - | - | 18.5% | - | - | - |
| Surfactant (not reactive) Weight based on 100% of monomer | Emulgen A-90(solid content 100%) | - | - | 2.0% | 2.0% | 13.0% | 2.0% | 13.0% | 13.0% | 2.0% | 2.0% | 13.0% |
| | Emar 20CM(Solid content 25%) | - | - | - | - | - | - | - | - | - | - | - |
| | Sanisol B-50(solid content 50%) | - | - | 5.2% | 5.2% | - | 5.2% | - | - | 5.2% | 5.2% | - |
| Reactive surfactant Weight based on 100% of monomer | Latemul PD-420(solid content 100%) | - | - | | | | | | | | | |

EP 4 549 524 A1

| | | Structure | Side chain SP value | Example 199 | Example 200 | Example 201 | Example 202 | Example 203 | Example 204 | Example 205 | Example 206 | Example 207 |
|---|---|---|---|---|---|---|---|---|---|---|---|---|
| agent Weight based on 100% of monomer | Adipic acid dihydra-zide | - | - | | | | | | | | | |

[Table 22-2]

|  |  | Side chain SP value | Example 199 | Example 200 | Example 201 | Example 202 | Example 203 | Example 204 | Example 5 | Example 206 | Example 207 |
|---|---|---|---|---|---|---|---|---|---|---|---|
| Adjusting ink |  |  |  |  |  |  |  |  |  |  |  |
|  | Structure |  |  |  |  |  |  |  |  |  |  |
|  | Content of resin solution(30% solid content) |  | 25% | 25% | 25% | 25% | 25% | 25% | 25% | 25% | 25% |
| Content of adjusting ink solvent | 1,2-propanediol |  |  |  |  | 20% | 20% | 20% | 20% | 20% | 20% |
|  | 1,2-hexanediol |  |  |  |  |  |  |  |  |  |  |
|  | N-N diethylformamide |  |  |  |  |  |  |  |  |  |  |
|  | 3-methoxy-1-butanol |  |  |  |  |  |  |  |  |  |  |
|  | 2-pyrrolidone |  |  |  |  |  |  |  |  |  |  |
|  | 3-methyl-1,3-butanediol |  |  |  |  |  |  |  |  |  |  |
|  | 3-methoxy-N,N-dimethylpropanamide |  |  |  |  |  |  |  |  |  |  |
|  | 3-butoxy-N,N-dimethylpropanamide |  |  |  |  |  |  |  |  |  |  |
|  | Texanol |  |  |  |  |  |  |  |  |  |  |
|  | γ-valerolactone |  |  |  |  |  |  |  |  |  |  |
|  | N-methyl-epsilon-caprolactam |  |  |  |  |  |  |  |  |  |  |
|  | 2-hydroxylethylmorpholine |  |  |  |  |  |  |  |  |  |  |
|  | 2-hydroxylethylpyrrolidone |  |  |  |  |  |  |  |  |  |  |
|  | Tripropylene glycol mono-methyl ether |  |  |  |  |  |  |  |  |  |  |
|  | Dipropylene glycol mono-methyl ether |  |  |  |  |  |  |  |  |  |  |
|  | Triethylene glycol mono-methyl ether |  |  |  |  |  |  |  |  |  |  |
|  | Triethylene glycol monobutyl ether |  | 25% | 25% | 25% | 9% | 9% | 9% | 9% | 9% | 9% |
| Polymerization method |  |  | Emulsication | Emulsification | Emulsification | Emulsication | Emulsification | Emulsification | Emulsification | Emulsification | Emulsification |
| Polymer structure |  |  | Random | Random | Random | Random | Random | Random | Random | Random | Random |

114

(continued)

| | Structure | Side chain SP value | Example 199 | Example 200 | Example 201 | Example 202 | Example 203 | Example 204 | Example 5 | Example 206 | Example 207 |
|---|---|---|---|---|---|---|---|---|---|---|---|
| Adhesion | OPP | | A | A | A | A | A | A | A | A | A |
| | Corona OPP | | A | A | A | A | A | A | A | A | A |
| | Corona PET | | A | A | A | A | A | A | A | A | A |
| Storage stability | | | A | A | A | A | A | A | A | A | A |
| Intermittent ejection property | | | A | A | A | A | A | A | A | A | A |
| Solvent resistance (Corona OPP) | | | A | A | A | A | A | A | A | A | A |

[Table 23-1]

| | | Structure | Side chain SP value | Example 208 | Example 209 | Example 210 | Example 211 | Example 212 | Example 213 | Example 214 | Example 215 | Example 216 | Example 217 |
|---|---|---|---|---|---|---|---|---|---|---|---|---|---|
| Monomer B | MAA | | | - | - | - | - | - | - | - | - | - | - |
| | DMMA | | | 7.4% | 7.4% | 7.4% | 7.4% | 7.4% | 7.4% | 7.4% | 7.4% | 7.4% | 1.9% |
| Monomer A | CHMA | Alicyclic | 9.96 | - | - | 92.6% | 92.6% | 74.1% | 64.8% | 50.0% | - | - | 98.1% |
| | CHA | Alicyclic | 9.96 | 92.6 | 92.6% | - | - | - | 27.8% | - | 92.6% | 92.6% | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | - | 18.5% | - | 42.6% | - | - | - |
| Surfactant (not reactive) Weight based on 100% of monomer | Emulgen A-90(solid content 100%) | - | - | 2.0% | 13.0% | 20% | 13.0% | 13.0% | 2.0% | 2.0% | 2.0% | 13.0% | 2.0% |
| | Emar 20CM(Solid content 25%) | - | - | - | - | - | - | - | - | - | - | - | - |
| | Sanisol B-50(solid content 50%) | - | - | 5.2% | - | 5.2% | - | - | 5.2% | 5.2% | 5.2% | - | 5.2% |
| Reactive surfactant Weight based on 100% of monomer | Latemul PD-420(solid content 100%) | - | - | | | | | | | | | | |

(continued)

| | Structure | Side chain SP value | Example 208 | Example 209 | Example 210 | Example 211 | Example 212 | Example 213 | Example 214 | Example 215 | Example 216 | Example 217 |
|---|---|---|---|---|---|---|---|---|---|---|---|---|
| agent Weight based on 10% of monomer | Adipic acid dihydrazide | - | - | | | | | | | | | |

[Table 23-2]

| | | Structure | Side chain SP value | Example 208 | Example | Example 210 | Example 211 | Example 212 | Example 213 | Example 214 | Example 215 | Example 216 | Example 217 |
|---|---|---|---|---|---|---|---|---|---|---|---|---|---|
| Adjusting ink | Content of resin solution(30% solid content) | | | 13% | 13% | 13% | 13% | 13% | 13% | 13% | 25% | 25% | 13% |
| Content of adjusting ink solvent | 1,2-propanediol | | | 25% | 25% | 25% | 25% | 25% | 25% | 25% | | | |
| | 1,2-hexanediol | | | 9% | 9% | 9% | 9% | 9% | 9% | 9% | 9% | 9% | 9% |
| | N-N diethylformamide | | | | | | | | | | | | |
| | 3-methoxy-1-butanol | | | | | | | | | | 20% | 20% | 20% |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |
| Polymerization method | | | | Emulsification | Emulsification | Emulsification | Emulslication | Emulsification | Emulsification | Emulsification | Emulsification | Emulsification | Emulsification |

| | Structure | Side chain SP value | Example 208 | Example | Example 210 | Example 211 | Example 212 | Example 213 | Example 214 | Example 215 | Example 216 | Example 217 |
|---|---|---|---|---|---|---|---|---|---|---|---|---|
| Polymer structure | | | Random | Random | Random | Random | Random | Random | Random | Random | Random | Random |
| Adhesion | OPP | | A | A | A | A | A | A | A | A | A | A |
| | Corona OPP | | A | A | A | A | A | A | A | A | A | A |
| | Corona PET | | A | A | A | A | A | A | A | A | A | A |
| Storage stability | | | A | A | A | A | A | A | A | A | A | A |
| Intermittent ejection property | | | A | A | A | A | A | A | A | A | A | A |
| Solvent resistance (Corona OPP) | | | A | A | A | A | A | A | A | A | A | A |

[Table 24-1]

| | | Structure | Side chain SP value | Example 218 | Example 219 | Example 220 | Example 221 | Example 222 | Example 223 | Example 224 | Example 225 | Example 226 | Example 227 |
|---|---|---|---|---|---|---|---|---|---|---|---|---|---|
| Monomer B | MAA | | | | 1.5% | 1.5% | 1.5% | 1.5% | 1.5% | 1.5% | 1.5% | 1.5% | 1.5% |
| | DMMA | | | 1.5% | - | - | - | - | - | - | - | - | - |
| Monomer A | CHMA | Alicyclic | 9.96 | 98.1% | 78.8% | 68.6% | 98.5% | - | 78.8% | 68.6% | 98.5% | - | 78.8% |
| | CHA | Alicyclic | 9.96 | - | - | 29.4% | - | 98.5% | - | 29.4% | - | 98.5% | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | 19.7% | - | - | - | 19.7% | - | - | - | 19.7% |
| Surfactant (not reactive) Weight based on 100% of monomer | Emulgen A-90(solid content 100%) | - | - | 13.0% | 2.0% | 2.0% | 2.0% | 2.0% | 2.0% | 2.0% | 2.0% | 2.0% | 2.0% |
| | Emar 20CM(Solid content 25%) | - | - | - | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

| | | Structure | Side chain SP value | Example 218 | Example 219 | Example 220 | Example 221 | Example 222 | Example 223 | Example 224 | Example 225 | Example 226 | Example 227 |
|---|---|---|---|---|---|---|---|---|---|---|---|---|---|
| agent Weight based on 105 of monomer | Adipic acid dihydrazide | - | - | | | | | | | | | | |

[Table 24-2]

| | | Structure | Side chain SP value | Example 218 | Example 219 | Example 220 | Example 221 | Example 222 | Example 223 | Example 224 | Example 225 | Example 226 | Example 227 |
|---|---|---|---|---|---|---|---|---|---|---|---|---|---|
| Adjusting ink | Content of resin solution(30% solid content) | | | 13% | 25% | 25% | 25% | 25% | 25% | 25% | 25% | 25% | 25% |
| Content of adjusting ink solvent | 1,2-propanediol | | | | | | | | | | | | |
| | 1,2-hexanediol | | | 9% | 25% | 25% | 25% | 25% | | | | | |
| | N-N diethylformamide | | | | | | | | 25% | 25% | 25% | 25% | |
| | 3-methoxy-1-butanol | | | 20% | | | | | | | | | 25% |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-caprolactam | | | | | | | | | | | | |
| | 2-hydroxylethylmorpholine | | | | | | | | | | | | |
| | 2-hydroxylethylpyrrolidone | | | | | | | | | | | | |
| | Tripropylene glycol monomethyl ether | | | | | | | | | | | | |
| | Dipropylene glycol monomethyl ether | | | | | | | | | | | | |
| | Triethylene glycol monomethyl ether | | | | | | | | | | | | |
| | Triethylene glycol monobutyl ether | | | | | | | | | | | | |

| | | Structure | Side chain SP value | Example 218 | Example 219 | Example 220 | Example 221 | Example 222 | Example 223 | Example 224 | Example 225 | Example 226 | Example 227 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | | OPP | | A | B | B | B | B | B | B | B | B | B |
| | | Corona OPP | | A | B | B | B | B | B | B | B | B | B |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 25-1]

| | | Structure | Side chain SP value | Example 228 | Example 229 | Example 230 | Example 231 | Example 232 | Example 233 | Example 234 | Example 235 | Example 236 | Example 237 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | 68.6% | 98.5% | - | 78.8% | 68.6% | 98.5% | - | 78.8% | 68.6% | 98.5% |
| | CHA | Alicyclic | 9.96 | 29.4% | - | 98.5% | - | 29.4% | - | 98.5% | - | 29.4% | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | 19.7% | - | - | - | 19.7% | - | - |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

(continued)

|  | Structure | Side chain SP value | Example 228 | Example 229 | Example 230 | Example 231 | Example 232 | Example 233 | Example 234 | Example 235 | Example 236 | Example 237 |
|---|---|---|---|---|---|---|---|---|---|---|---|---|
| agent Weight based on 100% of monomer | Adipic acid dihydrazide | - | - |  |  |  |  |  |  |  |  |  |  |

[Table 25-2]

| | | Structure | Side chain SP value | Example 228 | Example 229 | Example 230 | Example 231 | Example 232 | Example 233 | Example 234 | Example 235 | Example 236 | Example 237 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | | 20% | 20% | 20% | 20% | | | |
| | 1,2-hexanediol | | | | | | | | | | | | |
| | N-N diethylformamide | | | | | | | | | | | | |
| | 3-methoxy-1-butanol | | | 25% | 25% | 25% | 9% | 9% | 9% | 9% | | | |
| | 2-pyrrolidone | | | | | | | | | | 25% | 25% | 25% |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

(continued)

| | | Structure | Side chain SP value | Example 228 | Example 229 | Example 230 | Example 231 | Example 232 | Example 233 | Example 234 | Example 235 | Example 236 | Example 237 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | | OPP | | B | B | B | B | B | B | B | B | B | B |
| | | Corona OPP | | B | B | B | B | B | B | B | B | B | B |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 26-1]

| | | Structure | Side chain SP value | Example 238 | Example 239 | Example 240 | Example 241 | Example 242 | Example 243 | Example 244 | Example 245 | Example 246 | Example 247 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | - | 78.8% | 68.6% | 98.5% | - | 78.8% | 68.610 | 98.5% | - | 78.8% |
| | CHA | Alicyclic | 9.96 | 98.5% | - | 29.4% | - | 98.5% | - | 29.4% | - | 98.5% | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | 19.7% | - | - | 19.7% | - | - | - | 19.7% |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

128

EP 4 549 524 A1

| | | Structure | Side chain SP value | Example 238 | Example 239 | Example 240 | Example 241 | Example 242 | Example 243 | Example 244 | Example 245 | Example 246 | Example 247 |
|---|---|---|---|---|---|---|---|---|---|---|---|---|---|
| agent Weight based on 100% of monomer | Adipic acid dihydra-zide | - | - | | | | | | | | | | |

[Table 26-2]

| Category | Component | Structure | Side chain SP value | Example 238 | Example 239 | Example 240 | Example 241 | Example 242 | Example 243 | Example 4 | Example 245 | Example 246 | Example 247 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | 20% | 20% | 20% | 20% | | | | | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | 25% | 9% | 9% | 9% | 9% | | | | | |
| | 3-methyl-1,3-butanediol | | | | | | | | 25% | 25% | 25% | 25% | 9% |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-caprolactam | | | | | | | | | | | | |
| | 2-hydroxylethylmorpholine | | | | | | | | | | | | |
| | 2-hydroxylethylpyrrolidone | | | | | | | | | | | | |
| | Tripropylene glycol monomethyl ether | | | | | | | | | | | | |
| | Dipropylene glycol monomethyl ether | | | | | | | | | | | | |
| | Triethylene glycol monomethyl ether | | | | | | | | | | | | |
| | Triethylene glycol monobutyl ether | | | | | | | | | | | | |
| Polymerization method | | | | Emulsification | Emulsification | Emulsification | Emulsification | Emulsification | Emulsification | Emusification | Emulsification | Emulsification | Emulsification |

130

| | Structure | Side chain SP value | Example 238 | Example 239 | Example 240 | Example 241 | Example 242 | Example 243 | Example 4 | Example 245 | Example 246 | Example 247 |
|---|---|---|---|---|---|---|---|---|---|---|---|---|
| Polymer structure | | | Random | Random | Random | Random | Random | Random | Random | Random | Random | Random |
| Adhesion | OPP | | B | B | B | B | B | B | B | B | B | B |
| | Corona OPP | | B | B | B | B | B | B | B | B | B | B |
| | Corona PET | | A | A | A | A | A | A | A | A | A | A |
| Storage stability | | | A | A | A | A | A | A | A | A | A | A |
| Intermittent ejection property | | | A | A | A | A | A | A | A | A | A | A |
| Solvent resistance (Corona OPP) | | | A | A | A | A | A | A | A | A | A | A |

[Table 27-1]

| | | Structure | Side chain SP value | Example 248 | Example 249 | Example 250 | Example 251 | Example 252 | Example 253 | Example 254 | Example 255 | Example 256 | Example 257 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | 68.6% | 98.5% | - | 78.8% | 68.6% | 98.5% | - | 78.8% | 68.6% | 98.5% |
| | CHA | Alicyclic | 9.96 | 29.4% | - | 98.5% | - | 29.4% | - | 98.5% | - | 29.4% | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | - | 19.7% | - | - | - | 19.7% | - | - |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

| | | Structure | Side chain SP value | Example 248 | Example 249 | Example 250 | Example 251 | Example 252 | Example 253 | Example 254 | Example 255 | Example 256 | Example 257 |
|---|---|---|---|---|---|---|---|---|---|---|---|---|---|
| agent Weight based on 100% of monomer | Adipic acid dihydrazide | - | - | | | | | | | | | | |

[Table 27-2]

| | | Structure | Side chain SP value | Example 248 | Example 249 | Example 250 | Example 251 | Example 252 | Example 253 | Example 254 | Example 255 | Example 256 | Example 257 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | 20% | | | | | 20% | 20% | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | 9% | 9% | 9% | | | | | | | |
| | 3-methoxy-N,N-dimethylpropanamide | | | | | | 25% | 25% | 25% | 25% | 9% | 9% | 9% |
| | 3-butoxy-N,N-dimethylpropanamide | | | | | | | | | | | | |
| | Texanol | | | | | | | | | | | | |
| | γ -valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

EP 4 549 524 A1

134

(continued)

| | Structure | Side chain SP value | Example 248 | Example 249 | Example 250 | Example 251 | Example 252 | Example 253 | Example 254 | Example 255 | Example 256 | Example 257 |
|---|---|---|---|---|---|---|---|---|---|---|---|---|
| Polymerization method | | | Emulsification | Emulsification | Emulsification | Emulsification | Emulsification | Emulsification | Emulsification | Emulsification | Emulsification | Emulsification |
| Polymer structure | | | Random | Random | Random | Random | Random | Random | Random | Random | Random | Random |
| Adhesion | OPP | | B | B | B | B | B | B | B | B | B | B |
| | Corona OPP | | B | B | B | B | B | B | B | B | B | B |
| | Corona PET | | A | A | A | A | A | A | A | A | A | A |
| Storage stability | | | A | A | A | A | A | A | A | A | A | A |
| Intermittent ejection property | | | A | A | A | A | A | A | A | A | A | A |
| Solvent resistance (Corona OPP) | | | A | A | A | A | A | A | A | A | A | A |

[Table 28-1]

| | | Structure | Side chain SP value | Example 258 | Example 259 | Example 260 | Example 261 | Example 262 | Example 263 | Example 264 | Example 265 | Example 266 | Example 267 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | - | 78.8% | 68.6% | 98.5% | - | 78.8% | 68.6% | 98.5% | - | 78.8% |
| | CHA | Alicyclic | 9.96 | 98.5% | - | 29.4% | - | 98.5% | - | 29.4% | - | 98.5% | - |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | 19.7% | - | - | - | 19.7% | - | - | - | 19.7% |
| Surfactant (not reactive) Weight based on 100% of monomer | Emulgen A-90(solid content 100%) | - | - | 2.0% | 20% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

136

EP 4 549 524 A1

| | | Structure | Side chain SP value | Example 258 | Example 259 | Example 260 | Example 261 | Example 262 | Example 263 | Example 264 | Example 265 | Example 266 | Example 267 |
|---|---|---|---|---|---|---|---|---|---|---|---|---|---|
| agent Weight based on 100% of monomer | Adipic acid dihydrazide | - | - | | | | | | | | | | |

[Table 28-2]

| | | Structure | Side chain SP value | Example 258 | Example 259 | Example 260 | Example 261 | Example 262 | Example 263 | Example 4 | Example 265 | Example 266 | Example 267 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | | | | | 20% | 20% | 20% | 20% | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | 9% | | | | | | | | | |
| | 3-butoxy-N,N-dimethylpropanamide | | | | 25% | 25% | 25% | 25% | 9% | 9% | 9% | 9% | |
| | Texanol | | | | | | | | | | | | 25% |
| | γ-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

EP 4 549 524 A1

(continued)

| | | Structure | Side chain SP value | Example 258 | Example 259 | Example 260 | Example 261 | Example 262 | Example 263 | Example 4 | Example 265 | Example 266 | Example 267 |
|---|---|---|---|---|---|---|---|---|---|---|---|---|---|
| Polymerization method | | | | Emulsification | Emulsification | Emulsification | Emulsification | Emulsification | Emulsification | Emulsification | Emulsification | Emulsification | Emulsification |
| Polymer structure | | | | Random | Random | Random | Random | Random | Random | Random | Random | Random | Random |
| Adhesion | OPP | | | B | B | B | B | B | B | B | B | B | B |
| | Corona OPP | | | B | B | B | B | B | B | B | B | B | B |
| | Corona PET | | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 29-1]

| | | Structure | Side chain SP value | Example 268 | Example 269 | Example 270 | Example 271 | Example 272 | Example 273 | Example 274 | Example 275 | Example 276 |
|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% |
| | DMMA | | | - | - | - | - | - | - | - | - | - |
| Monomer A | CHMA | Alicyclic | 9.96 | 68.6% | 98.5% | - | 78.8% | 68.6% | 98.5% | - | 78.8% | 68.6% |
| | CHA | Alicyclic | 9.96 | 29.4% | - | 98.5% | - | 29.4% | - | 98.5% | - | 29.4% |
| | Vinylcyclohexane | Alicyclic | 8.54 | - | - | - | - | - | - | - | - | - |
| | TBCHA | Alicyclic | 9.08 | - | - | - | - | - | - | - | - | - |
| | 4-acryloylmorpholine | Heterocyclic | 12.95 | - | - | - | - | - | - | - | - | - |
| | HCHMA | Alicyclic | 13.02 | - | - | - | - | - | - | - | - | - |
| | BzMA | Aromatic ring | 10.49 | - | - | - | - | - | - | - | - | - |
| Monomer C | 2-(acryloylamino)-2-methyl-4-pentanone | | 12.04 | - | - | - | - | - | - | - | - | - |
| | MMA | | 10.26 | - | - | - | - | - | - | - | - | - |
| | BMA | | 9.48 | - | - | - | 19.7% | - | - | - | 19.7% | - |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - |
| Reactive surfactant Weight based on 100% of monomer | Latemul PD-420(solid content 100%) | - | - | | | | | | | | | |

| | | Structure | Side chain SP value | Example 268 | Example 269 | Example 270 | Example 271 | Example 272 | Example 273 | Example 274 | Example 275 | Example 276 |
|---|---|---|---|---|---|---|---|---|---|---|---|---|
| Crosslinking agent Weight based on 100% of monomer | Adipic acid dihydra-zide | - | - | | | | | | | | | |

[Table 29-2]

| | | | Example 268 | Example 269 | Example 270 | Example 271 | Example 272 | Example 273 | Example 274 | Example 275 | Example 276 |
|---|---|---|---|---|---|---|---|---|---|---|---|
| | Structure | Side chain SP value | | | | | | | | | |
| Adjusting ink | Content of resin solution(30% solid content) | | 25% | 25% | 25% | 25% | 25% | 25% | 25% | 25% | 25% |
| Content of adjusting ink solvent | 1,2-propanediol | | | | | | | | | | |
| | 1,2-hexanediol | | | | | 20% | 20% | 20% | 20% | | |
| | N-N diethylformamide | | | | | | | | | | |
| | 3-methoxy-1-butanol | | | | | | | | | | |
| | 2-pyrrolidone | | | | | | | | | | |
| | 3-methyl-1,3-butanediol | | | | | | | | | | |
| | 3-methoxy-N,N-dimethylpropanamide | | | | | | | | | | |
| | 3-butoxy-N,N-dimethylpropanamide | | | | | | | | | | |
| | Texanol | | 25% | 25% | 25% | 9% | 9% | 9% | 9% | | |
| | γ-valerolactone | | | | | | | | | 25% | 25% |
| | N-methyl-epsilon-caprolactam | | | | | | | | | | |
| | 2-hydroxylethylmorpholine | | | | | | | | | | |
| | 2-hydroxylethylpyrrolidone | | | | | | | | | | |
| | Tripropylene glycol monomethyl ether | | | | | | | | | | |
| | Dipropylene glycol monomethyl ether | | | | | | | | | | |
| | Triethylene glycol monomethyl ether | | | | | | | | | | |
| | Triethylene glycol monobutyl ether | | | | | | | | | | |
| Polymerization method | | | Emulsification | Emulsification | Emulsification | Emulsification | Emulsification | Emulsification | Emulsification | Emulsification | Emulsification |
| Polymer structure | | | Random | Random | Random | Random | Random | Random | Random | Random | Random |

(continued)

| | Structure Side chain SP value | Example 268 | Example 269 | Example 270 | Example 271 | Example 272 | Example 273 | Example 274 | Example 275 | Example 276 |
|---|---|---|---|---|---|---|---|---|---|---|
| Adhesion | OPP | B | B | B | B | B | B | B | B | B |
| | Corona OPP | B | B | B | B | B | B | B | B | B |
| | Corona PET | A | A | A | A | A | A | A | A | A |
| Storage stability | | A | A | A | A | A | A | A | A | A |
| Intermittent ejection property | | A | A | A | A | A | A | A | A | A |
| Solvent resistance (Corona OPP) | | A | A | A | A | A | A | A | A | A |

143

[Table 30-1]

| | | Structure | Side chain SP value | Example 277 | Example 278 | Example 279 | Example 280 | Example 281 | Example 282 | Example 283 | Example 284 | Example 285 | Example 286 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | 98.5% | - | 78.8% | 68.6% | 98.5% | - | 78.8% | 68.6% | 98.5% | - |
| | CHA | Alicyclic | 9.96 | - | 98.5% | - | 29.4% | - | 98.5% | - | 29.4% | - | 98.5% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | 19.7% | - | - | - | 19.7% | - | - | - |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

| | | Structure | Side chain SP value | Example 277 | Example 278 | Example 279 | Example 280 | Example 281 | Example 282 | Example 283 | Example 284 | Example 285 | Example 286 |
|---|---|---|---|---|---|---|---|---|---|---|---|---|---|
| Crosslinking agent Weight based on 100% of monomer | Adipic acid dihydrazide | - | - | | | | | | | | | | |

[Table 30-2]

| | | Structure | Side chain SP value | Example 277 | Example 278 | Example 279 | Example 280 | Example 281 | Example 282 | Example 283 | Example 284 | Example 285 | Example 286 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | 20% | 20% | 20% | 20% | | | | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | 25% | 25% | 9% | 9% | 9% | 9% | | | | |
| | N-methyl-epsilon-caprolactam | | | | | | | | | 25% | 25% | 25% | 25% |
| | 2-hydroxylethylmorpho-line | | | | | | | | | | | | |
| | 2-hydroxylethylpyrroli-done | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

(continued)

| | | Structure | Side chain SP value | Example 277 | Example 278 | Example 279 | Example 280 | Example 281 | Example 282 | Example 283 | Example 284 | Example 285 | Example 286 |
|---|---|---|---|---|---|---|---|---|---|---|---|---|---|
| Polymerization method | | | | Emulsification | Emulsification | Emulsification | Emulsification | Emulsification | Emulsification | Emulsification | Emulsification | Emulsification | Emulsification |
| Polymer structure | | | | Random | Random | Random | Random | Random | Random | Random | Random | Random | Random |
| Adhesion | | OPP | | B | B | B | B | B | B | B | B | B | B |
| | | Corona OPP | | B | B | B | B | B | B | B | B | B | B |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 31-1]

| | | Structure | Side chain SP value | Example 287 | Example 288 | Example 289 | Example 290 | Example 291 | Example 292 | Example 293 | Example 294 | Example 295 | Example 296 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | 78.8% | 68.6% | 98.5% | - | 78.8% | 68.6% | 98.5% | - | 78.8% | 68.6% |
| | CHA | Alicyclic | 9.96 | - | 29.4% | - | 98.5% | - | 29.4% | - | 98.5% | - | 29.4% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | 19.7% | - | - | - | 19.7% | - | - | - | 19.7% | - |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

(continued)

| | | | Example 287 | Example 288 | Example 289 | Example 290 | Example 291 | Example 292 | Example 293 | Example 294 | Example 295 | Example 296 |
|---|---|---|---|---|---|---|---|---|---|---|---|---|
| Crosslinking agent Weight based on 100% of monomer | Adipic acid dihydrazide | Structure: - / Side chain SP value: - | | | | | | | | | | |

[Table 31-2]

| | | Structure | Side chain SP value | Example 287 | Example 288 | Example 289 | Example 290 | Example 291 | Example 292 | Example 293 | Example 294 | Example 295 | Example 296 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | 20% | 20% | | | | | 20% | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethyl-propanamide | | | | | | | | | | | | |
| | Texanol | | | | | | | | | | | | |
| | $\gamma$-valerolactone | | | | | | | | | | | | |
| | N-methyl-epsilon-caprolactam | | | 9% | 9% | 9% | 9% | | | | | | |
| | 2-hydroxylethylmorpholine | | | | | | | 25% | 25% | 25% | 25% | 9% | 9% |
| | 2-hydroxylethylpyrrolidone | | | | | | | | | | | | |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

150

EP 4 549 524 A1

| | Structure | Side chain SP value | Example 287 | Example 288 | Example 289 | Example 290 | Example 291 | Example 292 | Example 293 | Example 294 | Example 295 | Example 296 |
|---|---|---|---|---|---|---|---|---|---|---|---|---|
| Polymerization method | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | Random | Random | Random | Random | Random | Random | Random | Random | Random | Random |
| Adhesion | OPP | | B | B | B | B | B | B | B | B | B | B |
| | Corona OPP | | B | B | B | B | B | B | B | B | B | B |
| | Corona PET | | A | A | A | A | A | A | A | A | A | A |
| Storage stability | | | A | A | A | A | A | A | A | A | A | A |
| Intermittent ejection property | | | A | A | A | A | A | A | A | A | A | A |
| Solvent resistance (Corona OPP) | | | A | A | A | A | A | A | A | A | A | A |

[Table 32-1]

| | | Structure | Side chain SP value | Example 297 | Example 298 | Example 299 | Example 300 | Example 301 | Example 302 | Example 303 | Example 304 | Example 305 | Example 306 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | 98.5% | - | 78.8% | 68.6% | 98.5% | - | 78.8% | 68.6% | 98.5% | - |
| | CHA | Alicyclic | 9.96 | - | 98.5% | - | 29.4% | - | 98.5% | - | 29.4% | - | 98.5% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | 19.7% | - | - | - | 19.7% | - | - | - |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

| | | Structure | Side chain SP value | Example 297 | Example 298 | Example 299 | Example 300 | Example 301 | Example 302 | Example 303 | Example 304 | Example 305 | Example 306 |
|---|---|---|---|---|---|---|---|---|---|---|---|---|---|
| Crosslinking agent Weight based on 100% of monomer | Adipic acid dihydrazide | - | - | | | | | | | | | | |

[Table 32-2]

| | | Structure | Side chain SP value | Example 297 | Example 298 | Example 299 | Example 300 | Example 301 | Example 302 | Example 303 | Example 304 | Example 305 | Example 306 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | | | | | 20% | 20% | 20% | 20% |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethyl-propanamide | | | | | | | | | | | | |
| | Texanol | | | | | | | | | | | | |
| | $\gamma$-valerolactone | | | | | | | | | | | | |
| | N-methyl-epsilon-capro-lactam | | | | | | | | | | | | |
| | 2-hydroxylethylmorpho-line | | | 9% | 9% | | | | | | | | |
| | 2-hydroxylethylpyrroli-done | | | | | 25% | 25% | 25% | 25% | 9% | 9% | 9% | 9% |
| | Tripropylene glycol monomethyl ether | | | | | | | | | | | | |
| | Dipropylene glycol mono-methyl ether | | | | | | | | | | | | |
| | Triethylene glycol mono-methyl ether | | | | | | | | | | | | |
| | Triethylene glycol mono-butyl ether | | | | | | | | | | | | |

154

EP 4 549 524 A1

(continued)

| | | Structure | Side chain SP value | Example 297 | Example 298 | Example 299 | Example 300 | Example 301 | Example 302 | Example 303 | Example 304 | Example 305 | Example 306 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | OPP | | | B | B | B | B | B | B | B | B | B | B |
| | Corona OPP | | | B | B | B | B | B | B | B | B | B | B |
| | Corona PET | | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 33-1]

| | | Structure | Side chain SP value | Example 307 | Example 308 | Example 309 | Example 310 | Example 311 | Example 312 | Example 313 | Example 314 | Example 315 | Example 316 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| | CHMA | Alicyclic | 9.96 | 78.8% | 68.6% | 98.5% | - | 78.8% | 68.6% | 98.5% | - | 78.8% | 68.6% |
| | CHA | Alicyclic | 9.96 | - | 29.4% | - | 98.5% | - | 29.4% | - | 98.5% | - | 29.4% |
| | Vinylcyclohexane | Alicyclic | 8.54 | - | - | - | - | - | - | - | - | - | - |
| Monomer A | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | 19.7% | - | - | - | 19.7% | - | - | - | 19.7% | - |
| Surfactant (not reactive) | Emulgen A-90(solid content 100%) | - | - | 2.0% | 2.0% | 2.0% | 2.0% | 2.0% | 2.0% | 2.0% | 2.0% | 2.0% | 2.0% |
| Weight based on 100% of monomer | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

(continued)

| | | Structure | Side chain SP value | Example 307 | Example 308 | Example 309 | Example 310 | Example 311 | Example 312 | Example 313 | Example 314 | Example 315 | Example 316 |
|---|---|---|---|---|---|---|---|---|---|---|---|---|---|
| Crosslinking agent Weight based on 100% of monomer | Adipic acid dihydrazide | - | - | | | | | | | | | | |

[Table 33-2]

| | | Structure | Side chain SP value | Example 307 | Example 308 | Example 309 | Example 310 | Example 311 | Example 312 | Example 313 | Example 314 | Example 315 | Example 316 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | | | 20% | 20% | 20% | 20% | | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethyl-propanamide | | | | | | | | | | | | |
| | Texanol | | | | | | | | | | | | |
| | $\gamma$-valerolactone | | | | | | | | | | | | |
| | N-methyl-epsilon-capro-lactam | | | | | | | | | | | | |
| | 2-hydroxylethylmorpho-line | | | | | | | | | | | | |
| | 2-hydroxylethylpyrroli-done | | | | | | | | | | | | |
| | Tripropylene glycol monomethyl ether | | | 25% | 25% | 25% | 25% | 9% | 9% | 9% | 9% | | |
| | Dipropylene glycol monomethyl ether | | | | | | | | | | | 25% | 25% |
| | Triethylene glycol mono-methyl ether | | | | | | | | | | | | |
| | Triethylene glycol mono-butyl ether | | | | | | | | | | | | |

158

EP 4 549 524 A1

| | | Structure | Side chain SP value | Example 307 | Example 308 | Example 309 | Example 310 | Example 311 | Example 312 | Example 313 | Example 314 | Example 315 | Example 316 |
|---|---|---|---|---|---|---|---|---|---|---|---|---|---|
| Polymerization method | | | | Emulsifica-tion | Emulsifica-tion | Emulsifica-tion | Emulsifica-tion | Emulsifica-tion | Emulsifica-tion | Emulsifica-tion | Emulsifica-tion | Emulsifica-tion | Emulsification |
| Polymer structure | | | | Random | Random | Random | Random | Random | Random | Random | Random | Random | Random |
| Adhesion | | OPP | | B | B | B | B | B | B | B | B | B | B |
| | | Corona OPP | | B | B | B | B | B | B | B | B | B | B |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 34-1]

| | | Structure | Side chain SP value | Example 317 | Example 318 | Example 319 | Example 320 | Example 321 | Example 322 | Example 323 | Example 324 | Example 325 | Example 326 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | 98.5% | - | 78.8% | 68.6% | 98.5% | - | 78.8% | 68.6% | 98.5% | - |
| | CHA | Alicyclic | 9.96 | - | 98.5% | - | 29.4% | - | 98.5% | - | 29.4% | - | 98.5% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| Monomer C | 2-(acryloylamino)-2-methyl-4-pentanone | | 12.04 | - | - | - | - | - | - | - | - | - | - |
| | MMA | | 10.26 | - | - | - | - | - | - | - | - | - | - |
| | BMA | | 9.48 | - | - | 19.7% | - | - | - | 19.7% | - | - | - |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | | | | | | | | | | |

EP 4 549 524 A1

160

| | | Structure | Side chain SP value | Example 317 | Example 318 | Example 319 | Example 320 | Example 321 | Example 322 | Example 323 | Example 324 | Example 325 | Example 326 |
|---|---|---|---|---|---|---|---|---|---|---|---|---|---|
| Crosslinking agent Weight based on 100% of monomer | Adipic acid dihydrazide | - | - | | | | | | | | | | |

[Table 34-2]

| | | Structure | Side chain SP value | Example 317 | Example 318 | Example 319 | Example 320 | Example 321 | Example 322 | Example 323 | Example 324 | Example 325 | Example 326 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | | | 20% | 20% | 20% | 20% | | | | |
| | 1,2-hexanediol | | | | | | | | | | | | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-caprolactam | | | | | | | | | | | | |
| | 2-hydroxylethylmorpholine | | | | | | | | | | | | |
| | 2-hydroxylethylpyrrolidone | | | | | | | | | | | | |
| | Tripropylene glycol monomethyl ether | | | | | | | | | | | | |
| | Dipropylene glycol monomethyl ether | | | 25% | 25% | 9% | 9% | 9% | 9% | | | | |
| | Triethylene glycol monomethyl ether | | | | | | | | | 25% | 25% | 25% | 25% |
| | Triethylene glycol monobutyl ether | | | | | | | | | | | | |
| Polymerization method | | | | Emulsification | Emulsification | Emulsification | Emulsification | Emulsification | Emulsification | Emulsification | Emulsiication | Emulsification | Emulsification |

EP 4 549 524 A1

(continued)

| | Structure | Side chain SP value | Example 317 | Example 318 | Example 319 | Example 320 | Example 321 | Example 322 | Example 323 | Example 324 | Example 325 | Example 326 |
|---|---|---|---|---|---|---|---|---|---|---|---|---|
| Polymer structure | | | Random | Random | Random | Random | Random | Random | Random | Random | Random | Random |
| Adhesion | OPP | | B | B | B | B | B | B | B | B | B | B |
| | Corona OPP | | B | B | B | B | B | B | B | B | B | B |
| | Corona PET | | A | A | A | A | A | A | A | A | A | A |
| Storage stability | | | A | A | A | A | A | A | A | A | A | A |
| Intermittent ejection property | | | A | A | A | A | A | A | A | A | A | A |
| Solvent resistance (Corona OPP) | | | A | A | A | A | A | A | A | A | A | A |

[Table 35-1]

| Category | Component | Structure | Side chain SP value | Example 327 | Example 328 | Example 329 | Example 330 | Example 331 | Example 332 | Example 333 | Example 334 | Example 335 | Example 336 |
|---|---|---|---|---|---|---|---|---|---|---|---|---|---|
| Monomer B | MAA | | | 1.5% | 1.5% | 1.5% | 1.5% | 1.5% | 1.5% | 1.5% | 1.5% | 1.5% | 1.5% |
| | DMMA | | | - | - | - | - | - | - | - | - | - | - |
| Monomer A | CHMA | Alicyclic | 9.96 | 78.8% | 68.6% | 98.5% | - | 78.8% | 68.6% | 98.5% | - | 78.8% | 68.6% |
| | CHA | Alicyclic | 9.96 | - | 29.4% | - | 98.5% | - | 29.4% | - | 98.5% | - | 29.4% |
| | Vinylcyclohexane | Alicyclic | 8.54 | - | - | - | - | - | - | - | - | - | - |
| | TBCHA | Alicyclic | 9.08 | - | - | - | - | - | - | - | - | - | - |
| | 4-acryloylmorpholine | Heterocyclic | 12.95 | - | - | - | - | - | - | - | - | - | - |
| | HCHMA | Alicyclic | 13.02 | - | - | - | - | - | - | - | - | - | - |
| | BzMA | Aromatic ring | 10.49 | - | - | - | - | - | - | - | - | - | - |
| | 2-(acryloylamino)-2-methyl-4-pentanone | | 12.04 | - | - | - | - | - | - | - | - | - | - |
| Monomer C | MMA | | 10.26 | - | - | - | - | - | - | - | - | - | - |
| | BMA | | 9.48 | 19.7% | - | - | - | 19.7% | - | - | - | 19.7% | - |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | 2.6% | 2.6% | 2.6% | 2.6% |
| | Sanisol B-50(solid content 50%) | - | - | - | - | - | - | - | - | - | - | - | - |
| Reactive surfactant Weight based on 100% of monomer | Latemul PD-420(solid content 100%) | - | - | - | - | - | - | - | - | - | - | - | - |

164

(continued)

| | Structure | Side chain SP value | Example 327 | Example 328 | Example 329 | Example 330 | Example 331 | Example 332 | Example 333 | Example 334 | Example 335 | Example 336 |
|---|---|---|---|---|---|---|---|---|---|---|---|---|
| Crosslinking agent Weight based on 100% of monomer | Adipic acid dihydrazide | - | - | | | | | | | | | | |

[Table 35-2]

| | | Structure | Side chain SP value | Example 327 | Example 328 | Example 329 | Example 330 | Example 331 | Example 332 | Example 333 | Example 334 | Example 335 | Example 336 |
|---|---|---|---|---|---|---|---|---|---|---|---|---|---|
| Adjusting ink | Content of resin solution(30% solid content) | | | 25% | 25% | 25% | 25% | 25% | 25% | 25% | 25% | 25% | 25% |
| Content of adjusting ink solvent | 1,2-propanediol | | | 20% | 20% | 20% | 20% | | | | | | 20% |
| | 1,2-hexanediol | | | | | | | | | | | 20% | |
| | N-N diethylformamide | | | | | | | | | | | | |
| | 3-methoxy-1-butanol | | | | | | | | | | | | |
| | 2-pyrrolidone | | | | | | | | | | | | |
| | 3-methyl-1,3-butanediol | | | | | | | | | | | | |
| | 3-methoxy-N,N-dimethylpropanamide | | | | | | | | | | | | |
| | 3-butoxy-N,N-dimethylpropanamide | | | | | | | | | | | | |
| | Texanol | | | | | | | | | | | | |
| | γ-valerolactone | | | | | | | | | | | | |
| | N-methyl-epsilon-caprolactam | | | | | | | | | | | | |
| | 2-hydroxylethylmorpholine | | | | | | | | | | | | |
| | 2-hydroxylethylpyrrolidone | | | 9% | 9% | 9% | 9% | | | | | | |
| | Tripropylene glycol monomethyl ether | | | | | | | | | | | | |
| | Dipropylene glycol monomethyl ether | | | | | | | | | | | | |
| | Triethylene glycol monomethyl ether | | | | | | | 25% | 25% | 25% | 25% | | |
| | Triethylene glycol monobutyl ether | | | | | | | | | | | 9% | 9% |

| | | Structure | Side chain SP value | Example 327 | Example 328 | Example 329 | Example 330 | Example 331 | Example 332 | Example 333 | Example 334 | Example 335 | Example 336 |
|---|---|---|---|---|---|---|---|---|---|---|---|---|---|
| Polymerization method | | | | Emulsification | Emulsification | Emulsification | Emulsification | Emulsification | Emulsification | Emulsification | Emulsification | Emulsification | Emulsification |
| Polymer structure | | | | Random | Random | Random | Random | Random | Random | Random | Random | Random | Random |
| Adhesion | | OPP | | B | B | B | B | B | B | B | B | B | B |
| | | Corona OPP | | B | B | B | B | B | B | B | B | B | B |
| | | Corona PET | | A | A | A | A | A | A | A | A | A | A |
| Storage stability | | | | A | A | A | A | A | A | A | A | A | A |
| Intermittent ejection property | | | | A | A | A | A | A | A | A | A | A | A |
| Solvent resistance (Corona OPP) | | | | A | A | A | A | A | A | A | A | A | A |

[Table 36-1]

| | | Structure | Side chain SP value | Example 337 | Example 338 | Example 339 | Example 340 | Example 341 | Example 342 | Comparative Example 1 | Comparative Example 2 |
|---|---|---|---|---|---|---|---|---|---|---|---|
| Monomer B | MAA | | | 1.5% | 1.5% | 1.5% | 1.5% | 1.5% | 1.5% | | |
| | DMMA | | | - | - | - | - | - | - | 7.4% | 7.4% |
| Monomer A | CHMA | Alicyclic | 9.96 | 98.5% | - | 78.8% | 68.6% | 98.5% | - | - | - |
| | CHA | Alicyclic | 9.96 | - | 98.5% | - | 29.4% | - | 98.5% | - | - |
| | Vinylcyclohexane | Alicyclic | 8.54 | - | - | - | - | - | - | - | - |
| | TBCHA | Alicyclic | 9.08 | - | - | - | - | - | - | - | - |
| | 4-acryloylmorpholine | Heterocyclic | 12.95 | - | - | - | - | - | - | - | - |
| | HCHMA | Alicyclic | 13.02 | - | - | - | - | - | - | - | - |
| | BzMA | Aromatic ring | 10.49 | - | - | - | - | - | - | - | - |
| Monomer C | 2-(acryloylamino)-2-methyl-4-pentanone | | 12.04 | - | - | - | - | - | - | - | - |
| | MMA | | 10.26 | - | - | - | - | - | - | 92.6% | - |
| | BMA | | 9.48 | - | - | 19.7% | - | - | - | - | 92.6% |
| Surfactant (not reactive) Weight based on 100% of monomer | Emulgen A-90(solid content 100%) | - | - | 2.0% | 2.0% | 2.0% | 2.0% | 2.0% | 2.0% | 2.0% | 2.0% |
| | Emar 20CM(Solid content 25%) | - | - | 2.6% | 2.6% | 2.6% | 2.6% | 2.6% | 2.6% | - | - |
| | Sanisol B-50(solid content 50%) | - | - | - | - | - | - | - | - | 5% | 5% |
| Reactive surfactant Weight based on 100% of monomer | Latemul PD-420(solid content 100%) | - | - | | | | | | | | |

EP 4 549 524 A1

(continued)

| | | Side chain SP value | Example 337 | Example 338 | Example 339 | Example 340 | Example 341 | Example 342 | Comparative Example 1 | Comparative Example 2 |
|---|---|---|---|---|---|---|---|---|---|---|
| | Structure | - | | | | | | | | |
| Crosslinking agent Weight based on 100% of monomer | Adipic acid dihydrazide | | | | | | | | | |

[Table 36-2]

| | | Structure | Side chain SP value | Example 337 | Example 338 | Example 339 | Example 340 | Example 341 | Example 342 | Comparative Example 1 | Comparativ Example 2 |
|---|---|---|---|---|---|---|---|---|---|---|---|
| Adjusting irk | Content of resin solution(30% solid content) | | | 25% | 25% | 13% | 13% | 13% | 13% | 25% | 25% |
| Content of adjusting ink solvent | 1,2-propanediol | | | 20% | 20% | 20% | 20% | 20% | 20% | 25% | 25% |
| | 1,2-hexanediol | | | | | 9% | 9% | 9% | 9% | 9% | 9% |
| | N-N diethylformamide | | | | | | | | | | |
| | 3-methoxy-1-butanol | | | | | | | | | | |
| | 2-pyrrolidone | | | | | | | | | | |
| | 3-methyl-1,3-butanediol | | | | | | | | | | |
| | 3-methoxy-N,N-dimethylpropanamide | | | | | | | | | | |
| | 3-butoxy-N,N-dimethylpro-panamide | | | | | | | | | | |
| | Texanol | | | | | | | | | | |
| | $\gamma$-valerolactone | | | | | | | | | | |
| | N-methyl-epsilon-caprolactam | | | | | | | | | | |
| | 2-hydroxylethylmorpholine | | | | | | | | | | |
| | 2-hydroxylethylpyrrolidone | | | | | | | | | | |
| | Tripropylene glycol mono-methyl ether | | | | | | | | | | |
| | Dipropylene glycol mono-methyl ether | | | | | | | | | | |
| | Triethylene glycol mono-methyl ether | | | | | | | | | | |
| | Triethylene glycol monobu-tyl ether | | | 9% | 9% | | | | | | |
| Polymerization method | | | | Emulsification | Emulsification | Emulsification | Emulsification | Emulsification | Emulsification | Emulsification | Emulsification |

EP 4 549 524 A1

(continued)

| | Structure | Side chain SP value | Example 337 | Example 338 | Example 339 | Example 340 | Example 341 | Example 342 | Comparative Example 1 | Comparativ Example 2 |
|---|---|---|---|---|---|---|---|---|---|---|
| Polymer structure | | | Random | Random | Random | Random | Random | Random | Random | Random |
| Adhesion | OPP | | B | B | B | B | B | B | E | E |
| | Corona OPP | | B | B | B | B | B | B | E | E |
| | Corona PET | | A | A | A | A | A | A | E | E |
| Storage stability | | | A | A | A | A | A | A | A | A |
| Intermittent ejection property | | | A | A | A | A | A | A | A | A |
| Solvent resistance (Corona OPP) | | | A | A | A | A | A | A | E | E |

In the table, "MAA" is methacrylic acid.

In the table, "DMMA" is dimethylaminoethyl methacrylate.

In the table, "CHMA" is cyclohexyl methacrylate.

In the table, "CHA" is cyclohexyl acrylate.

In the table, "TBCHA" is 4-tert-butylcyclohexyl acrylate.

In the table, "HCHMA" is hydroxycyclohexyl methacrylate.

In the table, "BzMA" is benzyl methacrylate.

In the table, "MMA" is methyl methacrylate.

In the table, "BMA" is butyl methacrylate.

In the table, "OPP" is an untreated polypropylene resin base material (polyolefin resin base material).

In the table, "Corona OPP" is a polypropylene resin base material (polyolefin resin base material) having a surface that has been subjected to corona treatment.

In the table, "Corona PET" is a PET base material having a surface that has been subjected to corona treatment.

As is apparent from the above Table, when an aqueous ink composition containing a resin containing a polymer including a certain monomer as a constituent unit is used, a coating film having high adhesion to olefin resins that have not been surface-treated.

Among them, the aqueous ink compositions of Examples 1 to 6 containing acrylic resin were able to form a coating film having excellent adhesion to the surface-treated polyethylene terephthalate base material as compared with the aqueous ink composition of Example 11.

Furthermore, the aqueous ink compositions of Examples 1 to 6 containing polymers including monomer A having an alicyclic structure and/or a heterocyclic structure as a ring structure were able to form a coating film having excellent adhesion to polyolefin base materials as compared with the aqueous ink composition of Example 12.

Furthermore, the aqueous ink compositions of Examples 1 to 6 containing a polymer including a monomer B, which has an acidic group and/or an amino group and has an ethylenically unsaturated bond as a constituent unit, in addition to the monomer A, has more excellent storage stability as compared with the aqueous ink compositions of Examples 11 and 13.

Furthermore, the aqueous ink compositions of Examples 1 to 6 containing polymers including an amino group as monomer B and including monomer B having an ethylenically unsaturated bond as a constituent unit were able to form a coating film having excellent adhesion to the polyolefin base material as compared with Examples 18 to 21.

Furthermore, aqueous ink compositions of Example 1 to 6 in which at least a part of the resin is contained as a polymer fine particle dispersion is excellent in intermittent ejection property as compared with the aqueous ink composition of Example 14.

Furthermore, the aqueous ink compositions of Examples 1 to 6, which were contained as polymer fine particle dispersions synthesized by emulsion polymerization, had excellent intermittent ejection property as compared with the aqueous ink composition of Example 15.

Furthermore, the aqueous ink compositions of Examples 1 to 6 containing monomer A in a proportion of 50% or more with respect to the total amount of the polymer had excellent adhesion to the base material as compared with the aqueous ink composition of Example 17.

Furthermore, it can be seen that even with the aqueous ink compositions of Examples 22 to 342 in which the type of organic solvent was changed, a coating film having high adhesion to the olefin resin that has not surface-treated can be formed.

On the other hand, the aqueous ink compositions of Comparative Examples 1 and 2 containing polymers that do not contain monomer A were unable to form coating films with excellent adhesion to the base material.

**Claims**

1. An aqueous ink composition for inkjet ejection, the aqueous ink composition comprising water and a resin,
   the resin comprising a polymer comprising the following monomer A as a constituent unit,
   monomer A: comprising a ring structure, and comprising an ethylenically unsaturated bond.

2. The aqueous ink composition according to claim 1, wherein the resin comprises an acrylic resin.

3. The aqueous ink composition according to claim 1 or claim 2, wherein the monomer A comprises an alicyclic structure and/or a heterocyclic structure as the ring structure.

4. The aqueous ink composition according to any one of claim 1 to claim 3, wherein the resin comprises a copolymer of monomers comprising the monomer A and the following monomer B,
   monomer B: comprising an acidic group, and/or an amino group, and comprising an ethylenically unsaturated bond.

5. The aqueous ink composition according to claim 4, wherein the monomer B comprises an amino group.

6. The aqueous ink composition according to any one of claim 1 to claim 5, wherein at least a part of the resin is comprised as a polymer fine particle dispersion.

7. The aqueous ink composition according to any one of claim 1 to claim 6, wherein the polymer of monomers comprising the monomer A is an emulsion polymer.

8. The aqueous ink composition according to any one of claim 1 to claim 7, wherein a side chain moiety SP value, which is an SP value calculated for a chemical structure moiety defined as $R_2$ in the following formula (1) of the monomer A, is 13.0 or less:

$$CH_2 = CR_1 - R_2 \qquad Formula\ (1)$$

wherein $R_1$ is hydrogen or a methyl group.

9. The aqueous ink composition according to any one of claim 1 to claim 8, wherein the monomer A is comprised in a proportion of 50% or more with respect to a total amount of the polymer of monomers.

10. An ink set comprising the aqueous ink composition according to any one of claim 1 to claim 9.

11. A recording method of inkjet ejecting the aqueous ink composition according to any one of claim 1 to claim 9.

12. A method for producing a recorded matter, the method comprising inkjet ejecting the aqueous ink composition according to any one of claim 1 to claim 9 to obtain the recorded matter.

13. A recorded matter comprising the aqueous ink composition according to any one of claim 1 to claim 9, the aqueous ink composition being applied on a surface of a base material.

14. An inkjet recording device comprising an ink ejecting mechanism, the ink ejecting mechanism comprising the aqueous ink composition according to any one of claim 1 to claim 9.

<div align="center">

**INTERNATIONAL SEARCH REPORT**

</div>

| | International application No. |
|---|---|
| | **PCT/JP2023/023460** |

**A.    CLASSIFICATION OF SUBJECT MATTER**

*C09D 11/30*(2014.01)i; *B41J 2/01*(2006.01)i; *B41M 5/00*(2006.01)i; *C09D 11/40*(2014.01)i
FI:    C09D11/30; C09D11/40; B41M5/00 120; B41J2/01 501

According to International Patent Classification (IPC) or to both national classification and IPC

**B.    FIELDS SEARCHED**

Minimum documentation searched (classification system followed by classification symbols)

C09D11/30; B41J2/01; B41M5/00; C09D11/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2022-85427 A (KAO CORP.) 08 June 2022 (2022-06-08)<br>    paragraph [0066] | 1-14 |
| X | JP 2004-203996 A (KAO CORP.) 22 July 2004 (2004-07-22)<br>    paragraph [0058] | 1-14 |
| X | JP 2019-142057 A (RICOH CO., LTD.) 29 August 2019 (2019-08-29)<br>    paragraph [0063] | 1-14 |
| X | JP 2010-77218 A (FUJIFILM CORP.) 08 April 2010 (2010-04-08)<br>    paragraph [0125] | 1-14 |
| X | JP 2005-272790 A (SEIKO EPSON CORP.) 06 October 2005 (2005-10-06)<br>    paragraph [0175] | 1-14 |
| A | JP 2015-24508 A (KONICA MINOLTA, INC.) 05 February 2015 (2015-02-05)<br>    entire text, all drawings | 1-14 |
| A | JP 2012-201691 A (TOYO INK SC HOLDINGS CO., LTD.) 22 October 2012 (2012-10-22)<br>    entire text, all drawings | 1-14 |

✓ Further documents are listed in the continuation of Box C.          ✓ See patent family annex.

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **20 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/023460**

## C. DOCUMENTS CONSIDERED TO BE RELEVANT

| Category* | Citation of document, with indication, where appropriate, of the relevant passages | Relevant to claim No. |
|---|---|---|
| A | JP 2007-77371 A (KAO CORP.) 29 March 2007 (2007-03-29)<br>entire text, all drawings | 1-14 |

Form PCT/ISA/210 (second sheet) (January 2015)

EP 4 549 524 A1

## INTERNATIONAL SEARCH REPORT
### Information on patent family members

International application No.

**PCT/JP2023/023460**

| Patent document cited in search report | | | Publication date (day/month/year) | Patent family member(s) | Publication date (day/month/year) |
|---|---|---|---|---|---|
| JP | 2022-85427 | A | 08 June 2022 | (Family: none) | |
| JP | 2004-203996 | A | 22 July 2004 | US 2004/0132863 A1 table 1 EP 1433822 A1 | |
| JP | 2019-142057 | A | 29 August 2019 | (Family: none) | |
| JP | 2010-77218 | A | 08 April 2010 | US 2010/0075044 A1 paragraph [0137] EP 2169014 A1 | |
| JP | 2005-272790 | A | 06 October 2005 | US 2005/0004261 A1 paragraph [0226] | |
| JP | 2015-24508 | A | 05 February 2015 | (Family: none) | |
| JP | 2012-201691 | A | 22 October 2012 | (Family: none) | |
| JP | 2007-77371 | A | 29 March 2007 | (Family: none) | |

Form PCT/ISA/210 (patent family annex) (January 2015)

**REFERENCES CITED IN THE DESCRIPTION**

**Patent documents cited in the description**

- JP 6886062 B